(19)

Europäisches Patentamt
European Patent Office
Office européen des brevets

(11) **EP 1 845 453 A1**

(12) **EUROPEAN PATENT APPLICATION**
published in accordance with Art. 158(3) EPC

(43) Date of publication:
**17.10.2007  Bulletin 2007/42**

(21) Application number: **05805309.1**

(22) Date of filing: **27.10.2005**

(51) Int Cl.:
*G06F 12/00* (2006.01)

(86) International application number:
**PCT/JP2005/019828**

(87) International publication number:
**WO 2006/046669 (04.05.2006 Gazette 2006/18)**

(84) Designated Contracting States:
**DE FR GB IT**

(30) Priority: **28.10.2004  JP 2004314683**

(71) Applicant: **University of Fukui**
**Fukui-shi,**
**Fukui 910-8507 (JP)**

(72) Inventor: **TSUJI, Tatsuo**
**University of Fukui**
**Fukui 910-8507 (JP)**

(74) Representative: **Petruzziello, Aldo et al**
**Racheli & C. S.p.A.**
**Viale San Michele del Carso, 4**
**20144 Milano (IT)**

(54) **DATABASE MANAGEMENT DEVICE, METHOD AND PROGRAM**

(57)   When a record inserting section inserts a record having a new column value, the record inserting section registers the column value in a CVT such that an extendible array is extended; registers, in a history table, a history value indicating a chronological sequence of array extension; registers, in a coefficient table, coefficients of a linear function for calculating an offset of an element in an subarray; registers an initial value in a record number table; and inserts as a key value a 2-tuple expression of the history value and the offset of the element of the extendible array into RDT. This makes it possible to dynamically add, upon operation, a record having a new column value and to register only an existing record, thereby realizing a relational database allowing for fast record retrieval.

F I G. 1

EP 1 845 453 A1

**Description**

TECHNICAL FIELD

The present invention relates to a database using a relational database. More specifically, the present invention relates to a database device, a database management method, a data structure of the database, a database management program, and a computer-readable storage medium storing the program.

BACKGROUND ART

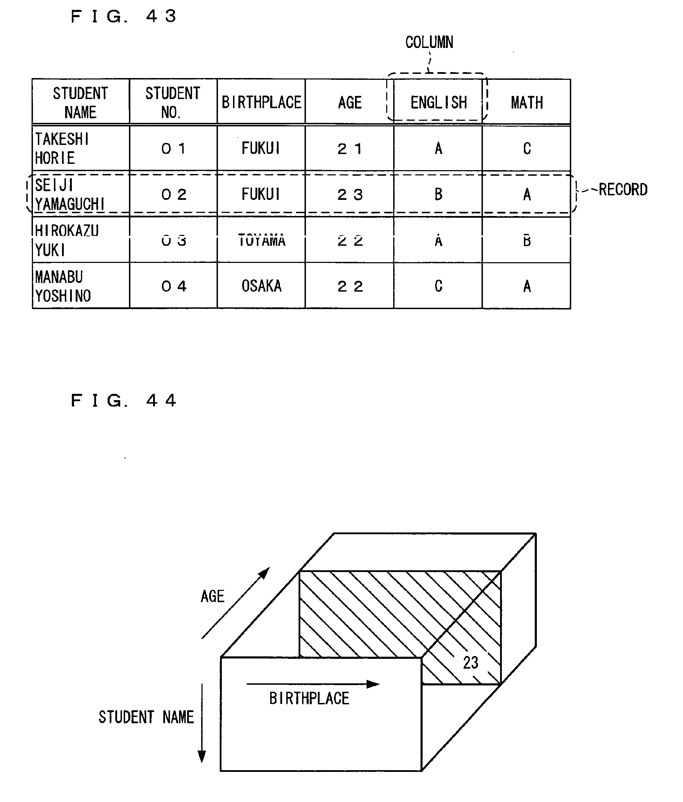

A database widely used at present is a relational database. The relational database is a set of relational tables such as one shown in Fig. 43. Each of the relational tables is a set of records therein. A record is retrieved by designating either a name of a column in the record or a retrieval condition.

Such a relational table is normally placed on secondary storage, and the records thereof are placed thereon one by one in an input order. Therefore, there are the following shortcomings:

(1) For example, for retrieval of record including an age column indicative of 23, all the records in the table need to be loaded on a memory and then the age column needs to be checked. Accordingly, it takes long time to retrieve the record.

(2) For example, when there are appeared several records each including a birthplace column indicating the Fukui prefecture in Japan, the character string "Fukui" needs to be stored repetitively. Accordingly, a large disk space is used.

A conceivable way to avoid such shortcomings is to employ a multidimensional array shown in Fig. 44. The array has dimensions respectively corresponding to the columns of the table, and has an element representing a corresponding record.

In the example shown in Fig. 44, the set of records each including the age column indicative of 23 exists, as non-empty array elements, on a plane corresponding to the "age" dimension whose value is 23. The address of an array element [*, *, 23] ("*" indicates an arbitrary subscript on the plane) can be found fast by using an addressing function. In this way, the shortcoming (1) is avoided. Further, the respective values of the dimensions are sorted in order of value, and each value appears only once, so that the shortcoming (2) is avoided, too.

As prior art documents pertaining to the present invention, there are the following Non-patent Citations 1 to 4:

[Non-patent Citation 1]
A.L. Rosenberg, "Allocating Storage for Extendible Arrays", JACM, Vol.21, p.p.652-670 (1974)
[Non-patent Citation 2]
E.J. Otoo, T.H. Merrett, "A Storage Scheme for Extendible Arrays", Computing, Vol.31, p.p.1-9 (1983)
[Non-patent Citation 3]
D. Rotem and J.L. Zhao, "Extendible Arrays for Statistical Databases and OLAP Applications", Proceedings of 7-th International Working Conference on Scientific and Statistical Database Management, p.p.108-117 (1996)
[Non-patent Citation 4] Tatsuo Tsuji, Takeshi Mizuno, Teruhisa Hochin, and Ken Higuchi "Delay Allocation Scheme for Extendible Array", IEICE Transaction, D-I, Vol. J86-D-I, No. 5, p.p.351-356 (2003)

However, there are the following shortcomings in representing the table with the use of the conventional multidimensional array whose size is fixed:

(a) The size of each dimension is fixed, so that the addressing function can be prepared. Hence, addition of a record having a new column value is impossible.
(b) A dense table in which all the combinations of the values of the dimensions exist is so rare that effective elements are few in the array (sparse array). A percentage of the effective elements is usually several % or smaller. In some case, the percentage is 0.1% or smaller. For access to an array element with the use of the addressing function, it is necessary to allocate, in such a sparse array, a memory area for an empty element (non-existent record). This results in waste of massive disk space.

The present invention is made in light of the foregoing problems, and its object is to provide a database device, a database management method, a data structure of the database device, a database management program, and a computer-readable storage medium storing the database management program, each of which makes it possible to (i) dynamically add a record with a new column value during operation, (ii) register only an existing record, and (iii) retrieve a record fast.

DISCLOSURE OF INVENTION

In order to achieve the object, a database device, according to the present invention, using a relational table includes: a database memory section for storing element location B+tree data registering, as key values, location information indicating locations of elements of an extendible array, which elements respectively correspond to records of the relational table, the location information being information including (i) section location information indicating locations of first elements of sections of the extendible array to which the elements belong, and (ii) in-section offsets indicating the locations of the elements in the sections.

Here, in the present invention, a type of section in the extendible array is selectable in various ways. Then, element location data according to the section is registered as the element location B+tree data.

For example, consider the following cases (1) and (2). (1) In cases where each section is a subarray of an extendible array, it is possible to use, as the element location B+tree data, 2-tuple B+tree data registering, as a key value, a 2-tuple expression of (i) a history value of the subarray to which each of the elements, respectively corresponding to the records of the relational table, of the extendible array belongs and (ii) an in-subarray offset of the element in the subarray. In this case, the section location information is the history value, and the in-section offset is the in-subarray offset. (2) In cases where each section is a chunk of a chunked extendible array, it is possible to use, as the element location B+tree data, 2-tuple B+tree data registering, as a key value, a 2-tuple expression of (i) a chunk number of a chunk to which each of the elements, respectively corresponding to the records of the relational table, of the chunked extendible array belongs and (ii) an in-chunk offset of the element. In this case, the section location information is the chunk number, and the in-section offset is the in-chunk offset.

Specifically speaking, in the case (1), <history, in-subarray offset> is the 2-tuple expression of (i) the section location information indicating the location of the first element of the section of the extendible array, and (ii) the in-section offset indicating the location of the element in the section. In the case (2), <chunk number, in-chunk offset> is the 2-tuple expression. Note that the chunk numbers are determined from the subscripts of the element <i1, i2, ..., in>, by a location determining scheme for the element (chunk) of the chunked extendible array.

Therefore, in the database device, by making reference to the 2-tuple B+tree data (element location B+tree data), it is possible to specify the locations of the elements of the extendible array in accordance with the 2-tuple expressions of the section location information and the in-section offsets.

Note that the wordings "section location information" and "in-section offset" can be described and defined as follows.

When an entire element set E of the extendible array is partitioned into subsets having no common elements among one another, an arbitrary subset S is defined as the "section" of the extendible array. Information required for specifying where in the element set E the first element of a memory expression corresponding to the subset S is located is defined as the "section location information". A displacement from the location of the first element of the subset S to the location of an element in the subset S is defined as "in-section offset", which is required to specify the location of the element in the subset S.

The "section location information" and the "in-section offset" are thus defined. This determines the location of an arbitrary element of the extendible array uniquely. With the definitions, the subset S, which is the section, is the subarray in the case (1), whereas the subset S is the chunk in the case (2).

Further, in each of the cases (1) and (2), it is described that "2-tuple B+tree data" registering as a key value the 2-tuple expression (of the section location information and in-section offset); however, the section location information and the in-section offset do not necessarily need to be positionally adjacent to each other as a 2-tuple in the memory expression of the key value. In other words, in the element location B+tree data, these two information (the "section location information" and "in-section offset") may be included in the memory expression of the key value. So, the database device according to the present invention may include means for making access to the element quickly with the use of these two information.

As to the case (1), the following describes a structure of a database, retrieval of data, insertion thereof, and deletion thereof, in the case of registering, in the 2-tuple B+tree data as a key value, the 2-tuple expression of (i) the history value of the extendible array's element corresponding to each of the records in the relational table and (ii) the in-subarray offset in the subarray.

The database device according to the present invention is arranged such that: each of the sections is a subarray of the extendible array, and the database memory section stores: second B+tree data, which registers, as key values, 2-tuple expressions of history values and in-subarray offsets of the sections to which the elements, respectively corresponding to the records of the relational table, of the extendible array belong, the second B+tree data being the element location B+tree data, the history values being the section location information, the in-subarray offsets being the in-section offsets; first B+tree data, which are so provided as to respectively correspond to column values of the relational table, and which convert the column values into subscripts of the extendible array; a history table, which registers chronological sequence of array extension; a coefficient table, which registers, for each subarray, a coefficient vector made up of a coefficient of a linear function for calculating an in-subarray offset of an element in the subarray; a record number table, which registers, for each of the subscripts of the extendible array, the number of all records that have a column value corresponding to the subscript.

The database device according to the present invention further includes: a record retrieving section for retrieving, from the second B+tree data in response to a retrieval request, a 2-tuple of a history value and an in-subarray offset corresponding to the retrieval request.

The database device according to the present invention further includes: a record inserting section for, upon inserting a record having a new column value, (i) registering the column value in the first B+tree data such that the extendible array is extended, (ii) registering a history value in the history table and registering a coefficient in the coefficient table, (iii) registering an initial value in the record number table, and (iv) inserting, into the second B+tree data as a key value, a 2-tuple expression of the history value and an in-subarray offset of an element of the extendible array.

The database device according to the present invention further includes: a record deleting section for, upon deleting one record, (i) deleting a 2-tuple of a corresponding history value and a corresponding in-subarray offset from the second B+tree data and (ii) decrementing the number of records in the record number table by one.

So, according to the above structure, the database of the present invention has a data structure, including: first B+tree data, which are so provided as to respectively correspond to column values of the relational table, and which convert the column values into subscripts of an extendible array; second B+tree data, which registers, as key values, 2-tuple expressions of history values and in-subarray offsets of elements, respectively corresponding to records of the relational table, of the extendible array; a history table, which registers chronological sequence of array extension; a coefficient table, which registers, for each subarray, a coefficient vector made up of a coefficient of a linear function for calculating an in-subarray offset of an element in the subarray; and a record number table, which registers, for each of the subscripts of the extendible array, the number of all records that have a column value corresponding to the subscript.

A record of the relational table made up of n columns is expressed by n tuples of subscripts of an n dimensional extendible array.

In the present invention, each tuple of the subscripts is expressed by a 2-tuple of (i) an extension history value indicating an order of extension, i.e., addition of an n-1 dimensional subarray as a result of adding a record having a new column value and (ii) an in-subarray offset in the subarray. That is, as n becomes larger, the length of a record of the relational table becomes larger; however, irrespective of n, a record is expressed by the 2-tuple of the history value and the in-subarray offset. This allows very good memory efficiency especially even in the case of a relational table having many columns. Further, only 2-tuples corresponding to existing records are registered in the B+tree as key values. This also allows improvement of the memory efficiency. Further, the use of B+tree allows a fast retrieval process.

As to the case (2), the following describes a structure of a database, retrieval of data, insertion thereof, and deletion thereof, in the case of registering, in the 2-tuple B+tree data as a key value, the 2-tuple expression of (i) the chunk number of the chunk to which the chunked extendible array's element corresponding to each of the records of the relational table belongs and (ii) the in-chunk offset in the chunk.

The database device according to the present invention is arranged such that: the extendible array is a chunked extendible array and each of the sections is a chunk of the chunked extendible array, and the database memory section stores: second B+tree data, which registers, as key values, 2-tuple expressions of chunk numbers and in-chunk offsets of the chunks to which the elements, respectively corresponding to the records of the relational table, of the chunked extendible array belong, the second B+tree data being the element location B+tree data, the chunk numbers being the section location information, the in-chunk offsets being the in-section offsets; first B+tree data, which are so provided as to respectively correspond to column values of the relational table, and which convert the column values into 2-tuple expressions of (i) subscripts indicating locations of chunk subarray information in the chunked extendible array and (ii) subscripts in the chunks; a history table, which registers chronological sequence of chunked array extension as the chunk subarray information; a coefficient table, which registers, for each chunk subarray, a coefficient vector made up of a coefficient of a linear function for calculating a chunk number of a chunk in the chunk subarray; a column value table, which includes, as column value information, either a column value corresponding to each of the subscripts of the extendible array or a pointer for a memory area in which the column value is stored; and a record number table, which registers the number of all records that have the column value.

The database device according to the present invention further includes: a record retrieving section for retrieving, from the second B+tree data in response to a retrieval request, a 2-tuple of a chunk number and an in-chunk offset corresponding to the retrieval request.

The database device according to the present invention further includes: a record inserting section for, upon inserting a record having a new column value, (i) registering the column value in the first B+tree data such that the chunked extendible array is extended, (ii) registering a history value in the history table and registering a coefficient in the coefficient table, (iii) registering an initial value in the record number table, and (iv) inserting, into the second B+tree data as a key value, a 2-tuple expression of the chunk number and an in-chunk offset of a chunk to which the element of the chunked extendible array belongs.

The database device according to the present invention further includes: a record deleting section for, upon deleting one record, (i) deleting a 2-tuple of a corresponding chunk number and a corresponding in-chunk offset from the second B+tree data and (ii) decrementing the number of records in the record number table by one.

According to the above structure, the database of the present invention includes a data structure, including: first B+tree data, which are so provided as to respectively correspond to column values of the relational table, and which convert the column values into 2-tuple expressions of (i) subscripts indicating locations of chunk subarray information in the chunked extendible array and (ii) subscripts in the chunks; second B+tree data, which registers, as key values, 2-tuple expressions of chunk numbers and in-chunk offsets of chunks to which elements, respectively corresponding to records of the relational table, of the chunked extendible array belong; a history table, which registers chronological sequence of chunked array extension as chunk subarray information; a coefficient table, which registers, for each chunked subarray, a coefficient vector made up of a coefficient of a linear function for calculating a chunk number of a chunk in the chunked subarray; a column value table, which includes, as column value information, either a column value corresponding to each of the subscripts of the chunked extendible array or a pointer for a memory area in which the column value is stored; and a record number table, which registers the number of all records that have the column value.

A record of the relational table made up of n columns is expressed by n tuples of subscripts of an n dimensional extendible array.

In the present invention, each tuple of the subscripts is expressed by a 2-tuple of (i) an extension history value indicating an order of extension, i.e., addition of an n-1 dimensional chunked subarray as a result of adding a record having a new column value and (ii) an in-chunk offset in the chunked subarray. That is, as n becomes larger, the length of a record of the relational table becomes larger; however, irrespective of n, a record is expressed by the 2-tuple of the chunk number and the in-chunk offset. This allows very good memory efficiency especially even in the case of a relational table having many columns. Further, only 2-tuples corresponding to existing records are registered in the B+tree as key values. Also in this respect, the memory efficiency is improved. Further, the use of B+tree allows a fast retrieval process.

In each of the database structures of the above cases (1) and (2), when the extendible array is used, it is unnecessary to actually allocate a memory area for a non-existing record; however, a massive logical memory space is required. This memory space is $2^a$, where a indicates an address length of a used computer. Therefore, it is impossible to handle an address (offset value) exceeding this size. No conventional researches point out this matter, so that no solution is provided. For solution to this matter, the present invention proposes a scheme of vertically splitting the relational table (see 2.2 in BEST MODE FOR CARRYING OUT THE INVENTION). This is one of important points of the present invention. Further, this scheme is based on a unique key table (see 2.1 in BEST MODE FOR CARRYING OUT THE INVENTION). The use of this vertical splitting scheme makes it possible to handle a large-scale relational table efficiently. This further improves the retrieval speed.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1 is a function block diagram schematically illustrating a structure of a database device according to one embodiment of the present invention.

Fig. 2 is an explanatory diagram illustrating an example of a relational table expressed by HORT.

Fig. 3 illustrates a pseudo code list representing a retrieval algorithm used when a plurality of column values are not specified.

Fig. 4 illustrates a pseudo code list representing an algorithm for inserting a record.

Fig. 5 illustrates a pseudo code list representing an algorithm for deleting a record.

Fig. 6 is a graph illustrating the number of records that can be inserted into a five-dimensional HORT.

Fig. 7 is an explanatory diagram illustrating an example of HORT using a unique key table.

Fig. 8 is an explanatory diagram illustrating the number of records that can be inserted into HORT.

Fig. 9 illustrates a pseudo code list representing an algorithm for inserting a record having a unique key.

Fig. 10 illustrates a pseudo code list representing an algorithm for deleting a record having a unique key.

Fig. 11 illustrates a pseudo code list representing an algorithm for retrieving a record having a unique key.

Fig. 12 is an explanatory diagram illustrating an example of a structure of a unique key table in cases where there are more than one unique key.

Fig. 13 is an explanatory diagram illustrating (i) vertical splitting of a relational table and (ii) an example of implementation thereof using HORT expression.

Fig. 14 illustrates a pseudo code list representing an algorithm for vertically splitting a relational database.

Fig. 15 is a graph illustrating a relation between the number of columns in HORT and the maximum number of column values of the columns.

Fig. 16 illustrates a pseudo code list representing an algorithm for inserting a record after the vertical splitting.

Fig. 17 illustrates a pseudo code list representing an algorithm for deleting a record after the vertical splitting.

Fig. 18 illustrates a pseudo code list representing an algorithm for retrieving a record after the vertical splitting.

Fig. 19 illustrates effective address ratio in an n dimensional extendible array.

Fig. 20 is an explanatory diagram illustrating chunking of HORT.

Fig. 21 illustrates effective address ratio in a chunked n dimensional extendible array.

Fig. 22 illustrates cardinality of column values for one column.

Fig. 23 is an explanatory diagram illustrating a unique key in a chunked HORT data structure.

Fig. 24 is an explanatory diagram illustrating vertical splitting of a table in the chunked HORT data structure.

Fig. 25 illustrates a definition example of a complex object.

Fig. 26 illustrates a relational table expression in an example of complex object instance in the definition example shown in Fig. 25.

Fig. 27 is an explanatory diagram illustrating an example of HORT expression of a table book shown in Fig. 26.

Fig. 28 is an explanatory diagram illustrating another example of HORT expression of the table book shown in Fig. 26.

Fig. 29 is an example of an XML document having DTD.

Fig. 30 is an example of expressing the XML document shown in Fig. 29, in the form of a relational table.

Fig. 31 is an example of XML document.

Fig. 32 is an example of XML document.

Fig. 33 is an example of XML document.

Fig. 34 is an example of XML document.

Fig. 35 illustrates a tree graph expression of the XML document shown in Fig. 29.

Fig. 36 illustrates a relational table expression in which meta information of a node of the tree graph shown in Fig. 35 is handled as a column.

Fig. 37 illustrates a measurement result of HORT system in cases where the number of columns is six and a type of the column is character string type.

Fig. 38 illustrates a measurement result of Postgres system in cases where the number of columns is six and a type of the column is character string type.

Fig. 39 illustrates a measurement result of HORT system in cases where the number of columns is six and a type of the column is integer type (4 byte length).

Fig. 40 illustrates a measurement result of Postgres system in cases where the number of columns is six and a type of the column is integer type (4 byte length).

Fig. 41 illustrates measurement results in cases where the number of columns is nine and data type of the columns is character string type (20 byte length).

Fig. 42 illustrates measurement results in cases where the number of columns is nine and data type of the columns is integer type (4 byte length).

Fig. 43 is an explanatory diagram illustrating a relational table according to a conventional technique.

Fig. 44 is an explanatory diagram illustrating an expression of the relational table by an array according to the conventional technique.

Fig. 45 is an explanatory diagram illustrating an index array model according to the conventional technique.

## BEST MODE FOR CARRYING OUT THE INVENTION

The present invention is based on the concept of the extendible array, and provides a new implementation scheme of a relational database table (relational table). This new implementation scheme is called "history offset implementation scheme". A record of the relational table made up of n columns is expressed by n tuples of subscripts of an n dimensional extendible array. In the present invention, each tuple of the subscripts is expressed by a 2-tuple of (i) an extension history value indicating an order of extension, i.e., addition of an n-1 dimensional subarray as a result of adding a record having a new column value and (ii) an offset in the subarray. In the implementation scheme of the present invention, B+tree in which the 2-tuple is used as a key value is used as a main data structure. The implementation scheme allows fast processing as compared with the conventional implementation scheme, and allows low storage cost. Further, in the implementation scheme of the present invention, in cases where there are many columns in the relational table and the number of column values are increased, an offset space is likely to overflow; however, this can be overcome without deteriorating benefits of the history offset implementation scheme, as described later.

As described above, in the present invention, the set of the records in the relational table is implemented in the form of a multidimensional extendible array. This makes it possible to deal with insertion of a record having a new column value, and to search the storage location of a record fast by using the addressing function. Therefore, according to the present invention, a large-scale table can be handled more efficiently than the conventional techniques, so that the present invention is applicable to many industrial fields.

The following fully explains an embodiment of the present invention.

[Base Art]

Explained first is an "extendible array", which is a base art of the present invention. The table implementation method of the present invention is hereinafter referred to as "history offset implementation scheme" or "HORT (History-Offset implementation of Rational Table)". HORT is based on the concept of the extendible array explained below.

The extendible array is an array whose size is dynamically extendible in an arbitrary dimensional direction during runtime operation. In the extendible array, only an extendible part is dynamically allocated, and data of array elements before extension are never relocated and are used as they are. Such an extendible array can be applied into a case where array size cannot be predicted and into various fields in which necessary array size can be dynamically varied according to a change in environment during operation. As a model of the extendible array, E.J. Otoo et al. proposed the index array model (Non-patent Citation 2). In the index array model, a memory area for an index array is added. This makes it possible to make reference to an array element fast, and the index array model is shown to be superior to other model (Non-patent document 1) employing, e.g., hashing. Meanwhile, Non-patent Citation 3 describes structuring of such an index array; however, Non-patent Citation 3 is made from a viewpoint completely different from that of the present invention. Further, none of Non-patent Citations 2 to 4 takes into consideration the aforementioned shortcoming (b), which is a problem to be solved by the invention. Therefore, contiguous memory areas are required for subarrays of the extendible array, so that Non-Patent Citations 2 to 4 are not for practical use. Note that the present invention is based on the concept of such an index array model, so that the following explains an overview of the index array model.

An n dimensional extendible array A is extended in a certain dimensional direction by (i) reserving the contiguous memory areas (subarrays) whose size corresponds to a cross section of an n-1 dimensional array obtained by excluding the dimension from the n dimensional extendible array A, and (ii) adding a subarray to the n dimensional extendible array A. Non-patent Citation 2 assumes that the subarray allocated upon the extending are sequentially allocated to the contiguous memory areas from the address 0 in the order of extension. However, in usual dynamic memory allocation, contiguous memory areas are not necessarily always allocated. In view of this and the like, Non-patent Citation 4 proposes a model modified in some ways for actual use. Now, the model proposed in Non-patent Citation 4 is explained below.

The n dimensional extendible array A has a history counter and three kinds of auxiliary table for each dimension. These tables are called "history table", "address table", and "coefficient table". The history table is a one-dimensional array indicating a chronological sequence of array extension. Every time the extension of the array is carried out, the fixed size n-1 dimensional subarray is dynamically allocated and the first address thereof is recorded onto the address table. Then, the current value of the history counter is incremented by one, and the value is memorized on the history table. The subscripts of the dimensions of the extendible array and the subarrays start from 0. The dimensions are counted from 1. One element in an array has a size of 1.

For example, consider a case where the element of a normal four-dimensional array having a fixed dimensional size of [s1, s2, s3, s4] are allocated on a memory in order of the dimension 1 to the dimension 4. In this case, as is well known, the address of the element <i1, i2, i3, i4> is obtained by calculating the following linear function (1) concerning the element <i1, i2, i3, i4>:

$$s2s3s4i1 + s3s4i2 + s4i3 + i4 \quad \cdots \quad (1)$$

In contrast, consider a case of a four-dimensional extendible array currently having a size of [s1, s2, s3, s4]. When this four-dimensional extendible array is extended by one in the direction of the dimension 2, a three-dimensional subarray S having a size of [s1, s3, s4] is dynamically allocated. The address table is a one-dimensional array having the first address of each subarray. The address where the element <i1, i2, i3, i4> is stored is found by adding the offset found by the above expression (1) to the first address of the three-dimensional subarray S.

If the n dimensional extendible array A is a three or higher dimensional extendible array, the coefficient table is required for each dimension so as to record, for each subarray, a coefficient vector consisting of n-2 coefficients of a linear function for use in calculating the offset of an element in the subarray. For example, the offset of the element <i1, i2, i3> of the aforementioned subarray S is found by the linear function s3s4i1 + s4i2 + i3, as is the case with the above expression (1). In this case, (s3s4, s4) is the coefficient vector of the subarray S. The value of the coefficient vector depends on the size of each dimension of the n dimensional extendible array A at extension. Therefore, the coefficient vector is calculated at the extension, and the value thus calculated is written in a slot of the coefficient table of the extended dimension.

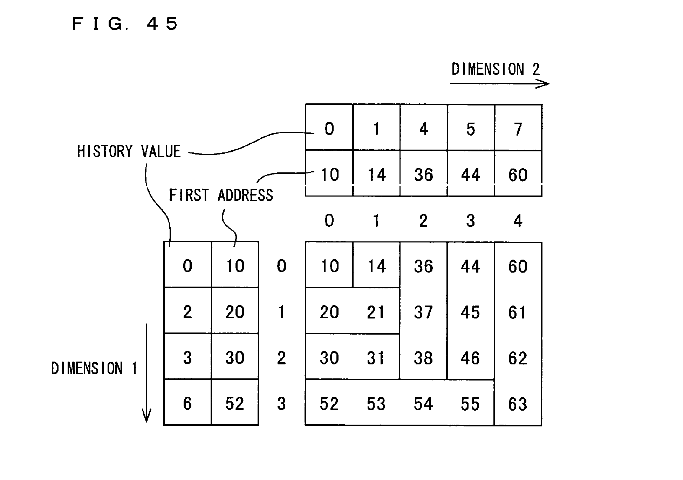

Access to an array element is carried out as follows. See Fig. 45. Assume that the history tables for the directions of the dimensions 1 and 2 are respectively H 1 and H2 and the address tables therefor are respectively A1 and A2. Now, consider an example in which the address of an array element <3, 4> is calculated. The calculation is carried out as follows. H1[3] < H2[4], so that the subarray S including the element <3, 4> is allocated when the history value H2[4] = 7, and the first address thereof is A2[4] = 60. Further, the element <3, 4> is element <3> in the subarray S, so that the calculated address is 63.

[Embodiment]

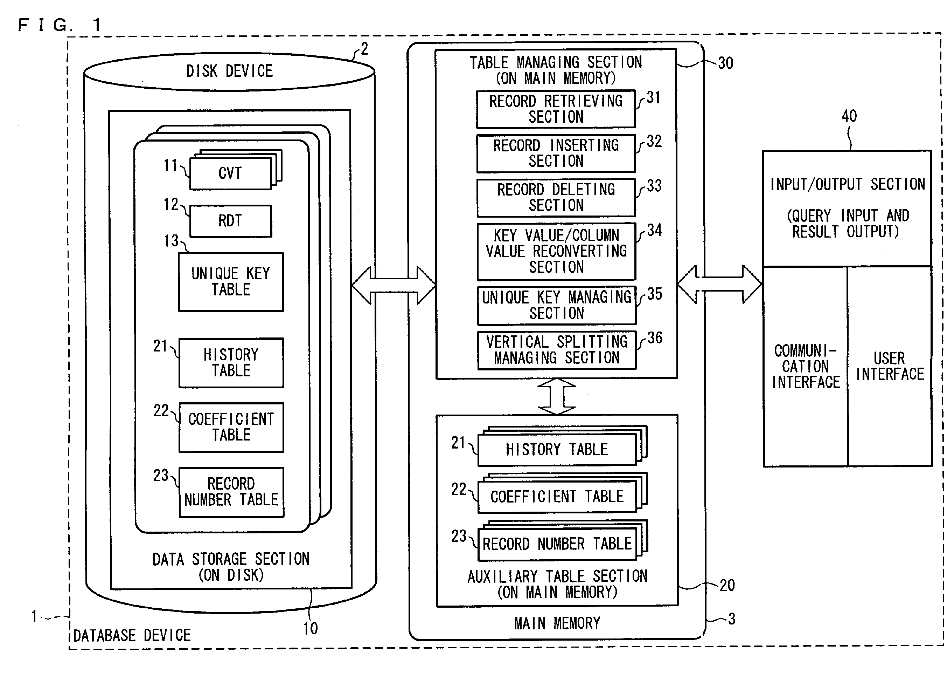

One embodiment of the present invention will be described below with reference to Fig. 1 to Fig. 42. Explained first are (i) storage of a relational table according to the present invention, (ii) an operation method thereof, and (iii) software for realizing the relational table.

1. Basic data structure of HORT and operation thereof

1.1 Basic data structure of HORT

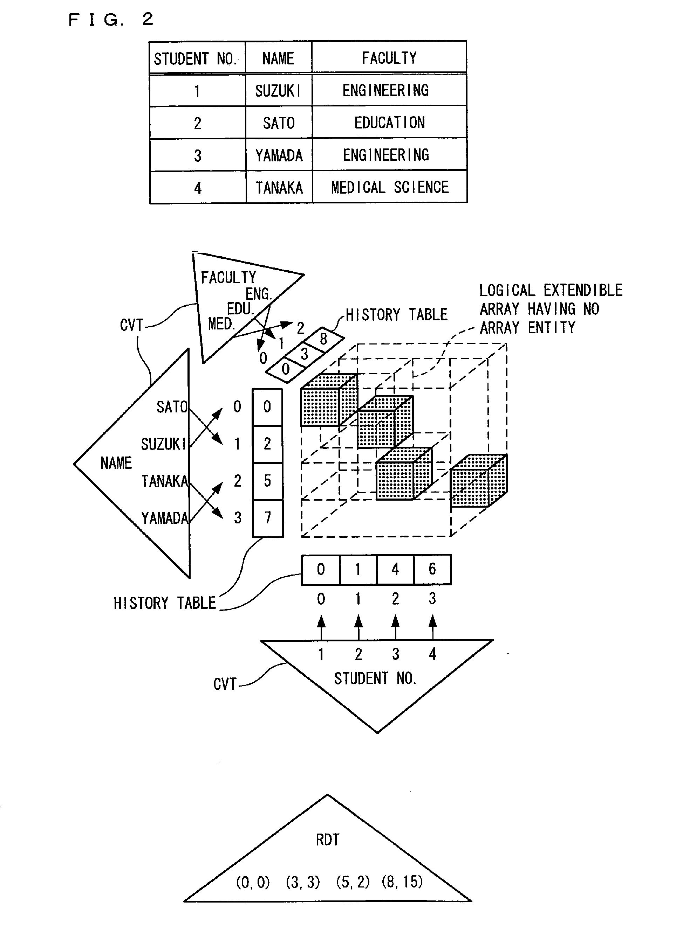

Fig. 2 is an explanatory diagram illustrating an example how a relational table according to the present embodiment is expressed by HORT. A relational table T made up of n columns is implemented by n dimensional HORT. The n dimensional HORT is constituted by the following data structure:

(1) n+ 1B+tree for n CVTs (key-subscript ConVersion Tree) and one RDT (real Data Tree);
(2) the history table and the coefficient table of the three kinds of auxiliary table of the "extendible array" explained in the above section [Base Art]; and
(3) a record number table for memorizing, for each subscript, the number of all the records that have a column value corresponding to the subscript.

Each of the tables described in (2) and (3) is a one-dimensional array having elements whose number coincides with the dimension sizes of the extendible array. For this reason, these three kinds of auxiliary table allocated for each dimension are hereinafter collectively referred to as "HORT table". The HORT table is a one-dimensional array whose slot (element) corresponding to a subscript i is a collection of the slots of subscripts i of these three kinds of auxiliary table. Further, HORT having the data structure made up of the above (1), (2), and (3) is hereinafter also referred to as "HORT data structure".

One CVT is prepared for each column of the relational table T. The CVT is B$^+$tree for converting a column value into a subscript of the extendible array described in [Base Art]. Assuming that n tuples of the column values of a table record is r = <c1, c2, ..., cn>, the r is converted into n tuples I = <i1, i2, ..., in> of array subscripts by using the n CVTs. As long as the aforementioned extendible array is realized on a memory area with the relation between r and I maintained, the address of an element I can be found in accordance with the address calculation procedure for an element of an extendible array.

Paid attention in the present invention is that one history value corresponds to one subarray. In view of this, each array element expressed by a subscript tuple I is expressed by a 2-tuple <h, o>, where h indicates the history value of a subarray to which the array element belongs and where o indicates an offset thereof in the subarray (subarray offset; hereinafter, also referred to simply as "offset"). Note that the array element can be expressed by a 2-tuple even when the number n of dimensions is large. Assume that a set of records in the relational table expressed by the HORT data structure is R = {r1, r2, ..., rm}. In this case, the 2-tuple expression <hi, oi> of the history value and the offset of an extendible array element corresponding to a record ri ∈ R(i = 1, ..., m) is stored in the RDT as a key value. Note that no contiguous memory area for the subarrays of the aforementioned extendible array is allocated. In this respect, the extendible array, which is a logical space in which the key value is placed, is hereinafter referred to as "logical extendible array". A key value expresses the corresponding record itself in the relational table. Only the key values of the records in the relational table R are registered in the RDT. This solves the aforementioned shortcoming (b), which is a problem to be solved by the invention. Note that the memory byte of h is upper byte with respect to the memory byte of o in the key value, the 2-tuple <h, o>. Therefore, key values having the same history value are continuously arranged in a sequence set of the RDT in ascending order of the values of o.

Only the existing records are registered, so that the CVT needs to be maintained every time insertion/deletion is made with respect to the CVT of each dimension. Specifically, when a record having a new column value v is registered in the HORT data structure, the column value v is registered in a CVT and then the logical extendible array is extended. On this occasion, values are written in the history table and the coefficient table, and a value "1" is written as an initial value in the auxiliary table, the record number table (see above for (3)), for memorizing the number of records. Thereafter, every time a record having the same column value v is inserted or deleted, the record is inserted into the RDT or deleted therefrom and the number of records in the auxiliary table is incremented or decremented. When all the records having the column value v are deleted, the column value v is also deleted from the CVT. Note that this information about the number of records can be referred for the sake of optimization of a retrieve process to the relational table T, or the like.

Deletion of column values registered in the CVT results in existence of unused empty slots in the HORT table. Such empty slots are connected via a list, thus being reused. The field indicating the number of records, i.e., the aforementioned field (3) of the basic data structure of HORT is used for the connecting via the list. The other information such as the history value are used as they are when the empty slots are reused. When registering a new column value in the CVT, this empty slot list is checked. In cases where the list is not empty, the first empty slot is used as it is and the subscript thereof is registered in the CVT. The logical extendible array is never extended. In cases where the list is empty, the logical extendible array is extended along the corresponding dimension.

1.2 Operation of HORT basic data structure for relational table operation

Assume that the columns in the relational table T are C = <C1, C2, ..., Cn>, and that a set of records in the relational table T is R. Assume also that a set of non-duplicate column values of Ci is $Vi = \{vi|\ r = <v1, ..., vi, ..., vn> \in R, 1 \le i \le n\}$. Further, a CVT, for a dimension i, for mapping the column values of Vi in the values of subscripts of the history table will be described as CVTi. Further, the HORT table of the dimension i will be described as HTi, and its empty slot list will be described as SLi.

(1) Retrieval of record r = <v1, v2, ..., vn>

Explained first is how it is judged whether or not a record exists, in cases where all the column values in the records r = <v1, v2, ..., vn> of the relational table T are designated. In this case, n CVTs are searched to find the n tuple I of the subscripts (I = <CVT1(v1), CVT2(v2), ..., CVTn(Vn)>. If all the column values Vi $(1 \le i \le n)$ are registered in the CVTi, the pair <h, o> of each history value and each offset (hereinafter, also referred to as "(history, offset) pair") is found in accordance with the address calculating procedure for an element of the extendible array. With <h, o> as a key value, the RDT is searched. If there is the key value in the RDT, it means that r exists in the relational table T. If there is an unregistered column value in the corresponding CVT, it means that r does not exist in the relational table T.

Explained next is how a retrieval of a target record is carried out in cases where {Vi1, ..., Vik} of the column values of r are designated as a retrieval condition. A search is carried out with respect to k CVTs so as to find subscripts CVTi(Vil), CVTi(vi2), ..., CVTik(vik). If there is a CVT in which the designated column values are not registered, it means that the record does not exist. If all the column values are registered, the extension history values of subarrays corresponding to the found subscripts are obtained, and the minimum extension history value hmin and the maximum extension history value hmax are selected from the extension history values. Then, a search is carried out for records having the designated subscripts in the subarrays each having an extension history value h falling within the following range: hmin $\le h \le$ hmax. Key values having the same history value are consecutively arranged in the sequence set of RDT in ascending order of offset o. Access is sequentially made to the key values <h, o> having h as the history value, in the RDT and the n tuples I = <i1, i2, ..., in> of the subscripts are found from <h, o> in accordance with a procedure described below in [1.3 Reverse-conversion from history value/offset to column value]. If they all coincide with the k subscripts CVTil(vil), CVTi2(vi2), ..., CVTik(vik) found before for the k dimensions designated in the search condition, the <h, o> are included in the retrieval result.

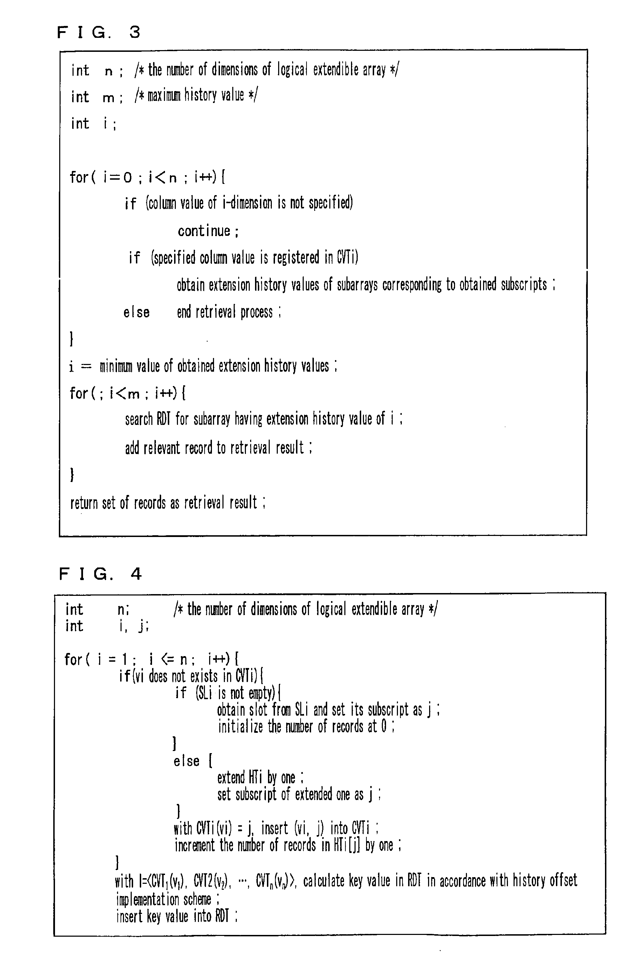

Fig. 3 illustrates a pseudo code list of a retrieval algorithm in the latter case, i.e., in the case where more than one column value are not designated.

(2) Insertion of record r = <v1, v2, ..., vn>

The n CVTs are searched so as to find the n tuples I = <CVT|(v1), CVT2(v2), ..., CVTn(vn)> of the subscripts. If all the column values vi $(1 \le i \le n)$ are registered in the CVTi, the RDT is searched with <h, o> as key values in the same manner as described in the case (1) above. If they do not exist in the CVTi, <h, o> is registered in the RDT as a key value. If a column value unregistered in the corresponding CVT exists among the n column values in r, corresponding dimensions in the extendible array are assumed to be d1, d2, ..., dk $(1 \le i \le k)$ in ascending order. The followings (a) and (b) are sequentially carried out for the dimensions di $(1 \le i \le k)$:

(a) If the empty slot list SLi of each of the dimensions di is not empty, an HTi's empty slot indicated by the first of the SLi is assigned and the field indicating the number of records is initialized at "0". If the empty slot list SLi is empty, the logical extendible array is extended along the dimension di by one, the value of the history value counter is incremented by one and the value thus incremented is written as an extension history value in an empty slot of the extended HTi, and the coefficient vector is calculated and is written therein.

(b) Vdi, and the number of the empty slot reserved in the above (a), is inserted in the CVTi, and the number of records written in the empty slot reserved in the above (a) is incremented by one.

Fig. 4 illustrates a pseudo code list of an algorithm for the above record insertion.

(3) Deletion of record r = <v1, v2, ..., vn>

In the manner described in (1), r is searched. If r exists, the corresponding key value is deleted and maintenance is carried out with respect to the CVT and HT.

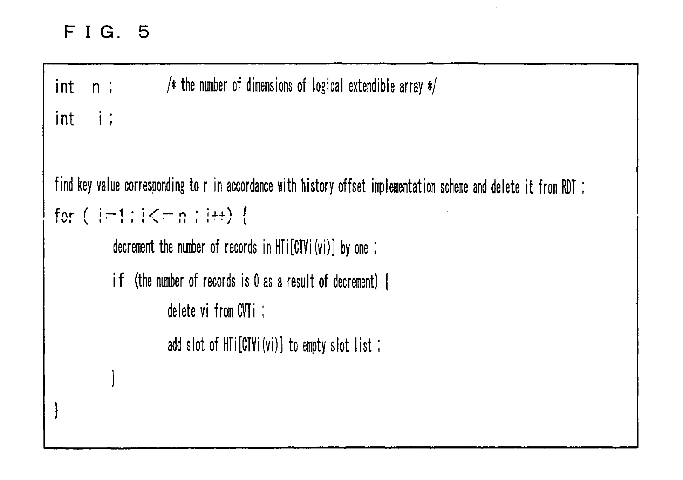

Fig. 5 illustrates a pseudo code list of an algorithm for the above record deletion.

1.3 Reconversion from history value/offset to column value

In the HORT data structure, a record in the relational table T is expressed by a (history, offset) pair in the logical extendible array, and the (history, offset) pair is stored as a key value in the RDT. Accordingly, a set of key values for relevant records is presented to a user as a retrieval result. For the retrieval result to be presented to the user who made the search request, the key values need to be reconverted into a record serving as a tuple of column values. The following explains how to reconvert the key values into the column values.

(History, offset) pairs obtained from HORT are converted, in accordance with the reconversion in the history-offset method, into subscripts for the respective dimensions of the logical multidimensional array. In order to carry out the conversion fast, a one-dimensional array SH is prepared which use a history value as its subscript. Upon inserting a record having a (history, offset) pair, <h, o>, a dimension d and a value k of its subscript in the HORT table are written in SH[h]. Among values of subscripts thus converted, the value of the subscript of the dimension d is k. Let the values of the subscripts of the other dimensions be <i1, i2, ..., in-1>. These values of the subscripts are uniquely found from the offset o by using a coefficient vector memorized in HTd[k]. The coefficient of the linear function for finding the address in the extendible array is described in the coefficient vector. Therefore, the offset o is divided by the coefficient of the first term of the coefficient vector, thereby obtaining a quotient i1 and a remainder. The remainder is divided by the coefficient of the second term thereof, thereby obtaining a quotient i2 and a remainder. Such calculations for finding quotients and remainders are sequentially carried out until division using the n-2-th term of the coefficient vector. Indicated by i1, i2, ..., in-2 are the quotients obtained as the result of the divisions. Indicated by in-1 is the remainder of the last division.

Next, for each dimension, the subscript value is converted into a column value. A CVT is B+tree, so that the CVT is capable of converting a column value to an array subscript value but is incapable of converting an array subscript value to a column value. In view of this, an area is set up in each slot in the dimensions of the HORT table so as to store a corresponding column value. Every time a new record is inserted, the column value is stored in the area. In cases where the type of column value exceeds the size of the character string type or the LONG type, the area for storing a column value does not stores the column value itself, but stores a pointer indicating the memory area in which the column value of the character string type is stored. In this way, a column value can be converted into an array subscript and the array subscript can be converted into the column value. Therefore, it is possible to obtain column values from array subscript values obtained for the dimensions, with the result that it is possible to obtain a record by arranging the obtained column values in the order of the dimensions.

2. Overflow in history value/offset space, and countermeasure against overflow

When the type of key value stored in the RDT, i.e., the type of <history, offset> is the long type, which is a simple type having a maximum size among the simple types, it is efficient in terms of implementation. For example, when using a 64-bit computer, upper 24 bits and lower 40 bits are assigned to the history value and offset value respectively. In this case, the limitation of the offset space is especially severe. Either the history space or offset space would overflow if the number of columns of the relational table expressed by HORT or cardinality of column values increases. In view of this, in order to extend the key value spaces, B+tree capable of having two variables is prepared. For the first key value, the extension history value (int type: 32bit) is stored. For the second key value, the offset (long type: 64bit) is stored in the B+tree of the RDT. However, the use of the above method merely delays the occurrence of the overflow and cannot be a substantial solution. The following explains some countermeasures against the overflow. Note that the below-described section "2.3 Chunked History-Offset Implementation" proposes a countermeasure made, in view of an idea different from the above, for delaying the overflow in the history/offset space.

2.1 Unique key table

One of the reasons for the overflow of the history/offset space is the existence of a unique key. The unique key refers to a column that has no duplicate values. Examples thereof include columns indicating "student number", "car license registry number", "company staff number" and the like. If such a unique key exists in a relational table implemented by HORT, whenever a new record is inserted, the logical extendible array is inevitably extended. Hence the history value and the size of the subarray soon become large, thereby accelerating overflow of the history/offset space.

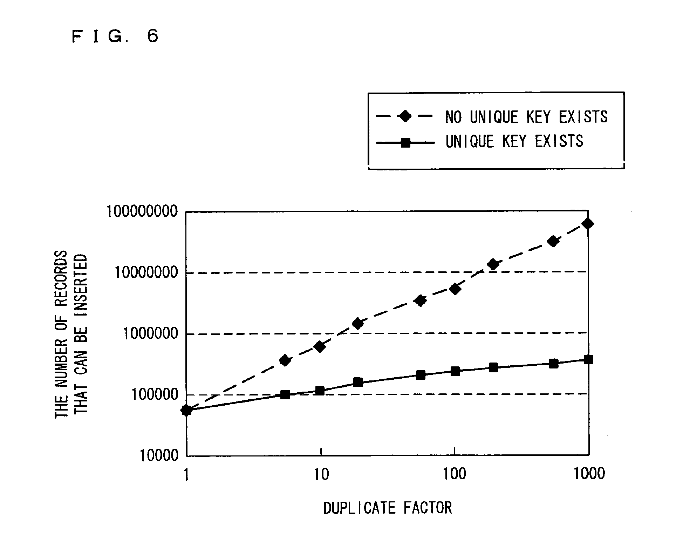

For example in a five dimensional HORT, Fig.6 shows the number of records that can be inserted, when one unique key exists and when no unique key exists, with the duplicate factor of column values, where duplicate factor means the number of records divided by the cardinality of a column. The "duplicate factor" refers to an average of the number of records having a certain column value, and is obtained by dividing the total number of records by the cardinality of column values. In Fig. 6, all the columns are the same in terms of the duplicate factor.

Fig.6 shows that if a unique key exists in the relational table, the number of records that can be inserted into HORT implementing the relational table extremely decreases. In view of this, the unique key that accelerates the overflow is separately handled from the other columns, and the logical extendible array is consisted of only the non-unique key columns. This contributes to delay the history/offset space overflow.

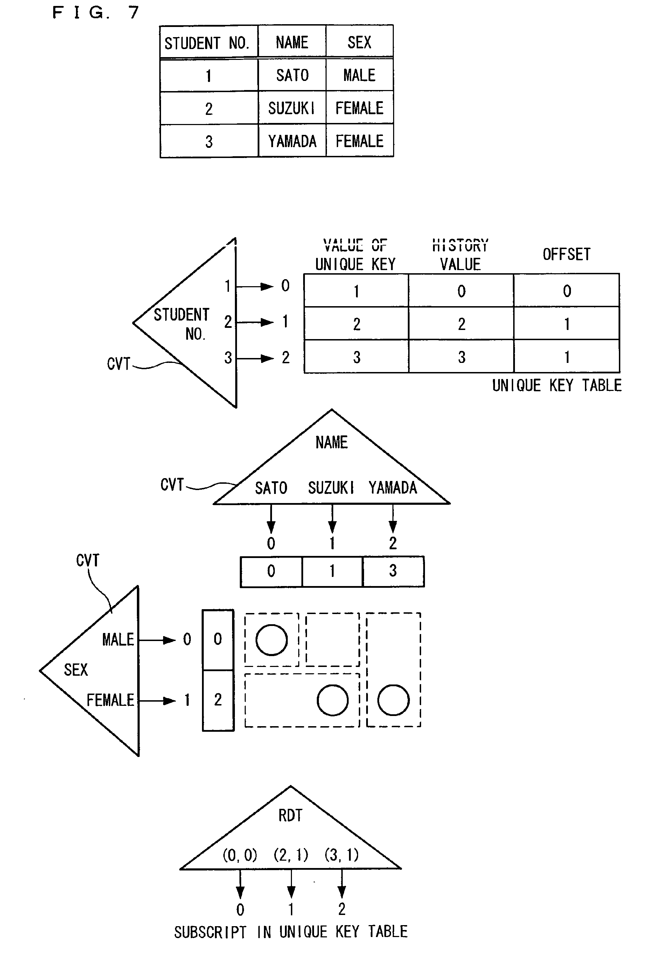

The following explains an example of a HORT structure assuming a relational table "student list" having a unique key "student number". Fig. 7 shows the structure.

Two non-unique keys, "name" and "sex" constitute a HORT data structure with a two-dimensional logical extendible array. The RDT thereof stores (history, offset) pairs that respectively indicate locations of records in the two-dimensional logical extendible array of the HORT data structure.

For the unique key "student number", a unique key table is constructed as a relational table implemented by the conventional scheme on the secondary storage, apart from the HORT data structure explained thus far. Each record in the relational table stores a unique key column value and a (history, offset) pair obtained from the HORT structure in accordance with other column value. Further, the (history, offset) pairs are inserted as key values into the RDT, and the subscript of the unique key table's slot corresponding to the column value of the unique key is inserted as a data value thereinto.

With the above structure, when a value of the unique key is specified, the column values of the non-unique keys can be obtained, in accordance with the reconversion of the history offset implementation scheme, from the (history, offset) pair stored in the corresponding slot of the unique key table. On the other hand, when a column value of a non-unique key is specified, the data value, i.e., the slot number of the unique key table in which the target record is stored can be obtained by using the (history, offset) pair from the RDT of the HORT data structure as a key value, with the result that the value of the corresponding unique key can be obtained.

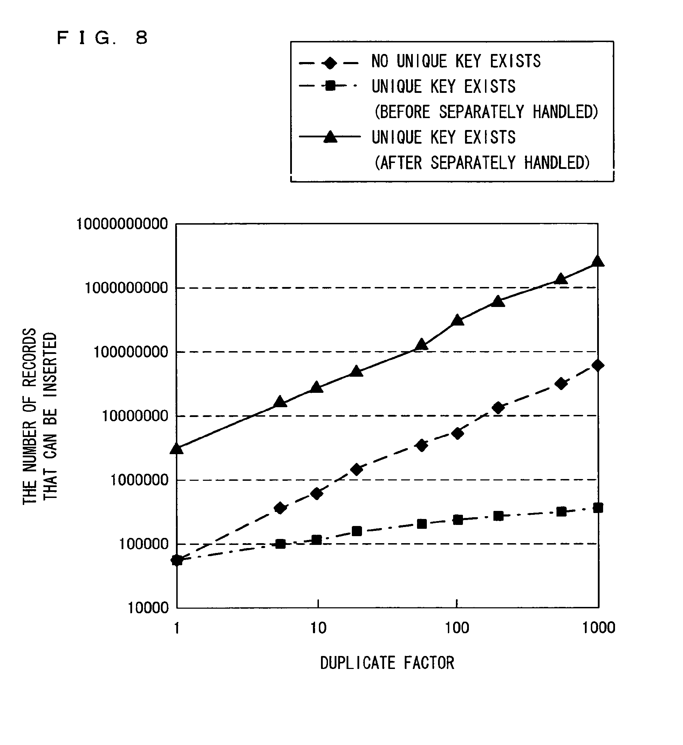

Fig. 8 is a graph illustrating a case where the unique key is separately handled in the manner described above, in addition to the foregoing cases shown in the graph of Fig. 6. From Fig. 8, it is observed that the number of records that can be inserted into the HORT extremely increases in the case where the unique key is separately handled. Handling the unique key separately decreases the number of dimensions of the logical extendible array handled by HORT from 5 to 4. As a result, there is no unique key column in the logical extendible array, with the result that the size of the HORT tables and the logical subarrays is suppressed.

As such, no HORT table is necessary for the unique key. A HORT table has an extension history value, a coefficient vector, a counter for the number of records, and the like, so that the HORT table requires an area larger than the area required by a unique key table. In view of this, the unique key is separately handled as described above, thereby reducing a spatial cost. The following explains respective algorithm for insertion, deletion, and retrieval of a record in the HORT in cases where the unique key is separately handled.

2.1.1 Insertion of a record

In the case of inserting a record into the HORT using the unique key table, it is checked whether or not the value of a unique key has been already inserted into the CVT corresponding to the unique key. If the value has been already inserted into the CVT, there would be duplicate values therein, so that exceptional processing is carried out so as to abort the insertion of the record. If there is no value corresponding to the value of the unique key, the subscript of an empty slot of the unique key table is obtained (if there is no empty slot, an empty slot is added in the end of the unique key table). The value of the unique key of the record to be inserted is stored in the CVT as a key value, and the obtained subscript of the empty slot is stored therein as a data value.

Next, column values other than the unique key are inserted into the logical extendible array as is the case with the conventional technique. For the insertion, (history, offset) pairs corresponding to a set of the column values are obtained. The (history, offset) pairs are inserted into the RDT as key values and the subscripts of the empty slots of the unique key table are inserted into the RDT as the data values. In the empty slots of the unique key table, the value of the unique key and the (history, offset) pairs are stored.

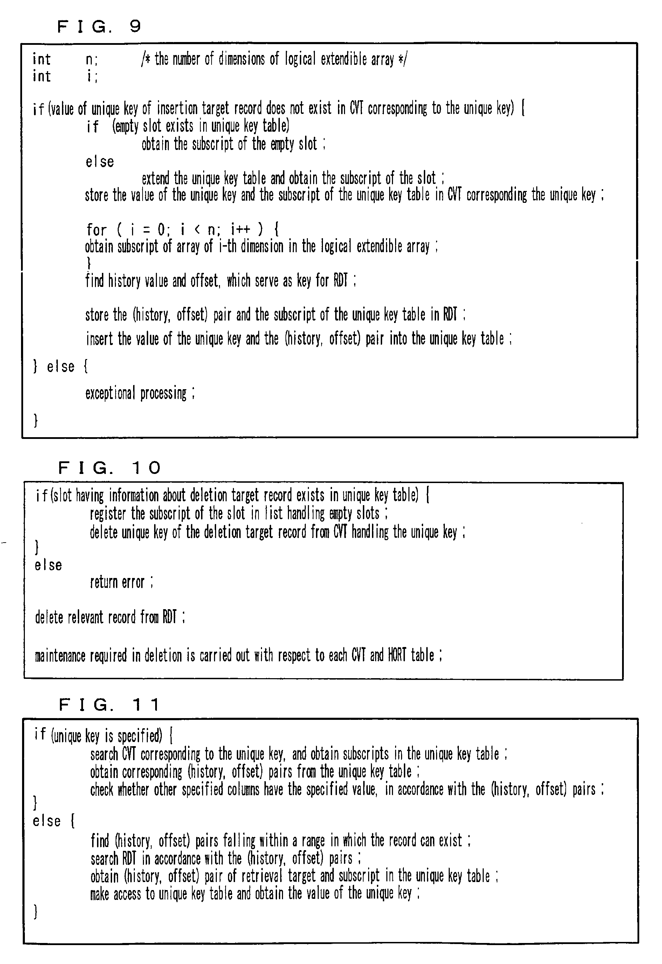

Note that Fig. 9 illustrates a pseudo code list representing an algorithm for inserting the record having the unique key.

2.1.2 Deletion of a record

In the case of deleting a record from the HORT using the unique key table, the slots of the unique key table in which the column values of the unique key are stored are searched for the target record for the deletion. If there is no corresponding slot, an error is caused. If there is a corresponding slot, it is checked whether or not the (history, offset) pair obtained from the slot of the unique key table coincides with the (history, offset) pair corresponding to the target record for the deletion. If they coincide with each other, the subscript of the slot storing the information concerning the target record for the deletion is added to the list managing the empty slots of the unique key table. The column value of the unique key of the target record for the deletion is deleted from the CVT corresponding to the column value of the unique key.

Next, the (history, offset) pair of the target record for the deletion is deleted from the RDT. If there are more than one record having the same (history, offset) pair, only an entry that has been as the data value the subscript of the slot having been deleted from the unique key table is deleted.

Further, maintenance required in the deletion is carried out with respect to each CVT and the HORT table in the same manner as with the deletion of a record from the conventional HORT.

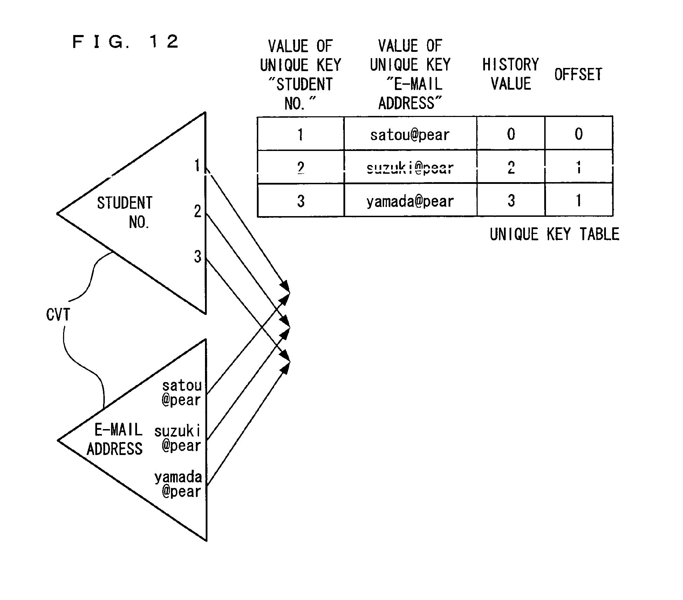

Fig. 10 illustrates a pseudo code list representing the algorithm for deleting the record having the unique key.

2.1.3 Retrieval of a record

In cases where a value of a unique key is specified in retrieval of a record, the CVT corresponding to the unique key is searched so as to obtain the subscripts in the unique key table. The unique key table stores the (history, offset) pairs of the logical extendible array constituted by the columns other than the unique key, so that whether or not the other specified columns have the specified value is checked using the reconversion of the history value and the offset as with the conventional technique. As such, in cases where a unique key is specified, the RDT does not need to be searched, thereby making the retrieval fast.

In cases where no unique key is specified in the retrieval condition, (history, offset) pairs falling within a range in which the record can exist in the logical extendible array are found in the conventional manner, and then the RDT is searched. Further, the RDT stores the (history, offset) pairs and the subscripts in the unique key table, so that it is possible to make access to the unique key table with the use of the subscripts so as to obtain the value of the unique key.

Fig. 11 illustrates a pseudo code list representing the algorithm for retrieving the record having the unique key.

2.1.4 HORT structure in cases where there are more than one unique key.

In cases where there are more than one column having unique key values in the relational table, all the values of the unique key columns are stored in the unique key table, and the subscripts of corresponding slots in the unique key table are stored in the CVTs handling the column values of the unique keys.

Fig. 12 illustrates a unique key table obtained by adding a unique key, representing e-mail address, to the example shown in Fig. 7. The unique key table stores (i) values of the unique key columns of each record, i.e., student number and e-mail address, and (ii) the (history, offset) pairs stored in the RDT. The CVTs respectively corresponding to the unique keys stores pairs of (i) the column values of the unique keys and (ii) the subscripts in the unique key table. As such, one unique key table is used for more than one unique key, with the result that the spatial cost is further reduced. Algorithms for inserting, deleting, and retrieving a record in this case are substantially the same as the case of one unique key, except that the column values of more than one unique key are stored in the unique key table.

2.2 Vertical splitting management of a relational table

In cases where the history/offset space would overflow if a new record is inserted into a relational table handled by HORT and the logical extendible array is accordingly extended, the relational table currently being handled is split into two sets of columns. In the relational tables thus obtained by the splitting, logical extendible arrays are constructed in the conventional manner and (history, offset) pairs are stored in RDTs of the relational tables, respectively. In order to maintain a relation between the relational tables thus split into two, the aforementioned unique key table is utilized. The unique key table above stores (i) values of one or more unique key columns and (ii) (history, offset) pairs. Now, the unique key table herein stores (i) the values of one or more unique key columns that the original relational table has, and (ii) the (history, offset) pairs stored in the RDTs that all the split relational tables respectively have. This makes it possible to obtain, when one value of a unique key is found, (i) the (history, offset) pairs stored in the RDTs respectively corresponding to the split tables and (ii) all the unique key values. Likewise, it is possible to know, when a (history, offset) pair stored in one RDT is found, (i) (history, offset) pairs stored in the other RDT and (ii) all the unique key values.

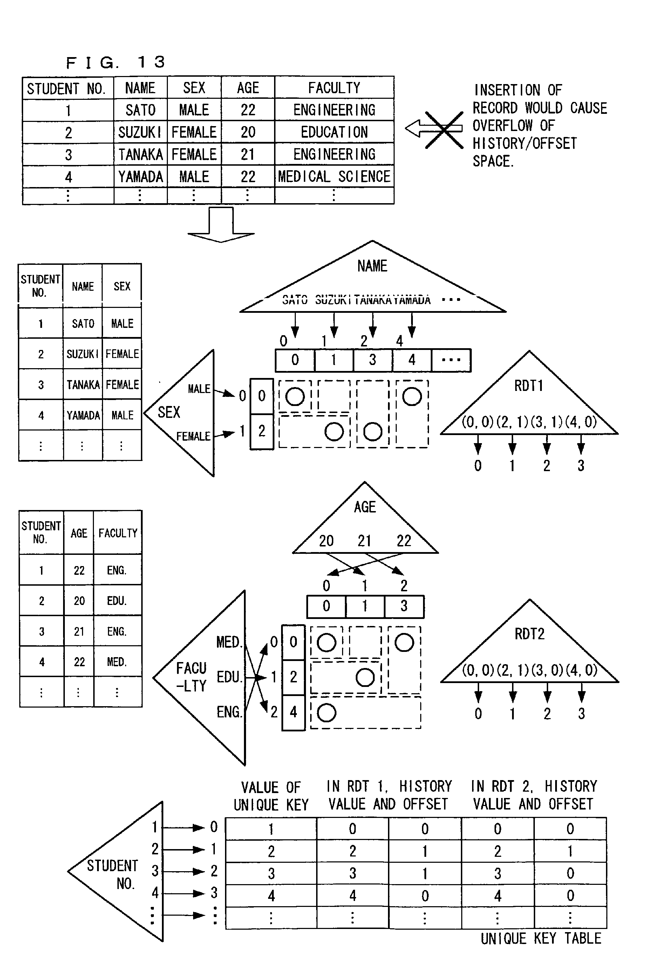

Fig. 13 illustrates vertical splitting of a relational table, and an implementation example thereof using HORT expression.

Consider a case where no unique key exists in the original relational table and no unique key table therefore exists. In this case, upon occurrence of overflow of the history/offset space, a unique key column is newly set up in which numbers uniquely provided for the records in the relational table are its values. In accordance with this unique key column, a unique key table is generated and the (history, offset) pairs stored in the RDTs of the logical extendible arrays of the split relational tables are stored therein. Such a way of splitting a target relational table into two sets of columns is termed "vertical splitting".

Upon the vertical splitting, the RDT, the CVTs, the HORT table, and the unique key table are reorganized. This results in great time cost upon the splitting. Further, the RDT is split into two B⁺trees, each of which is as large as the B⁺tree before the splitting. This results in spatial cost, too.

If the relational table were merely vertically split into two, next splitting timings in the two split tables would be likely to differ greatly. By making no difference between the splitting timings as much as possible, the timings of splitting, which greatly costs in terms of time, can be delayed. In order to make no difference between the next splitting timings in the two split tables, the cardinality of the column values of the columns at present is checked and the columns are divided substantially evenly such that the cardinality of column values in one split table is substantially equal to the cardinality in the other split table.

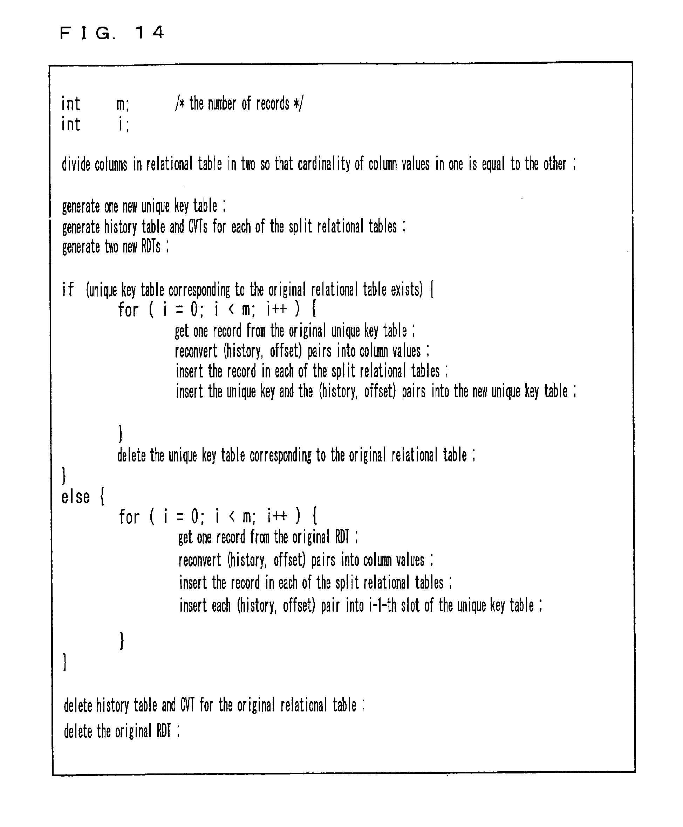

Fig. 14 illustrates a pseudo code list representing an algorithm of vertically splitting the relational table.

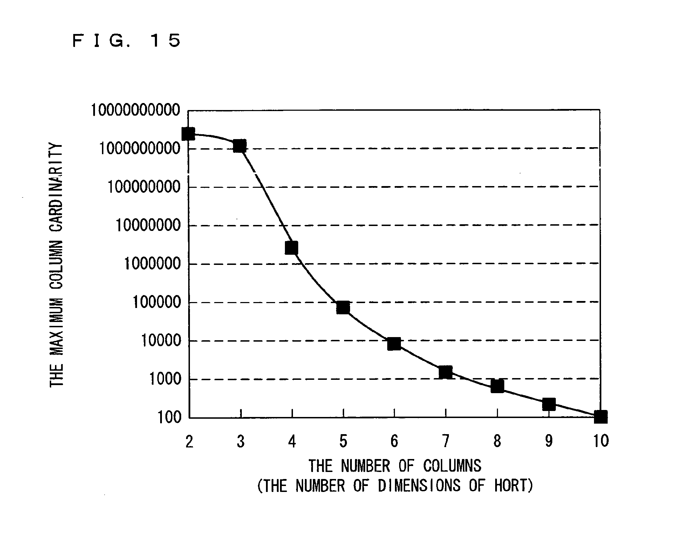

Further, Fig. 15 illustrates a relation between (i) the number of columns in HORT and (ii) the number of column values that each column can have. Assume that all the columns have the same number of column values. When the relational table handled by HORT is vertically split into two, the RDTs as many as the number of times that the splitting is carried out need to be generated as described above. This results in great spatial cost. Moreover, upon the splitting of the table, the reorganization of the logical extendible array, and the reorganization of the RDT and the unique key table are required. This results in great time cost upon the splitting. However, as apparent from Fig. 15, the number of column values that each column can have is not increased in doubling order, but is increased in square order. This greatly delays the overflow of the history/offset space.

In cases where the history/offset space of a split relational table overflows as a result of adding a record, the relational table responsible for the overflow is split in the same manner as described above. This makes it possible to insert records with almost no limitation.

2.2.1 Insertion of a record after vertical splitting

Insertion of a record to HORT after the vertical splitting is carried out as follows. First, values of non-unique key columns in the record are divided and stored in the split tables. A set of the column values thus divided is inserted into corresponding HORT as a record. A (history, offset) pair inserted in each RDT as a key value is stored in the unique key table. Then, the value of the unique key is inserted as a key value into the corresponding CVT and the unique key table, and the subscript in the unique key table is inserted as a data value thereinto. Further, upon inserting the (history, offset) pair in each RDT, the subscript of the slot in the unique key table is stored as a data value in the RDT together with the (history, offset) pair. If the history/offset space overflows upon the insertion, the split table responsible for the overflow is further split vertically.

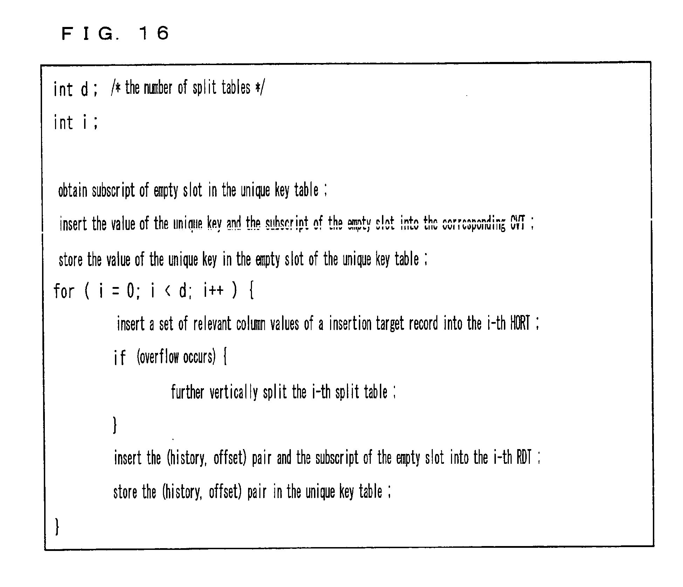

Fig. 16 illustrates a pseudo code list representing an algorithm for inserting the record after the vertical splitting.

2.2.2 Deletion of a record after vertical splitting

Deletion of a record from HORT after the splitting is carried out as follows. Consider a case where a unique key exists in the record. First, a CVT corresponding to the unique key is searched for the purpose of obtaining the subscripts in the unique key table in which the column value of the unique key of the deletion target record is stored. From the (history, offset) pairs of the logical extendible arrays stored in the slots of the unique key table, column values are found and are checked whether or not the record is the deletion target record. Then, the record is deleted from the unique key's slots and the logical extendible arrays.

Meanwhile, consider a case where no unique key exists in the record. First, a (history, offset) pair corresponding to the record to be deleted is found in one of the split relational tables. Next, the corresponding RDT is searched using the (history, offset) pair, so as to find the subscript in the unique key table. From (history, offset) pairs of the other extendible arrays stored in the slots of the unique key table, column values are found and checked whether or not the record is the deletion target record. Then, the record is deleted from the slots of the unique key table and the logical extendible arrays.

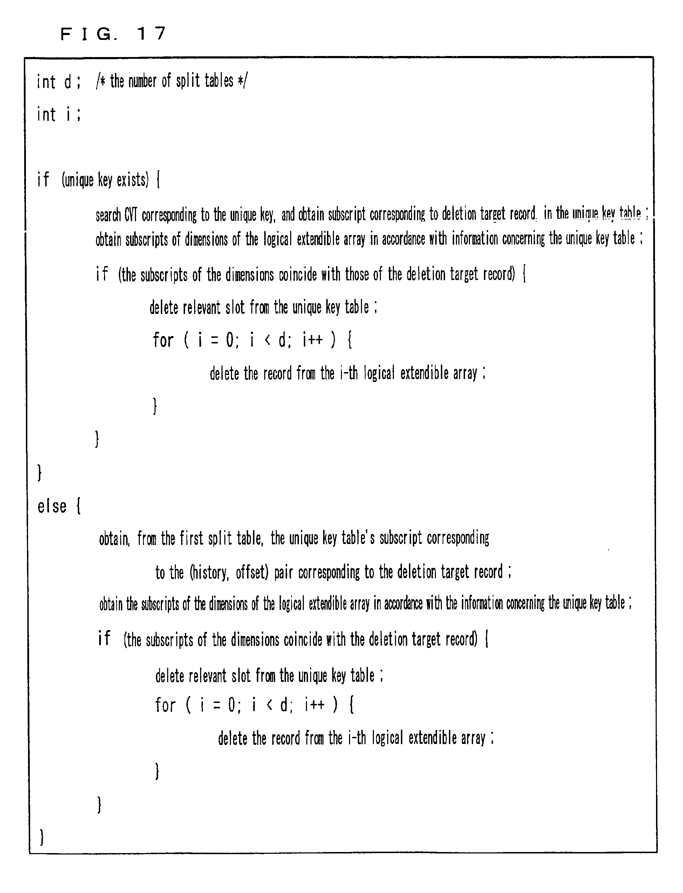

Fig. 17 illustrates a pseudo code list representing an algorithm for deleting the record after the vertical splitting.

2.2.3 Retrieval of a record after vertical splitting

Retrieval of a record after the splitting is carried out as follows. Consider a case where a value of a unique key column is specified. First, a CVT corresponding to the value is searched for the purpose of obtaining the subscripts in the unique key table. The unique key table stores the (history, offset) pairs of the logical extendible arrays. Therefore, in accordance with the (history, offset) pairs, it is checked whether or not each of the column values coincides with the specified value.

Meanwhile, consider a case where a value of a unique key is not specified. First, (history, offset) pairs falling within the range in which the record can exist are found in the logical extendible array of one split table to which the specified column belongs, and the corresponding RDT is searched. The RDT stores the (history, offset) pairs and the subscripts in the unique key table. In reference to the subscripts, access is made to the unique key table so as to obtain (i) the value of the unique key and (ii) the (history, offset) pairs stored in the other logical extendible array. In accordance with the value of the unique key and the (history, offset) pairs, it is checked whether or not each of the column values coincides with the specified value.

As such, in the retrieval from the split relational tables, all the column values can be found as a result of searching either (i) the CVT corresponding to the unique key table or (ii) one RDT. This restrains increase of time cost.

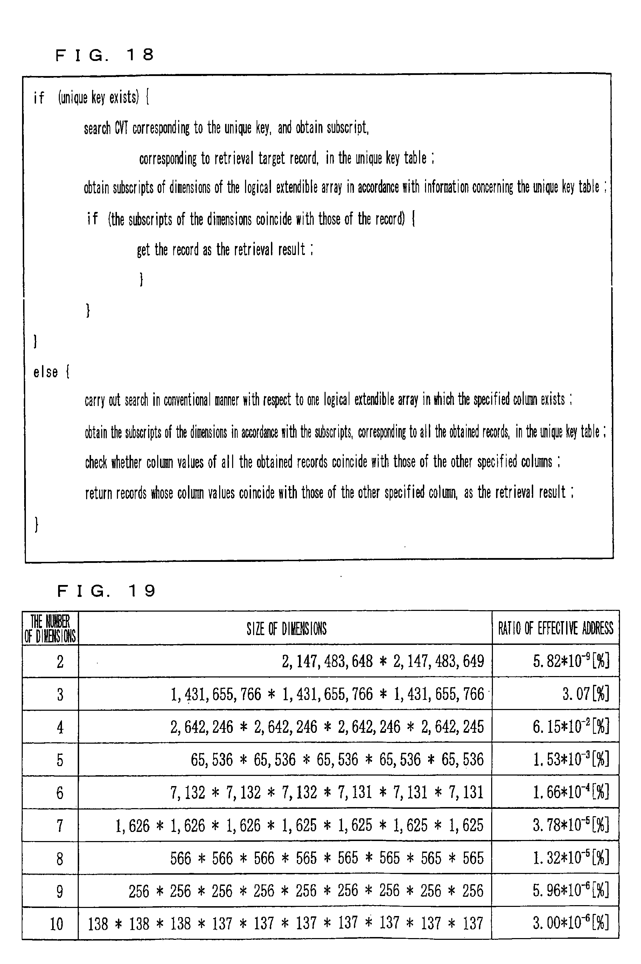

Fig. 18 illustrates a pseudo code list representing an algorithm for retrieving the record after the vertical splitting.

2.3 Chunked history offset implementation

2.3.1 Problem in history/offset space

In the history offset implementation described thus far, the offset space of the subarray is little used in a subarray whose history value is small. A subarray whose history value is 0 or 1 has a size of 1. For example, let the length of the history value be 32 bits, and let the offset from the first element in the subarray be 64 bits. Fig. 19 illustrates effective address ratio, i.e., (extendible array size / $2^{96}$) of the n dimensional extendible array, which is just before the history/offset space overflows as a result of being extended one after another so that the dimensions thereof have the same size as much as possible.

According to Fig. 19, it is understood that only approximately 3(%) of the address space is used even when the n dimensional extendible array is 3-dimensional extendible array, in which the address space is most effectively used.

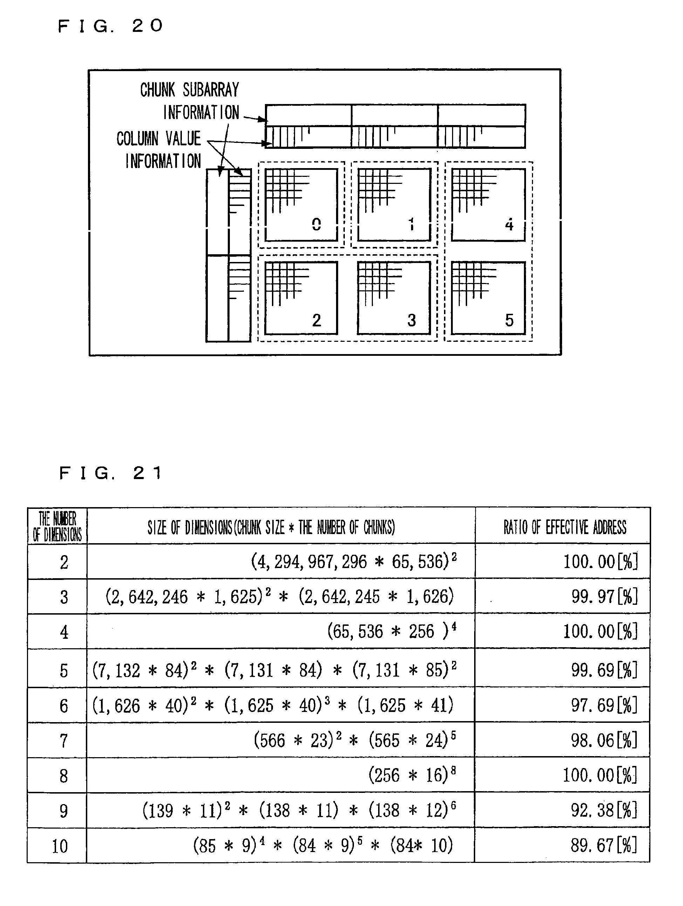

Here, as shown in Fig. 20, the extendible array is handled as a set of chunks, each of which is a multidimensional subarray that has the same number of dimensions as the extendible array and that has dimensions whose sizes are equal to one another. In other words, in the description above, the extendible array is extended based on a subarray, which is a set of array elements, as a unit; however, in the description herein, the extendible array is extended based on a chunk subarray, which is a set of chunks, as a unit. The location of an element in the extendible array is indicated by a pair of (i) the chunk number identifying the chunk to which the element belongs and (ii) its offset in the chunk (in-chunk offset). The chunk numbers are rendered in order of extension in an ascending order such as 0, 1, 2.... Note that such a way of specifying the location of an element of the extendible array is termed "chunked history offset implementation scheme"; abbreviated as "C-HORT".

The chunk number is determined using the aforementioned addressing scheme for an extendible array element. That is, if it is assumed that the chunk number occupies 32 bits and the in-chunk offset occupies 64 bits in the HORT table as is the case with the history offset implementation scheme, the chunk size can be a size that does not exceed $2^{64}$ at maximum. Hence, the effective address ratio extremely increases.

Fig. 21 shows that effective address ratio; i.e., (extendible array size / $2^{96}$) in the n dimensional extendible array, which is just before the history/offset space overflows as the result of being extended based on a chunk as a unit one after another such that the dimensions thereof have the same size as much as possible.

According to Fig. 21, it is understood that the chunking allows effective use of the 96 bits address space. This makes it possible to increase the cardinality of column value in each column, as compared with the case of using the aforementioned history offset implementation scheme.

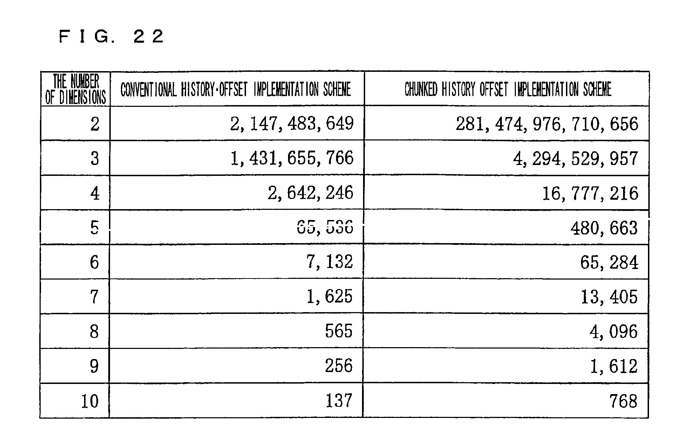

Fig. 22 illustrates the cardinalities of column values in one column in the case of using the conventional history offset implementation scheme and in the case of using the chunked history offset implementation scheme.

2.3.2 Structure of C-HORT

In C-HORT, as shown in a history table etc., in Fig. 20, the data structure corresponding to the aforementioned HORT table (see 1.1 Basic data structure of HORT) is double-layered. This will be called a chunked HORT table or C-HORT table. The upper layer of the C-HORT table stores chunk subarray information, and the lower layer thereof stores column value information. Stored as the chunk subarray information are: history value of the chunk subarray, the first chunk number in the chunk subarray, and coefficient vector of the chunk subarray. Stored as the column value information are: (i) either the column value or a pointer indicating a memory area in which the column value is stored, and (ii) a counter for counting the number of records that have the column value.

Note that the sizes of the dimensions of the chunk are the same and fixed, so that only one chunk size may be held.

As is the case with the foregoing CVT, the key value stored in the CVT is either the column value corresponding to the dimension, or the pointer indicating the memory area in which the column value is stored. The data value is a concatenation (e.g., 64 bits) of two values: (i) a subscript (e.g., 32 bits) in the upper layer of the C-HORT table and (ii) a subscript (e.g., 32 bits) in the chunk. Further, a one-dimensional array is required to associate the chunk number with the (dimension to which the chunk subarray including the chunk belongs, the subscript thereof) pair. This one-dimensional array is smaller than the history-dimension/ subscript converting table of the aforementioned HORT (see 1.3 Reconversion from history value/offset to column value).

The RDT stores, as a key value, the pair of (i) the chunk number rendered to a chunk to which an effective element, corresponding to a record in the relational table, of the logical extendible array belongs and (ii) an in-chunk offset of the array element.

2.3.3 Operation of C-HORT basic data structure for relational table operation

(1) Retrieval of record r = <v1, v2, ..., vn>

The n tuples of data values <CVT1(v1), CVT2(v2), ..., CVTn(vn)> are found by searching the n CVTs. Assume that each column value vi ($1 \leq i \leq n$) is registered in CVTi. A tuple of subscripts of chunks of an extendible chunk array including a record r is stored in the upper 32 bits of each CVTi(vi), and is found by 32bit-shifting each data value to the right. The chunk numbers identifying the chunks in the extendible chunk array are found in accordance with the procedure of calculating the chunk numbers. Note that [Base Art] above describes, with reference to Fig. 45, the procedure of calculating the address of an element in accordance with a tuple of subscripts for the element in the normal non-chunked extendible array. In accordance with exactly the same procedure, the number c identifying the chunk to which the record r belongs can be found by using the chunk subarray information of the upper layer of each C-HORT table HTi ($1 \leq i \leq n$). That is, the first chunk number of chunked subarrays in a dimension corresponding to the maximum history value among those history values of the dimensions is found and the chunk number c identifying the chunk is found by the coefficient vector of the chunk subarray.

The subscripts of the array elements of the chunk c are stored in the lower 32 bit of each CVT(vi). The offset o of the array element is found for the tuple of subscripts. With <c, o> as a key value, the RDT is searched. If the key value exists therein, it means that r exists in the relational table. If not, it means that r does not exist in the relational table.

If there exists a column value that is not registered in its corresponding CVT, it means that r does not exist in the relational table.

(2) Insertion of record r = <v1, v2, ..., vn>

The n tuples of data values <CVT1(v1), CVT2(v2), ..., CVTn(vn)> are found by searching the n CVTs. If each column value vi ($1 \leq i \leq n$) is registered in CVTi, <c, o> is found in the same manner as described in (1) above and is used as a key value for the search in the RDT. If not, <c, o> is registered in the RDT as a key value. If there are column values, which are not registered in their corresponding CVTs, in n column values of r, dimensions respectively corresponding to the non-registered column values in the extendible array are assumed to be d1, d2, ..., dk ($1 \leq k \leq n$) in ascending order. The following is sequentially carried out with respect to dimensions di ($1 \leq i \leq k$) in the order from the dimension d1 to the dimension dk. Note that the size of the current dimension di of the logical extendible array is indicated as sdi and each dimension size of the chunk is indicated as S.

Here, if the empty slot list of the lower layer of the HTdi is not empty, the next empty slot's (subscript in corresponding upper layer, in-chunk subscript) is registered in the CVTdi, and the record number field of the column value of the lower layer is initialized at 0. Hereinafter, assume that the empty slot list of the lower layer is empty. When the sdi attains to chunk boundary, the logical extendible array is extended in the direction of the dimension di by one chunk. On this occasion, the upper layer of the HTdi is extended by one, and the lower layer thereof is extended by S at once. In the CVTdi(vdi), the pair (the extended chunk's subscript, 0) is stored. The upper layer of the slot of the extended HTdi stores chunk subarray information such as an extension history value of the chunk subarray. The lower layer thereof stores column value information. When the sdi does not attain to the chunk, the CVTdi(vdi) stores data value (sdi/ S, sdi%S) (/ and % respectively indicate quotient and remainder). The lower layer of the HTdi stores information for the column value vdi.

When the above process is carried out with respect to all the dimensions di, <c, o> is found in the same manner as described above in (1) and is registered as a key value in the RDT.

(3) Deletion of record r = <v1, v2, ..., vn>

In the manner described above in (1), search for r is carried out. If r exists, the key value corresponding to r is deleted from the RDT, and then maintenance of CVTs and HT is carried out.

2.3.4 Key value/column value reconversion

As a retrieval result of records, a set of key values stored in a relevant RDT, i.e., (chunk number, in-chunk offset) pairs are returned. In order to return the retrieval result to the user who has made retrieval query, the key values need to be reconverted into a set of records, each of which is made up of column values. The following explains the reconverting method.

First, a chunk number is converted into (i) the subscript of a dimension of C-HORT table of an extendible chunked array A and (ii) the subscript of the chunk. In order to carry out the conversion fast, the one-dimensional array SH is prepared which is described above in 2.3.2 and which associates as a subscript the chunk number with a (dimension to which the chunk subarray including the chunk belongs, subscript thereof) pair. Upon inserting a record having a (chunk number, offset) pair, <c, o>, a dimension d of the HORT table in which the first chunk number of the chunk subarray including the chunk c is written, and the value k of the subscript of the chunk c of the extendible chunked array A are written in the SH[c].

Among values of subscripts in the chunk c within the extendible chunked array A, the value of the subscript of the dimension d is k. The values of the subscripts of the other dimensions can be uniquely found from the offset (c - HTd[k]) by repeating division in the same manner as described in 1.3 above, with the use of the coefficient vector of the chunk subarray. The coefficient vector is written in the HTd[k]. In this way, the values of the subscripts in the chunk c within the extendible chunked array A are found, and the tuple of the values thus found is assumed to be <i1, i2, ..., in>.

Next, from the in-chunk offset o, the tuple of the subscripts of the elements corresponding to the record in the chunk c are found, and are assumed to be <j 1, j2, ..., jn>. Each chunk is a hypercube whose sides are the same in length, so that a single coefficient vector is sufficient to be held globally for each extendible chunked array A. Finally, each column value of the record is found from <i1, i2, ..., in> and <j1, j2, ..., jn>. Specifically, a slot of the upper layer of the HTk is determined from each ik (k = 1, ..., n), and the jk-th slot corresponding to the slot thus determined is determined in the lower layer. In the slot, the k-th column value is stored.

2.3.5 Countermeasure against overflow in address space

As described above, C-HORT allows effective use of the address space which indicates the locations of elements in the chunked extendible array. This greatly delays overflow of the address space. However, according to Fig. 22, in cases where the number of dimensions is large, the cardinality of column values becomes small, with the result that overflow of the address space is inevitable.

For avoidance of overflow, the "unique key table" and the "vertical table splitting scheme" are adopted, with the result that new column values can be added without limitation as is the case with the aforementioned history offset implementation scheme. Further, because C-HORT greatly delays overflow of the address space, table splitting is carried out less frequently as compared with the aforementioned conventional history offset implementation scheme.

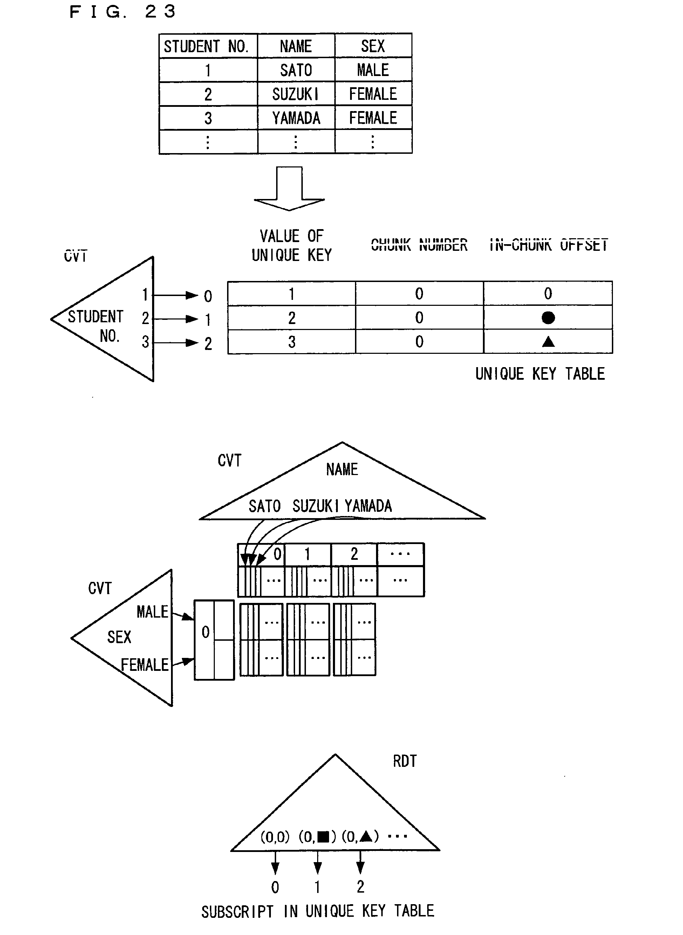

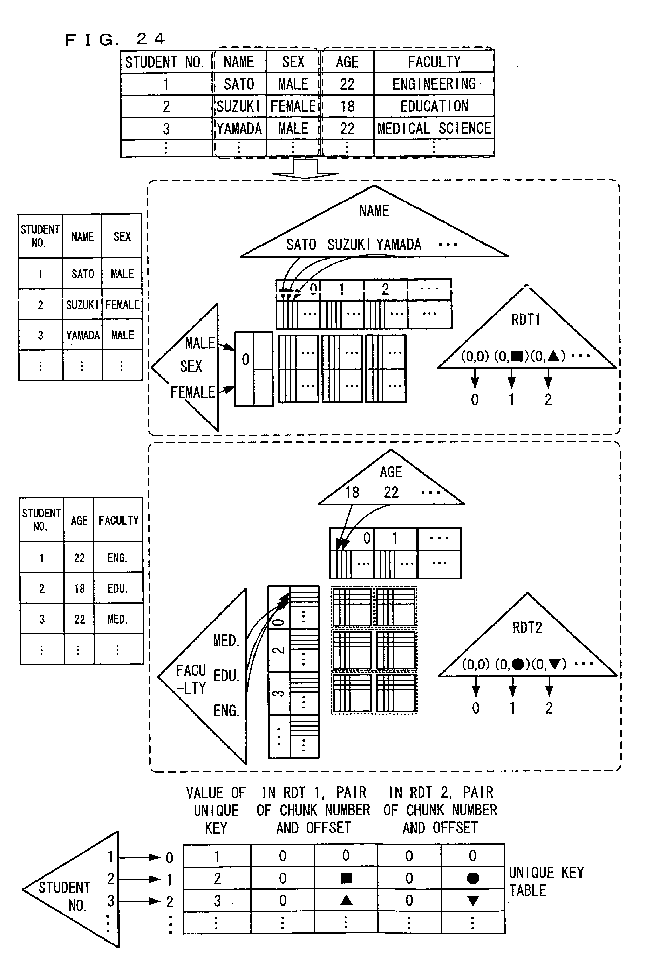

Fig. 23 illustrates an arrangement of a unique key in the C-HORT data structure, and Fig. 24 illustrates how a table is vertically split in the C-HORT data structure.

By arranging the unique key as shown in Fig. 23, in cases where a value of the unique key is specified, it is possible to obtain other non-unique key column values, in accordance with the reconversion described above in 2.3.4, from (chunk number, offset) pairs stored in corresponding slots of the unique key table. On the other hand, in cases where a column value other than the unique key is specified, it is possible to obtain, with a (chunk number, offset) pair in RDT as a key value, a data value, i.e., the slot number in the unique key table in which a target record is stored. Thus, all the column values of the target record can be obtained from the corresponding slots in the same manner.

Further, by vertically splitting the relational table in the manner shown in Fig. 24, all the column values of a target record can be obtained in the same way as described above, although there are more than one (chunk number, offset) pair stored in the unique key table. On this occasion, if column values other than the unique key is specified, only a relevant RDT is searched as is the case with the aforementioned history offset implementation scheme. That is, in this case, other RDTs do not need to be searched.

2.3.6 Advantage and disadvantage of chunking

Described in 2.3.5 is a great advantage of the chunking. Another advantage thereof is to reduce file size and an amount of use of memory. Although the subscript of the chunked array and the in-chunk subscript are required as a data value of each CVT and the size of each CVT is therefore large, information of the chunked subarray such as the history value is not reserved based on an array element as a unit but is reserved based on a chunk as a unit, so that the size thereof is greatly reduced (1 / the size of one side of the chunk). Assuming that the number of dimensions of the array is n, the slot size of the coefficient table needs to be n - 2, so that this is advantageous as compared with the aforementioned history offset implementation scheme. Further, the size of a chunk number-dimension/subscript conversion table, corresponding to the aforementioned history-dimension/subscript conversion table, can be reduced, too. Further, the splitting is carried out less frequently, so that the size of the unique key table can be reduced, too (see Fig. 13). This makes the entire size of the C-HORT data structure smaller than the entire size in the case where the aforementioned history offset implementation scheme is adopted.

Further, the chunking promises improvement in retrieval time. In the aforementioned history offset implementation scheme, upon carrying out record retrieval with a column value specified, there is such a retrieval target column value dependency that: the number of subarrays, each of which is a search target, is changed depending on a retrieval target column value specified in a record retrieval, and retrieval time is therefore not always constant. In contrast, by carrying out the chunking, the number of chunks, each of which is a search target, is constant for each dimension and is smaller than the average of the number of subarrays. Hence, the retrieval time is constant and is shortened usually, with the result that the retrieval target column value dependency is overcome.

Finally, a disadvantage of the chunked history offset implementation scheme lies in that the number of dimensions of the chunks is fixed and the chunked history implementation scheme is not incapable of handling schema evolution. In contrast, the aforementioned history offset implementation scheme is capable of handling, with an advantage of the extendible array, addition of a dimension (new setup of a column in the relational table) without reorganizing the HORT data structure. That is, in the history offset implementation scheme, a new dimension is added in the logical extendible array so as to correspond to a newly set up column. As such, it is possible to handle the schema evolution by merely newly setting up a column in the HORT table so as to deal with the added dimension. However, the chunked history offset implementation scheme requires reorganization of the entire chunked HORT data structure, inclusive of reorganization of the RDT, which is a data entity. This increases processing cost.

3. Extension and application of HORT

HORT is an implementation scheme for a relational table, which is a data expression that is very simple and highly abstract. Generally speaking, not only for application to a database, there are a lot of application data that can be expressed by a relational table or that can be mapped in a relational table. Therefore, HORT is widely usable as an implementation scheme allowing very good time/spatial efficiency for such application data. As an extension and application of HORT requiring an additional data structure for mapping them in the relational table, the description herein proposes (i) an implementation of a complex object used in an object-oriented database and (ii) an implementation for XML document that has been widely used in recent years. Moreover, a way of parallel processing for the HORT data structure is proposed.

3.1 Realization of complex object by HORT data structure

A complex object in an object-oriented database is expressed according to schema (data definition). The complex object is an object having, as an object ID (oid), a reference attribute to other instance objects. A set of such complex objects can be expressed by the HORT data structure.

Assume that a class C has a set of attributes {a1, a2, ..., an}. In this case, the class C is expressed by a relational table T in which columns are a1, a2, ..., an and in which an integer type ID is adopted to uniquely identify a record (instance) of the class C. This ID is afforded by the system upon insertion of the record. The name of a column ai is the attribute name of the ai. In cases where the data type of the attribute ai of the class C is a simple type such as the integer type or the character string type, the column value of the column ai is an attribute value of the attribute ai of the class C. In cases where the ai is the object ID type, which is a reference attribute to other instance objects, a new relational table Ti is constructed by applying recursively the above procedure. Also in this case, the column name is the attribute name of the ai, and the column value thereof is an object ID of the record when the Ti is expressed by the HORT data structure. The object ID is a pair of (i) a table ID for identifying Ti to which the record belongs, and (ii) the record ID in the Ti, i.e., (table ID, record ID) pair. The record ID is thus determined, with the result that the object ID for referencing does not need to be changed even when the columns a1, a2, ..., an of the record to be referred are updated. In cases where the ai is either a set of values of the simple type or a set type of reference attributes to other object, a corresponding set type column is managed separately from other columns as a data structure to be added to the HORT data structure as described below.

The entity of the complex object is expressed by more than one HORT respectively corresponding to individual relational tables in cases where more than one class are assumed, according to the aforementioned definition, to respectively correspond to the relational tables as described above.

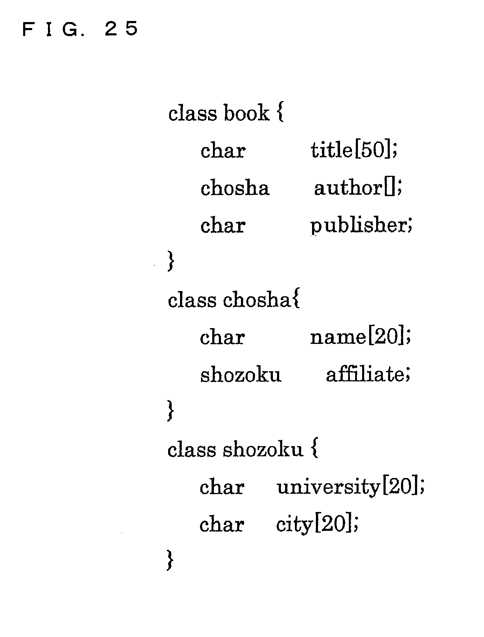

Fig. 25 illustrates a definition example of the complex object. In Fig. 25, a class *book* has an attribute *author*, which is a set of reference attributes for instances of a class *chosha,* and the class *chosha* has an attribute *affiliate,* which is an reference attribute for instances of a class *shozoku.*

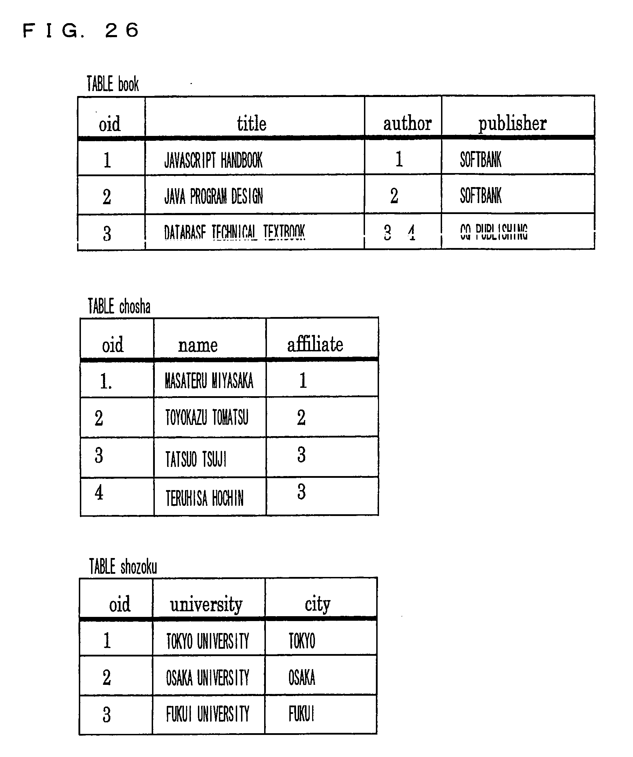

Fig. 26 illustrates a relational table expression of an example of the instances of the complex object. The relational table expression is according to the definition example of Fig. 25. In cases where a book is written by more than one author, the column author of the table *book* is a set of reference attributes to records in the table *chosha*, so that the table *book* is not a normal type relational table. This makes it impossible to implement such a table *book* in accordance with the HORT data structure.

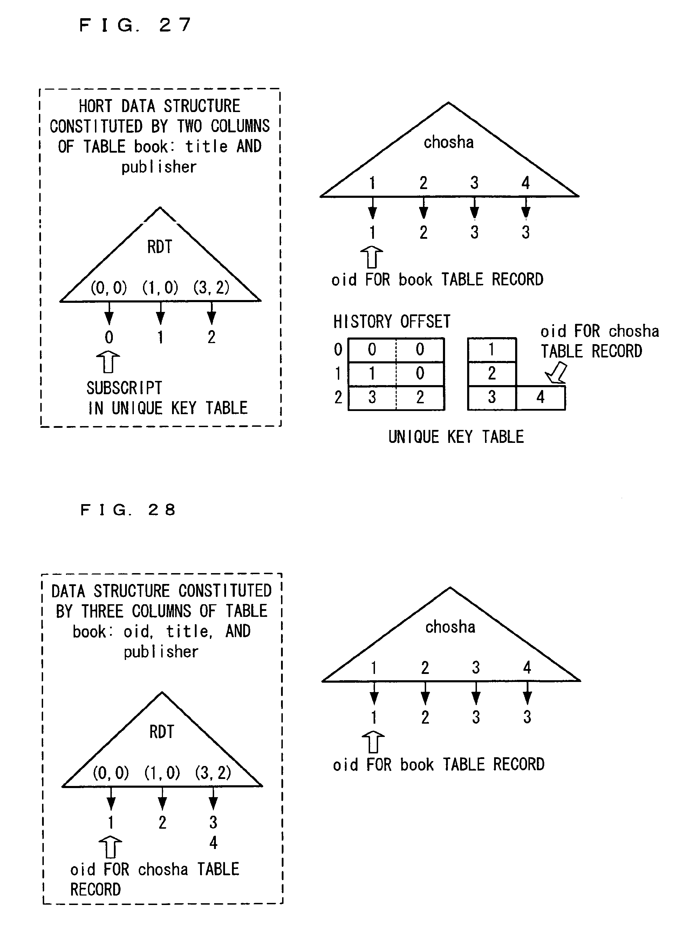

In order to solve this problem, a method of managing the set type column separately from the other columns is proposed. A set of non-set-type columns is implemented in accordance with HORT. According to this method, the table book is implemented as shown in Fig. 27. Specifically, when the oid column value of the table *chosha* to be referred is a key, a B+tree is provided so as to return, as a data value, a set of oid of all the records in the table book making reference to the oid of the table *chosha.* From this B⁺tree, it is possible to get information as to what author has written what book.

Each oid specifying a record of each table is a unique key of the table. According to the HORT implementation scheme described above in 2.1, a unique key table is constructed. The oid of a record of the table book refers to a record of the unique key table. Further, the records in the unique key table thus referred hold a set of *oid* of the column *author.* In other words, the B⁺tree for returning the set of oids, and the set of *oids* in the unique key table make reference to each other. No CVT corresponding to the unique key exists because the key value is an integer value indicating a location of the record in the unique key table and no key/subscript conversion structure is therefore necessary.

In cases where limitation of the size of the history/offset space is not strict, the unique key, the *oid* column, is allowed not to be managed separately and it is possible to construct a HORT data structure including the unique key (Fig. 28). In this case, no unique key table exists.

3.2 Application to XML document

3.2.1 Application to XML document having DTD

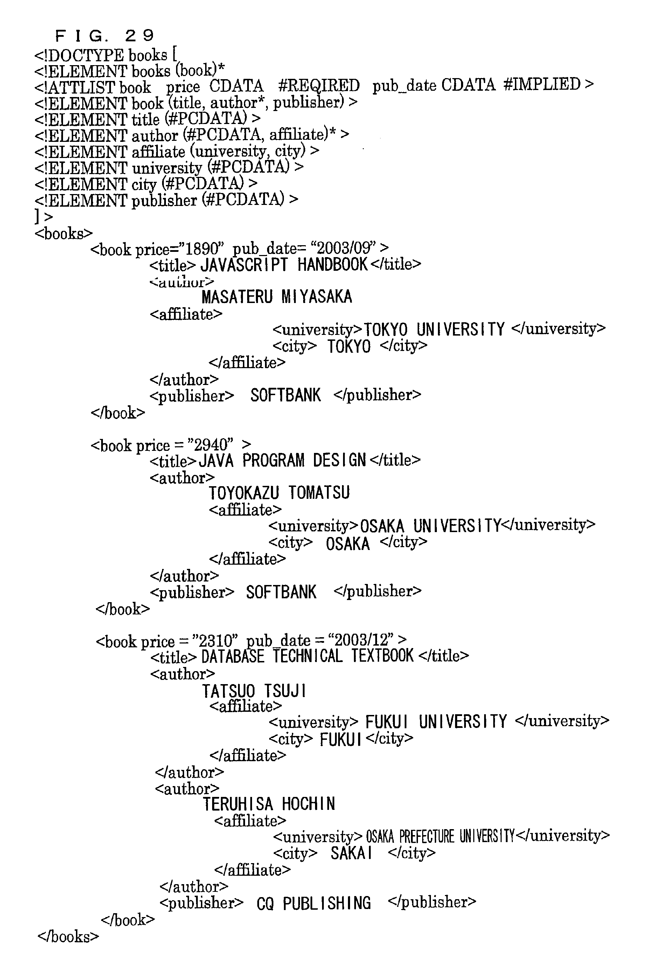

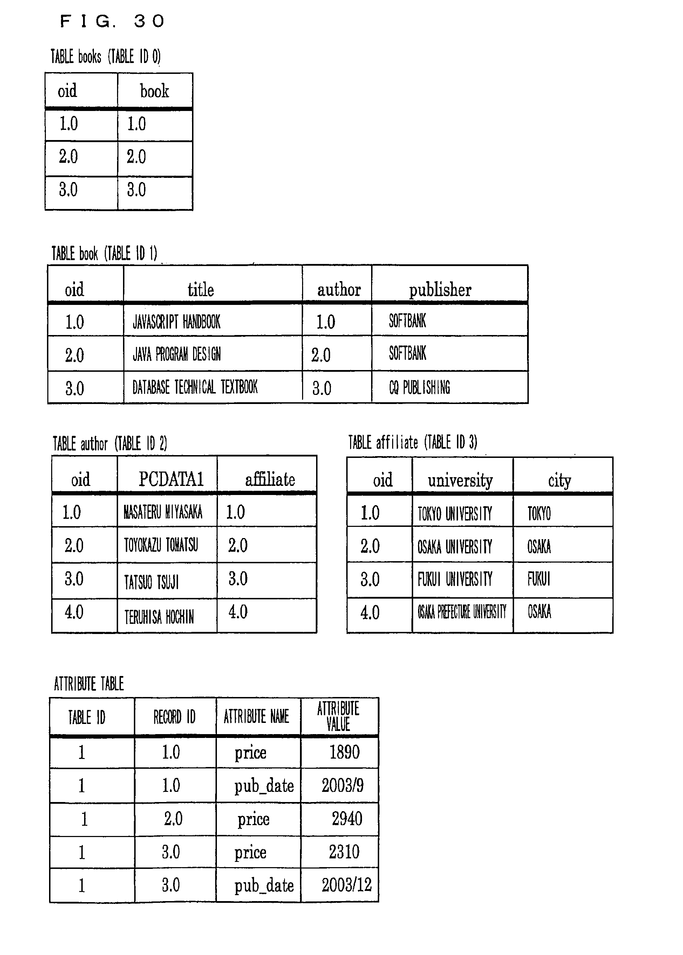

Fig. 29 illustrates an example of an XML document having a DTD (Document Type Definition). Fig. 30 illustrates an expression exhibited by the relational table shown in Fig. 29.

Assume that an ordered set of either tags or PCDATA just below element e of the XML document having the DTD is T = {e1, e2, ..., en}. The T is expressed by a relational table in which columns are e1, e2, ..., en and are IDs for uniquely identifying records (instances) of the T. Each ID is afforded by the system upon insertion of a record. An column ei is a tag element. When the tag element is made up of only one PCDATA, the ei is a column of the T and the name of the column is the tag name of the ei. The column value thereof is the PCDATA thereof. When the element ei is the i-th PCDATA, the ei is a column of the T, and the name of the column is PCDATAi. The column value thereof is the PCDATA thereof. When the ei is a tag element and includes more than one element, a new relational table Ti is constructed for the ei by applying the above procedure recursively. In this case, the column name is the tag name of the ei. The column value thereof is the record's object ID (oid) when the Ti is expressed by the HORT data structure. This object ID is a pair of (i) a table ID for identifying Ti to which the record belongs and (ii) a record ID of the record in the Ti, i.e., (table ID, record ID) pair. Assume that the data type of the record ID is a floating point number. See Fig. 30.

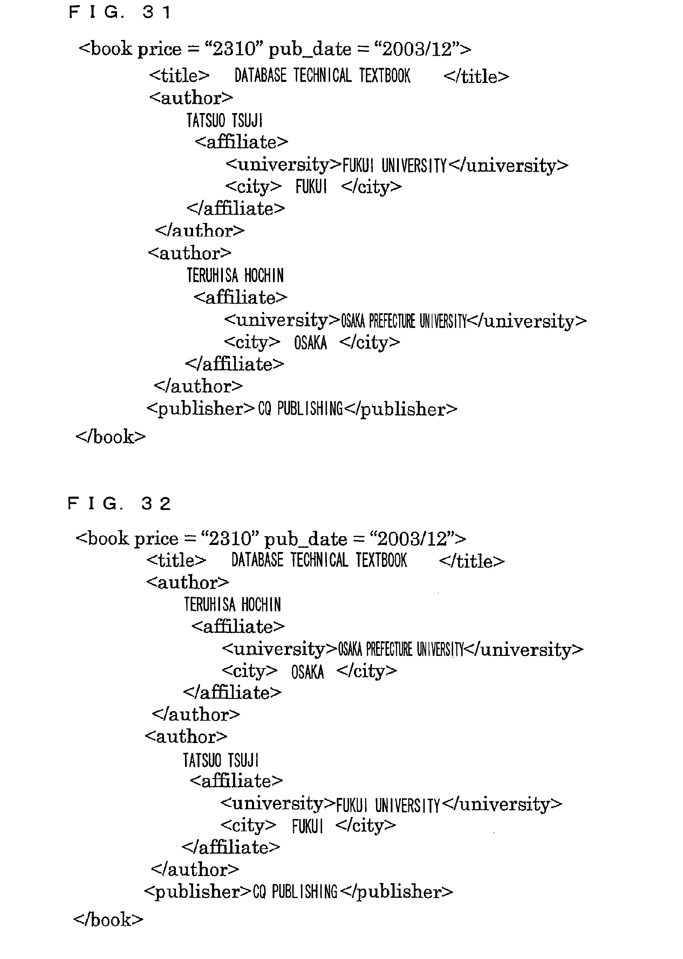

The record ID is thus determined, with the result that the object ID for referencing does not need to be changed even when the columns a1, a2, ..., an of the record to be referred are updated. Further, the record ID is the floating point number due to a characteristic of XML document. That is, in the XML document, the order of a document's lines in which tags appear is not neglectable. For example, an XML document in Fig. 31 is different, as XML document, from an XML document in Fig. 32.

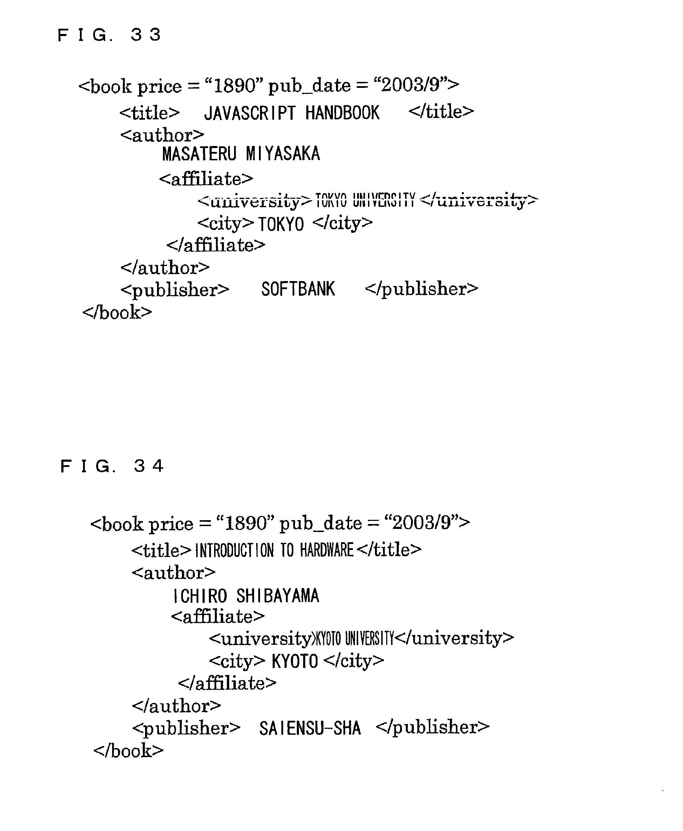

Therefore, it is preferable that addition of unique ID to a record, and expression of order of lines appearing in the document be expressed at the same time by brief information. For example, consider a case where an XML document shown in Fig. 34 is added just below a part that is shown in Fig. 29 and that corresponds to an XML document shown in Fig. 33. Now, see Fig. 30 for its relational table expression. Added to a table books in the relational table expression in this case is:

record (1.5 4.0)

Further, the followings are respectively added to the tables book, *author,* and *affiliate:*

record (4.0 INTRODUCTION TO HARDWARE SAIENSU-SHA)
record (5.0 ICHIRO SHIBAYAMA 5.0)
record (5.0 KYOTO UNIVERSITY KYOTO)

By taking such correspondence with the relational table into consideration, the XML document is expressed by the complex object described above in 3.1.1. The XML document is based on HORT, so that the XML document exhibits a high performance in terms of memory area size and access speed. Generally, the XML document consumes much memory area for storage of tags, so that an appropriate decompressing method has been demanded. The use of CVTs and the compression using RDT in HORT allow high utilization efficiency of the memory areas.

Further, attributes and attribute values defined in tags of elements in the entire document are expressed by only one table (see "attribute table" in Fig. 30). In this case, the tags of the elements need to be identified globally, so that both the table ID and the record ID are given as columns respectively.

3.3.2 Implementation considering node meta information of XML tree

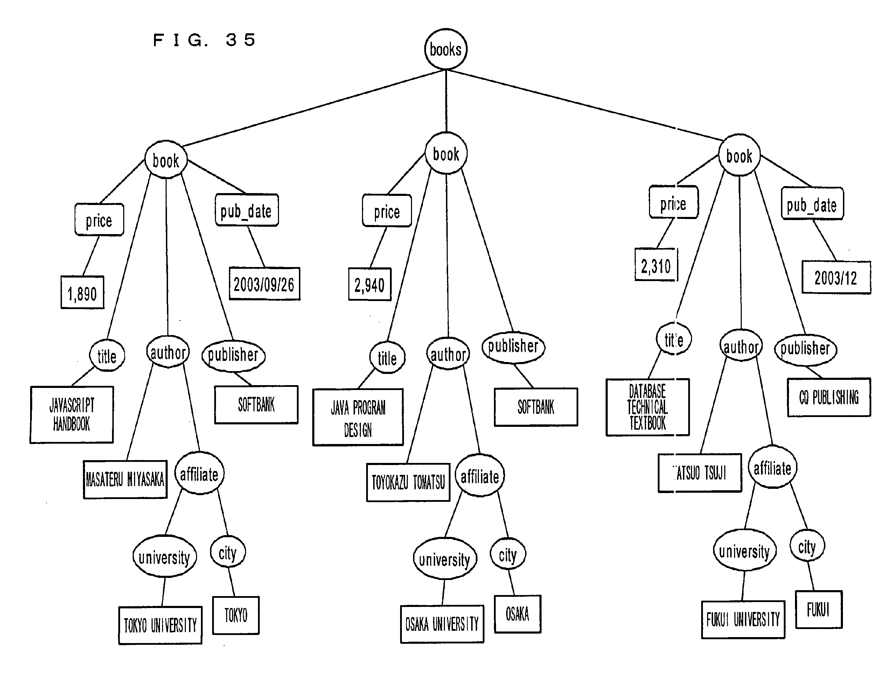

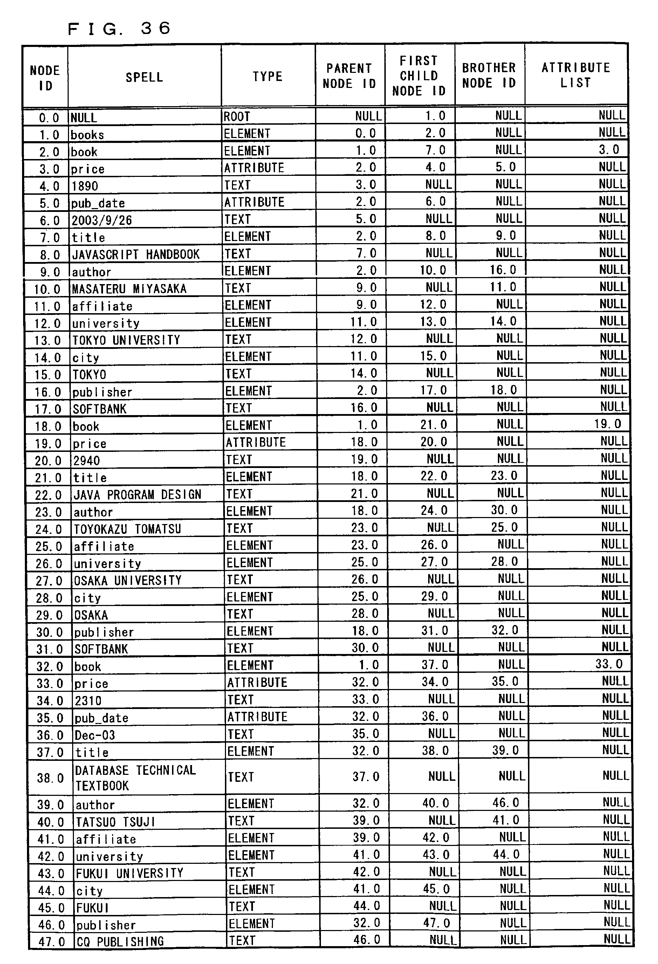

Fig. 35 illustrates a tree graph expression of the XML document shown in Fig. 29. Fig. 36 illustrates a relational table expression in which meta information of nodes of the tree graph of Fig. 35 are stored in the table columns.

This table has six columns. A column "node ID" indicates ID indicating the location of a node in the document as with the case described above in 3.2.1. A column "type" indicates type, which is element, attribute, and PCDATA. A column "spell" indicates the name of an element when a node is the element, indicates the name of an attribute when the node is the attribute, and indicates a character string value when the node is PCDATA. A column "parent node ID" indicates the ID of a parent node. A column "first child node ID" indicates the ID of the first child node of child nodes that are connected via a list in order of appearance in the document. A column "brother node ID" indicates the ID of a brother node appearing just after the current child node. A column "attribute node ID" is the ID of an attribute node accompanied with the element. A set of attributes of one element is connected via a list in order of appearance.

Unlike the method described above in 3.2.1, in the aforementioned method of converting the XML document into the relational table, the DTD does not necessarily need to be provided to the original XML document. In other words, the target XML document may be semi-structured data in which only nesting among elements are consistent (well formed).

The relational table storing the meta information of the nodes in the tree graph expression of the XML document described above is implemented by HORT. The meta information includes information concerning the type of node, connection information of the graph, and the like. The storage of the meta information causes increase of memory area, but allows implementation with only one table. Further, the use of the meta information makes it possible to briefly express various operation requests requiring structure retrieval for the XML document. By implementing the relational table by using HORT, it is possible to carry out fast structure retrieval. Further, it is possible to easily update the HORT data structure in response to update of content of the document and update of the structure thereof.

3.3 Parallelization of HORT

As apparent from Fig. 45, in the extendible array model using index array, a set of subarrays of the extendible array is classified based on dimensions. That is, the subarrays are identified by history values, thus being regarded that the subarrays belong to the dimensions, specified by the history values, of the HORT table. The RDT above is one B+tree storing (history, offset) pairs of all the records of the relational table as key values; however, herein, these key values are classified based on the dimensions and are handled by B+tree respectively corresponding to the dimensions. Accordingly, as is the case with the CVTs, RDTs are required as many as the number of columns in the relational table. In cases where only one RDT is used, exclusive control (locking) needs to be done over the entire RDT upon multi-transaction, thereby inhibiting parallel processing. In contrast, with this method, in cases where, e.g., processors are allocated based on the dimensions so as to control the RDTs corresponding to the dimensions respectively, exclusive control is carried out with respect to only an RDT corresponding to a target dimension. This restrains inhibition of parallel processing. Note that the other HORT data structure such as the CVTs and the HORT table can be used without any change.

4. Database device

Next, with reference to Fig. 1, the following explains an example of a structure of a database device that realizes the aforementioned storage and operation method of a relational table. Fig. 1 is a functional block diagram schematically illustrating a structure of a database device 1 according to the present embodiment of the present invention.

As shown in Fig. 1, the database device 1 includes a data storage section (database memory section) 10, an auxiliary table section (database memory section) 20, a table managing section 30, and an input/output section 40.

The data storage section 10, provided in a disk device 2, stores CVTs (first B$^+$tree data) 11, an RDT (second B$^+$tree data; element location B$^+$tree data) 12, a unique key table 13, and auxiliary tables (history table 21, coefficient table 22, record number table 23). The CVTs 11 are provided so as to respectively correspond to columns of the relational table, and each of the CVTs 11 is a B$^+$tree for converting a column value into the subscript of an extendible array. The RDT 12 is B$^+$tree storing, as a key value, a 2-tuple expression made up of (i) a history value (section location information) of an element of the extendible array corresponding to each record of the relational table and (ii) an offset (subarray offset, in-section offset) thereof. That is, in cases where the relational table is made up of n columns, the data storage section 10 stores n+1 B$^+$tree data made up of n CVTs (key-subscript ConVersion Tree) and one RDT (Real Data Tree). A database is constituted by one or more relational tables, so that there exist one or more sets of such n+ 1 B+tree.

The auxiliary table section 20 holds the history table 21, the coefficient table 22, and the record number table 23 on a main memory 3.

Note that the CVTs 11, the RDT 12, the unique key table 13, and the auxiliary tables (the history table 21, the coefficient table 22, the record number table 23) are stored in the data storage section 10. The data storage section 10 is provided in the disk device 2 such as a hard disk. The auxiliary tables, i.e., the history table 21, the coefficient table 22, and the record number table 23 are read out from the disk device 2 upon start of operation of the database device 1, and are held by the auxiliary table section 20 on the main memory 3. In cases where a change is made during the operation of the database, each of the auxiliary tables is rewritten in its corresponding location of the data storage section 10 provided in the disk device 2.

The history table 21 is a one-dimensional array indicating a chronological sequence of array extension. The coefficient table 22 stores, for each subarray, a coefficient vector made up of a linear function for calculating an offset of an element in the subarray. The record number table 23 stores, for each subscript, the number of records having column values corresponding to the subscript. The unique key table 13 is a relational table storing (i) a column value of a unique key that is a column that never has a duplicate column value and (ii) a (history, offset) pair obtained from the HORT data structure. Each of the (history, offset) pairs is inserted into the RDT 12 as a key value. Inserted thereinto as a data value is each subscript of the unique key table's slots corresponding to the column values of the unique key.

The table managing section 30 includes a record retrieving section (record retrieving means) 31, a record inserting section (record inserting means) 32, a record deleting section (record deleting means) 33, a key value/column value reconverting section (key value/column value reconverting means) 34, a unique key managing section (unique key managing means) 35, and a vertical splitting managing section (vertical splitting managing means) 36.

The record retrieving section 31 carries out a process of retrieving a record. The record inserting section 32 carries out a process of inserting a record. The vertical splitting managing section 36 splits the table into two tables so as to make the history/offset space smaller, when the history/offset space overflows due to insertion of a new column value. The record deleting section 33 carries out a process of deleting a record. Especially, the record inserting section 32, the record deleting section 33, and the vertical splitting managing section 36 carry out maintenance necessary for the CVTs 11, the RDT 12, the history table 21, the coefficient table 22, the record number table 23, and the unique key table 13. Each of the record retrieving section 31, the record inserting section 32, and the record deleting section 33 also carries out (i) a process with respect to a record having a unique key and (ii) a vertically split record.

Here, the record inserting section 32 registers the column value in a CVT 11 and extends the logical extendible array, when the record inserting section 32 inserts a record having a new column value. Then, the record inserting section 32 registers, in the history table 21, a history value indicating a chronological order of array extension, and registers, in the coefficient table 22, a coefficient of a linear function for calculating the offset of an element of the subarray. Then, the record inserting section 32 registers "1" as an initial value in the record number table 23, and inserts the 2-tuple expression of the history value and the offset of the element of the logical extendible array into the RDT as a key value.

In response to a retrieval request from a user via the input/output section 40, the record retrieving section 31 retrieves a set of key values, each of which is a (history, offset) pair. However, each of the key values is an internal expression for a record in this database, so that the user cannot understand it. Therefore, the key value/column value reconverting section 34 converts the key value into a record made up of column values, so as to present the retrieval result to the user such that the user can understand it. Specifically, in response to acquisition of the retrieval request via the input/output section 40, the key value/column value reconverting section 34 retrieves from the RDT 12 the 2-tuples, the history values and the offsets, corresponding to the retrieval request. Then, the key value/column value reconverting section 34 converts the 2-tuples, the history values and the offsets, into subscripts in the dimensions of the logical extendible array. In accordance with the subscripts thus converted, the key value/column value reconverting section 34 acquires, for the dimensions, either the column values or pointers for memory areas in which the column values are stored. The column values or the pointers are stored in the history table 21, the coefficient table 22, and the record number table 23 in advance. Then, the column values thus obtained for the dimensions in accordance with the array subscript values are arranged in order of the dimensions, thereby obtaining a record.

The unique key managing section 35 manages the unique key table 13. Especially, the unique key managing section 35 carries out maintenance of the unique key table 13 and the RDT 12 as required due to insertion/deletion of a record having a unique key. Further, in accordance with the unique key table 13, the unique key managing section 35 manages the relation between (i) a unique key and (ii) the values of columns other than the unique key.

The vertical splitting section 36 splits a relational table into two groups of columns, when insertion of a record would cause overflow of the history/offset space. For each of the relational tables thus split, a logical extendible array is constructed, and (history, offset) pairs of the relational tables are stored in respective RDTs 12 of the split rational tables. On this occasion, the unique key table 13 is generated so as to maintain the relation between the two split relational tables, and is used. Specifically, the unique key table 13 stores (i) one or more unique key values that the original table has, and (ii) the (history, offset) pairs stored in the RDTs 12 corresponding to all the split relational tables. In order to make the next splitting timings the same in the two split tables as much as possible, it is preferable to check the cardinality of column values of columns and divide the columns substantially evenly such that the cardinality of column values in one split table is substantially equal to the cardinality in the other split table.

Note that the table managing section 30 carries out general management over the database. Not all the function blocks of the table managing section 30 are explained herein unlike the record retrieving section 31 or the like, but the table managing section 30 carries out processes associated with the database management, such as a process concerning a column having a categorized attribute. Here, the "column having a categorized attribute" refers to such a column that the maximum number of kinds of column value is limited. Examples thereof include "sex", "blood type", "company's department to which one belongs", and the like. Such a column having a categorized attribute is never extended up to a size more than a predictable size. Unlike the normal extended dimension, in cases where the number of categorized attribute values is small, no CVT may be constructed but only the HORT table may be implemented on the main memory in accordance with the user's designation, and the categorized attribute values may be sequentially retrieved. This is because the dimensional size is never extended up to the size more than the predetermined size. '

The input/output section 40 is an interface for operating the database device 1. That is, the input/output section 40 is a user interface via which a user directly inputs a processing request to the database device 1, and is also a communication interface for controlling the transmission/reception via a network.

In the case of the chunked history/offset scheme as described above in Section 2.3, the above database device 1 is arranged as follows.

The CVTs (first B+tree data) 11 are provided for the column values of the relational table respectively, and each of the CVTs 11 is a B+tree for converting the column value into a 2-tuple expression of (i) a subscript indicating a location of chunk subarray information of the chunked extendible array and (ii) a subscript in the chunk.

The RDT (second B+tree data, element location B+tree data) 12 is B+tree data registering, as a key value, a 2-tuple expression of (i) the chunk number (section location information) of a chunk to which an element of a chunked extendible array corresponding to each record of the relational table belongs and (ii) the in-chunk offset (in-section offset).

The history table 21 registers a chronological sequence of chunked array extension as chunk subarray information.

The coefficient table 22 registers, for each chunk subarray, a coefficient vector made up of a coefficient of a linear function for calculating the number of a chunk in the chunk subarray.

The record number table 23 registers the number of all the records having the corresponding column values.

In addition, as information concerning the column values, the data storage section 10 stores a column value table (not shown) registering either (i) column values respectively corresponding the subscripts of the extendible array or (ii) pointers for memory areas in which the column values respectively corresponding the subscripts of the extendible array are stored. As is the case with the CVTs 1 1, the RDT 12, the unique key table 13, and the auxiliary tables (history table 21, coefficient table 22, record number table 23), the column value table is read out from the disk device 20 upon start of operation of the database device 1, and is held by the auxiliary table section 20 on the main memory 3. In cases where a change is made during the operation of the database, the column value table is rewritten in its corresponding location of the data storage section 10 in the disk device 2. Note that the column value table is encompassed in the group of auxiliary table.

Further, the record retrieving section (record retrieving means) 32 retrieves, in response to a retrieval request, from the RDT 12, a set of 2-tuples of the chunk numbers and the in-chunk offsets corresponding to the retrieval request.

Further, the record inserting section (record inserting means) 32 registers the column value in a CVT 11, and extends the chunked extendible array, when the record inserting section 32 inserts a record having a new column value. Then, the record inserting section 32 registers the history value in the history value table 21, and registers the coefficient in the coefficient table 22. The record inserting section 32 registers an initial value in the record number table 23, and inserts, as a key value into the RDT 12, the 2-tuple expression of the chunk number and the offset, to each of which an element of the extendible array belongs.

Further, the record deleting section (record deleting means) 33 deletes from the RDT 12 a 2-tuple of the chunk number and the in-chunk offset retrieved by the record retrieving section 31, and subtracts 1 from the number of records in the record number table 23. When the number of records is 0 as a result of the subtraction, the history value and the coefficient are deleted from the history table 21 and the coefficient table 22, respectively.

Further, the key value/column value reconverting section (key value/column value reconverting means) 34 converts the 2-tuple of the chunk number and the in-chunk offset retrieved by the record retrieving section 31, into subscripts for the dimensions of the extendible array. In accordance with the subscripts, the key value/column value reconverting section 34 acquires either the column value or a pointer for the memory area in which the column value is stored. The column value or the pointer is stored in the column value table in advance.

Further, the unique key table 13 registers (i) a unique key that is a column that never has a duplicate column value, and (ii) a two-tuple expression of the chunk number identifying a chunk to which an element of a chunked extendible array belongs and its in-chunk offset.

Moreover, in accordance with the unique key table 13, the unique key managing section (unique key managing means) 35 manages a relation between the unique key and the value of columns other than the unique key.

Further, the vertical splitting managing section (vertical splitting managing means) 36 splits the relational table into two sets of columns, and constructs a chunked extendible array for each of the relational tables thus split. The vertical splitting managing section 36 generates the RDT 12 registering, for each relational table, the 2-tuple expression of the chunk number and the in-chunk offset. Moreover, the vertical splitting managing section 36 generates the unique key table 13 registering (i) the values of one or more unique key values that the original relational table has and (ii) the 2-tuple expressions of the chunk numbers and the in-chunk offsets each stored in the RDTs 12 that respectively correspond to the split relational tables.

Finally, the database device 1 can be constructed based on a versatile computer such as a workstation or a personal computer. Therefore, the respective blocks of the database device 1, especially the table managing section 30, can be realized by software with the use of a CPU as follows. Note that the database device 1 can also be constructed as a system in which the functions of the database device 1 are divided among more than one device.

That is, the database device 1 is made up of (i) a CPU (central processing unit) for executing instructions of a control program realizing each function; (ii) a secondary memory device (magnetic disk device) storing the above program and database data; (iii) a RAM (random access memory) for expanding the program and the database data; and the like. Therefore, the object of the present invention is achieved by: (i) providing, in the database device 1, a storage medium which stores a computer-readable program code (executable program, intermediate code program, a source program) of the control program of the table managing section 30 that is software for realizing the function, and (ii) causing a computer (CPU, or MPU) to read out and execute the program code stored in the storage medium.

Examples of the storage medium are: tapes such as a magnetic tape and a cassette tape; magnetic disks such as a floppy® disk and a hard disk; optical disks such as a CD-ROM (compact disk read only memory), a magnetic optical disk (MO), a mini disk (MD), a digital video disk (DVD), and a CD-Recordable (CD-R); and the like. Further, the storage medium may be: a card such as an IC card (inclusive of a memory card) or an optical card; or a semiconductor memory such as a mask ROM, an EPROM (electrically programmable read only memory), EEPROM (electrically erasable programmable read only memory), or a flash ROM.

Further, the database device 1 may be so arranged as to be connectable to a communication network, and the program code may be supplied to the database device 1 via the network. The communication network is not particularly limited. Specific examples thereof are: the Internet, intranet, extranet, LAN (local area network), ISDN (integrated services digital network), VAN (value added network), CATV (cable TV) communication network, virtual private network, telephone network, mobile communication network, satellite communication network, and the like. Further, a transmission medium constituting the communication network is not particularly limited. Specific examples thereof are: (i) a wired channel using an IEEE1394, a USB (universal serial bus), a power-line communication, a cable TV line, a telephone line, a ADSL line, or the like; or (ii) a wireless channel using IrDA, infrared rays used for a remote controller, Bluetooth®, IEEE802.11, HDR (High Data Rate), a mobile phone network, a satellite connection, a terrestrial digital network, or the like. Note that the present invention can be realized by a form of a computer data signal embedded in a carrier wave realized by electronic transmission of the program code.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

5. Effectiveness of the present invention

(1) Difference from conventional technique

The present invention is based on the concept of the "extendible array", which is a conventional technique. This concept has been explained in [Base Art] of BEST

MODE FOR CARRYING OUT THE INVENTION.

Conventionally, as is the case with the normal fixed size array, the extendible array is supposed to be handled as a data structure expanded and operated on the main memory. That is, all the elements in subarrays of the extendible array are effective elements, and each of the elements occupies the main memory with its size. Assume that the dimensions of each of the subarrays have sizes [s1, s2, ..., sn] and one element has a size of e. In this case, a contiguous memory area having a size of s1s2... sne is inevitably occupied. In the present invention, this concept of the extendible array is used to express a relational table.

Assume that: such a relational table T is made up of n columns c1, c2, ..., cn, the number (cardinality) of values of a column $c_i$ is $k_i$, and each array element has a size of e. If the relational table were expressed by the extendible array as it is, at least a size of k1k2...kne would be required. For example, when n =10, ci = 10 (i = 1, ..., 10), and e = 4 (byte), a memory area corresponding to a memory space of $10^{10}$ records, i.e., $10^{10}$ x 4 = 40 Gbyte is required.

However, it is so rare that the number of records in T is $10^{10}$ (all the combinations of column ci (i = 1, ..., 10) exist as records). When n is large, the number of records is almost always ignorable as compared with $10^{10}$. For determining the address of an element by calculating the addressing function of the expression (1) described in [Base Art], the memory area of 40 Gbyte needs to be reserved and be allocated to the records that do not actually exist. This makes it impossible to physically store them as a database not only in the main memory but also in the secondary storage. Even if it is possible, efficiency is very bad. As such, the relational table storing the records in this way is not for practical use.

In view of the above, the present invention proposes (i) the data structure, by which only existing records are efficiently stored and by which a record is retrieved much faster as compared with the conventional relational table implementation, and (ii) the database device based on the data structure. Specifically, paid attention in the present invention is that one history value corresponds to one subarray. In view of this, it is proposed that an array element expressed by a tuple I of subscripts is expressed by a 2-tuple <h, o>, where h indicates the history value of a subarray to which the array element belongs and o indicates its offset in the subarray. Such an addressing method for an array element has not been proposed before. According to this method, it is possible to always briefly express an address as a 2-tuple even when the number n of dimensions is large (the number of columns is large). This minimizes consumption of the memory area, irrespective of n.

Assume that a set of records in the relational table expressed by the HORT data structure is R = {r1, r2, ..., rm}. In this case, the 2-tuple expression <hi, oi> of the history value and the offset of an extendible array element corresponding to a record $r_i \in R(i = 1, ..., m)$ is stored in the RDT as a key value. A key value expresses a record itself in the relational table. The key values of only the records existing in the relational table R are registered in the RDT. The RDT is implemented by B⁺tree, so that a retrieval of a key value is fast. Moreover, by tracking a sequence set of the B⁺tree, a range retrieval of a key value is much faster as compared with the case of the conventional relational table.

Note that the aforementioned contiguous memory area for the subarrays of the extendible array is not actually reserved. Thus, the extendible array in which the key values are placed merely exists logically, and a contiguous memory area having an entity is not actually required unlike the conventional extendible array. In this respect, the extendible array in the present invention is hereinafter referred to as "logical extendible array".

A significant problem for actual use thereof lies in that: although it is not necessary to actually reserve a memory area upon using the aforementioned logical extendible array, a massive logical memory space is required as described above. This memory space is $2^a$, where a indicates an address length of a computer used herein. Therefore, it is impossible to handle an address (offset value) exceeding this size. No conventional researches point out this matter, so that no solution is provided. For solution to this matter, the present invention proposes the scheme of vertically splitting the relational table (see 2.2 in BEST MODE FOR CARRYING OUT THE INVENTION). This is one of important points of the present invention. Further, this scheme is based on the unique key table proposed in 2.1 of BEST MODE FOR CARRYING OUT THE INVENTION. The use of this vertical splitting scheme makes it possible to express a large-scale table by way of the HORT data structure expression. Retrieval speed never slows down when this way of expression is adopted.

(2) As to performance of the database device of the present invention

In order to check performance of the database device of the present invention, measurement was carried out with respect to a system actually constructed as a prototype in accordance with the normal HORT, not the C-HORT. For comparison, Postgres database management system (version 7.2.1) was used which is widely distributed free software. The number of records in the relational table was one million in each of the following cases (a), (b), and (c). The "duplicate factor of column values" was found by "dividing the total number of the records (one million) by the number of the cardinality of the column values", i.e., was the number of records having the same column values. The duplicate factor of the column values is assumed to be the same in all the columns apart from the unique key column. According to below-described results I and II of the measurement, it was found that the secondary storage size and the retrieval speed in the above cases were much superior to the Postgres system, apart from the result concerning the secondary storage size obtained in cases where the relational table splitting was carried out and the column length was short.

I. Case of no unique key and no vertical splitting

Measurements were carried out for the following two cases with the duplicate factor of the column values changed: (i) a case where the data type of every column is character string (20 byte length) and (ii) a case where the data type thereof is integer (4 byte length). What were measured were (i) time taken to search all the records each having, as a column value, a value of a column from the set of the column values, (ii) entire secondary storage size required to store the relational table, and (iii) the size of the RDT in the secondary storage size in (ii). Note that the retrieval time was measured for each column so as to check dimension dependency.

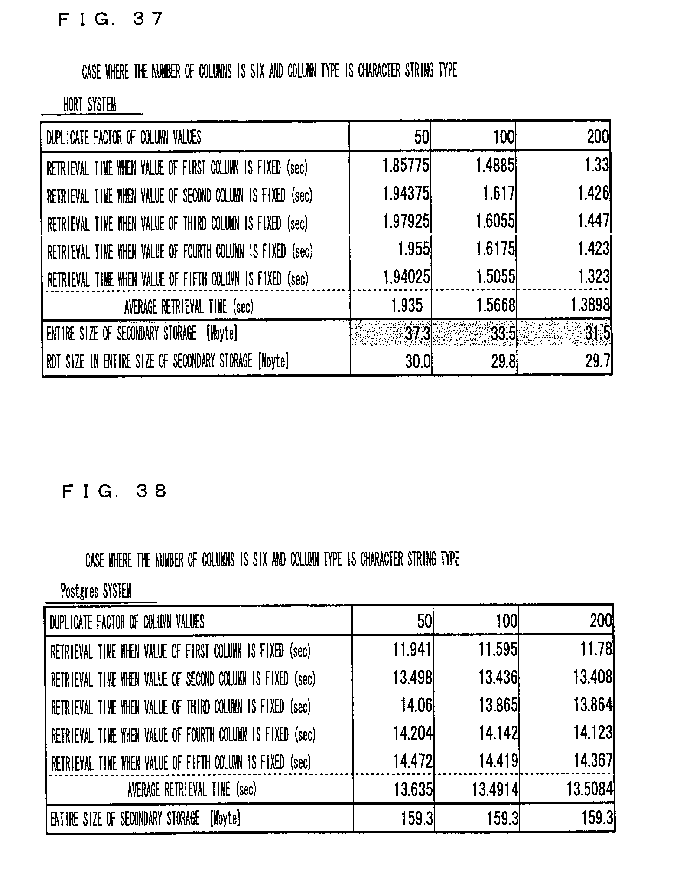

(a) Case where the number of columns was six and type of the column was character string type
Fig. 37 illustrates a measurement result of the HORT system in the case where the number of columns is six and type of the columns is character string type. Fig. 38 illustrates a measurement result of the Postgres system in cases where the number of columns is six and a type of the columns is character string type.
According to the measurement results shown in Fig. 37 and Fig. 38, it was found that the entire secondary storage size required to store the relational table in the HORT system was approximately 21% to approximately 23% of that in the Postgres system, and that the retrieval time in the HORT system was approximately 10% to approximately 14% of that in the Postgres system. In the HORT system, both the entire secondary storage size and the retrieval time are improved as the duplicate factor increases.
(b) Case where the number of columns was six and a type of the column was integer type (4 byte length)

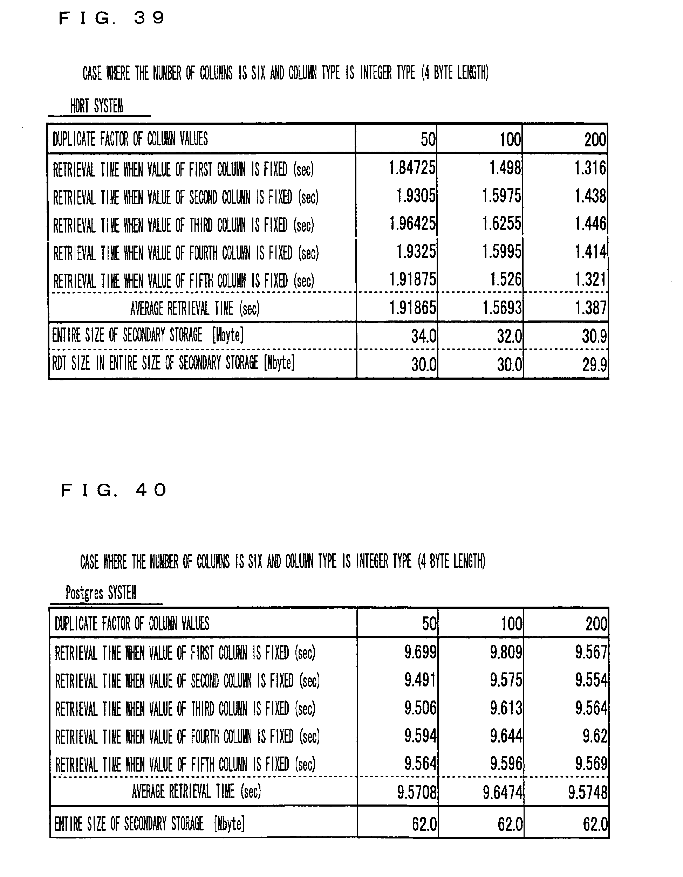

Fig. 39 illustrates a measurement result of the HORT system in the case where the number of columns is six and type of the column is integer type (4 byte length). Fig. 40 illustrates a measurement result of the Postgres system in the case where the number of columns is six and a type of the column is integer type (4 byte length).

According to the measurement results shown in Fig. 39 and Fig. 40, it was found that the entire secondary storage size required to store the relational table in the HORT system was approximately 50% to approximately 55% of that in the Postgres system, and that the retrieval time in the HORT system was in the range from approximately 14% to approximately 20% of the retrieval time in the Postgres system. In the HORT system, both the entire secondary storage size and the retrieval time are improved as the duplicate factor increases. Moreover, as the size of the column is larger, the HORT system is superior to the Postgres system in terms of the entire secondary storage size and the retrieval time. As such, the case (a) is superior to the case (b).

II. Comparison between a case where there was a unique key column but no vertical splitting was carried out and a case where there was a unique key and the vertical splitting was carried out

Measurement was carried out with respect to a relational table made up of ten columns. Only the first column was an integer type unique key column, and the other nine columns had a duplicate factor of 10000. The first column was a unique key, so that a unique key table was formed on the secondary storage and a logical extendible array was constructed for the other nine columns. A reason why the duplicate factor was 10000 lies in that: the address space of a 64 bit computer is $2^{64}$, and the cardinality of the column values was therefore 100, which is a number close to the maximum x satisfying $x^9 \leq 2^{64}$. For this reason, the duplicate factor of the columns was 10000.
The measurement was carried out for the following three cases:

(i) a case where no vertical splitting was carried out in the HORT system (HORT);

(ii) a case where the vertical splitting was carried out in the HORT system (HORT_SPLIT); and

(iii) a case of the Postgres system (POST).

(a) Case where the number of columns is nine and data type of the columns is character string type (20 byte length)

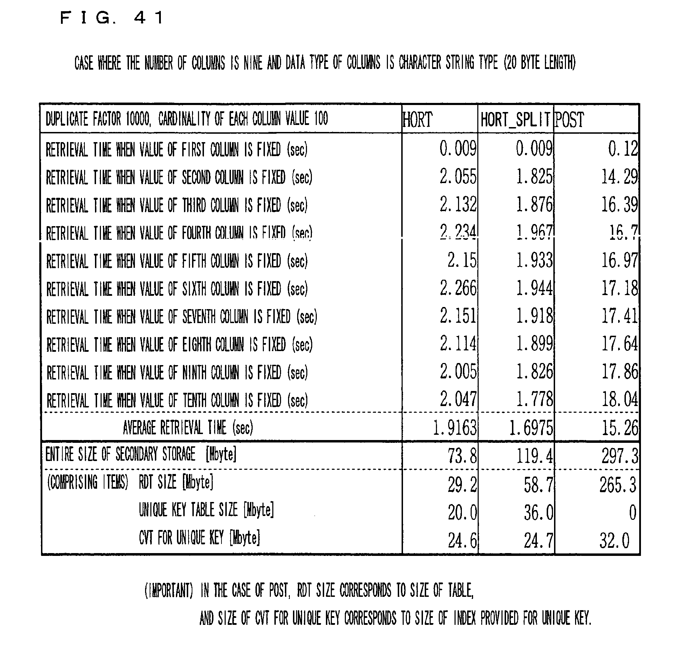

Fig. 41 illustrates measurement results in cases where the number of columns is nine and data type of the columns is character string type (20 byte length).
According to the measurement results shown in Fig. 41, a ratio of the entire secondary storage size in the case of HORT to that in the case of POST was found to be 24.8 %, and a ratio of the entire secondary storage size in the case of HORT_SPLIT to that in the case of POST was found to be 40.2 %. Further, a ratio of an average retrieval time in the case of HORT to that in the case of POST was found to be 12.6 %, and a ratio of an average retrieval time in the case of HORT_SPLIT to that in the case of POST was found to be 11.1 %. In each of the cases, the retrieval time was extremely fast when the value of the first column was fixed. This is because the first column was a unique key column and therefore there is only one retrieval target. In the case of POST, an index is provided.
In the case of vertically splitting the table (in the case of HORT_SPLIT), the unique key table is required and the number of RDTs is increased, with the result that the entire secondary storage size was larger than that in the case where no vertical splitting was carried out (in the case of HORT). However, adoption of such a data structure allows faster retrieval speed.
(b) Case where the number of columns is nine and data type of the columns is integer type (4 byte length)

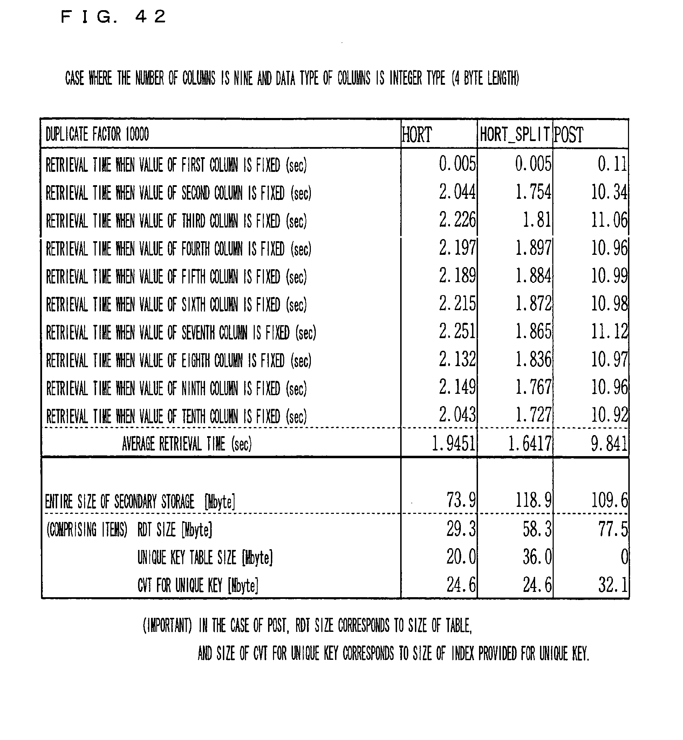

Fig. 42 illustrates measurement results in cases where the number of columns is nine and data type of the columns is integer type (4 byte length).

According to the measurement results shown in Fig. 42, a ratio of the entire secondary storage size in the case of HORT to that in the case of POST was found to be 67.4 %, and a ratio of the entire secondary storage size in the case of HORT_SPLIT to that in the case of POST was found to be 108 %. Further, a ratio of an average retrieval time in the case of HORT to that in the case of POST was found to be 19.8 %, and a ratio of an average retrieval time in the case of HORT_SPLIT to that in the case of POST was found to be 16.7 %. In each of the cases, the retrieval time was extremely fast when the value of the first column was fixed. This is because the first column was a unique key column and therefore there is only one retrieval target. In the case of POST, an index was provided.

In the case of vertically splitting the table (in the case of HORT_SPLIT), the unique key table is required and the number of RDTs is increased, with the result that the entire secondary storage size was larger than that in the case where no vertical splitting was carried out (in the case of HORT). However, adoption of such a data structure allows faster retrieval speed.

Finally, a database device according to the present invention is a database device using a relational table, and includes: (a) a database memory section storing (i) first B+tree data, which are so provided as to respectively correspond to column values of the relational table, and which convert the column values into subscripts of an extendible array, (ii) second B+tree data, which registers, as key values, 2-tuple expressions of history values and offsets of elements, respectively corresponding to the records of the relational table, of the extendible array, (iii) a history table, which registers chronological sequence of array extension, (iv) a coefficient table, which registers, for each subarray, a coefficient vector made up of a coefficient of a linear function for calculating an offset of an element in the subarray, and (v) a record number table, which registers, for each of the subscripts of the extendible array, the number of all records that have a column value corresponding to the subscript; and (b) record inserting means for, upon inserting a record having a new column value, (i) registering the column value in the first B+tree data such that the extendible array is extended, (ii) registering a history value in the history table and registering a coefficient in the coefficient table, (iii) registering an initial value in the record number table, and (iv) inserting, into the second B+tree data as a key value, a 2-tuple expression of the history value and the offset of an element of the extendible array.

Further, a database management method according to the present invention is for a database device using a relational table, and the database device includes a database memory section, the database memory section storing: first B+tree data, which are so provided as to respectively correspond to column values of the relational table, and which convert the column values into subscripts of an extendible array; second B+tree data, which registers, as key values, 2-tuple expressions of history values and offsets of elements, respectively corresponding to records of the relational table, of the extendible array; a history table, which registers chronological sequence of array extension; a coefficient table, which registers, for each subarray, a coefficient vector made up of a coefficient of a linear function for calculating an offset of an element in the subarray; and a record number table, which registers, for each of the subscripts of the extendible array, the number of all records that have a column value corresponding to the subscript, the method, including the step of, upon inserting a record having a new column value, (i) registering the column value in the first B+tree data such that the extendible array is extended, (ii) registering a history value in the history table and registering a coefficient in the coefficient table, (iii) registering an initial value in the record number table, and (iv) inserting, into the second B+tree data as a key value, a 2-tuple expression of the history value and the offset of an element of the extendible array.

According to the above arrangements, upon the insertion of the record having the new column value, the column value is registered in the first B⁺tree data such that the extendible array is extended, the history value is registered in the history table, the coefficient is registered in the coefficient table, the initial value (e.g., 1) is registered in the record number table, and the 2-tuple expression of the history value and the offset of the element of the extendible array is inserted as a key value into the second B⁺tree data. From then on, every time a record having the same column value is inserted, the 2-tuple expression is inserted into the second B⁺tree data and the number of records in the record number table is incremented.

As such, by inserting a record into the database having the above data structure in the above manner, it is possible to dynamically add a record having a new column value during operation. Further, it is possible to register only existing records. In other words, no memory area needs to be reserved for a non-existing record, so that the disk space can be used efficiently. Therefore, even in the case of a so-called sparse array in which effective elements are few, the disk space is never wasted. Moreover, by using an addressing function, it is possible to search storage locations of records fast.

Further, a database device according to the present invention is a database device using a relational table, and includes: (a) a database memory section storing (i) first B+tree data, which are so provided as to respectively correspond to column values of the relational table, and which convert the column values into subscripts of an extendible array, (ii) second B+tree data, which registers, as key values, 2-tuple expressions of history values and offsets of elements, respectively corresponding to the records of the relational table, of the extendible array, (iii) a history table, which registers chronological sequence of array extension, (iv) a coefficient table, which registers, for each subarray, a coefficient vector made up of a coefficient of a linear function for calculating an offset of an element in the subarray, and (v) a record number table, which registers, for each of the subscripts of the extendible array, the number of all records that have a column value corresponding to the subscript; and (b) record retrieving means for retrieving, from the second B⁺tree data in response to a retrieval request, a 2-tuple of a history value and an offset corresponding to the retrieval request.

Further, a database management method according to the present invention is for a database device using a relational table, and the database device includes a database memory section, the database memory section storing: first B⁺tree data, which are so provided as to respectively correspond to column values of the relational table, and which convert the column values into subscripts of an extendible array; second B⁺tree data, which registers, as key values, 2-tuple expressions of history values and offsets of elements, respectively corresponding to records of the relational table, of the extendible array; a history table, which registers chronological sequence of array extension; a coefficient table, which registers, for each subarray, a coefficient vector made up of a coefficient of a linear function for calculating an in-subarray offset of an element in the subarray; and a record number table, which registers, for each of the subscripts of the extendible array, the number of all records that have a column value corresponding to the subscript, the method, including the step of retrieving, from the second B⁺tree data in response to a retrieval request, a 2-tuple of a history value and an in-subarray offset corresponding to the retrieval request.

According to the above arrangements, by using the addressing function, it is possible to search the storage locations of the records fast. Moreover, the database has the above data structure, so that it is possible to dynamically add a record having a new column value, during operation. Further, it is possible to register only an existing record. In other words, no memory area needs to be reserved for a non-existing record, so that the disk space can be used efficiently. In other words, even in the case of a so-called sparse array in which effective elements are few, the disk space is never wasted.

The database device according to the present invention further includes: key value/column value reconverting means for converting the 2-tuple of the history value and the offset retrieved by the record retrieving means into a subscript of each dimension of the extendible array, and acquiring, in accordance with the subscript thus converted, either a column value or a pointer for a memory area in which the column value is stored, the column value or the pointer being stored in advance in each slot of the history table, the coefficient table, and the record number table of each dimension.

According to the arrangement, a column value can be converted into an array subscript value, and an array subscript value can be converted into a column value. Therefore, array subscript values for the dimensions are obtained from the subscript values and are arranged in order of the dimensions, with the result that a record can be obtained as a result of retrieval.

Further, the database device according to the present invention further includes: record deleting means for (i) deleting the 2-tuple of the history value and the offset, retrieved by the record retrieving means, from the second B⁺tree data and (ii) decrementing the number of records in the record number table by one. When the number of records becomes 0 as a result of this subtraction, the record deleting means deletes the history value from the history table and deletes the coefficient from the coefficient table.

According to the above arrangement, every time a record having the same column value is deleted, the 2-tuple is deleted from the second B⁺tree, and the number of records in the record number table is decremented. When there is no record having the column value as a result of the deletion of the record, the column value may be also deleted from the first B⁺tree data.

In this way, a record can be deleted from the database having the above data structure. This makes it possible to manage the database such that only an existing record is registered therein. Therefore, no memory area needs to be reserved for a non-existing record, so that it is possible to effectively use the disk space.

Further, in the database device according to the present invention, the database memory section further stores a unique key table registering (i) a unique key, which never has a duplicate column value, and (ii) a 2-tuple expression of a history value and an offset of an element of the extendible array, and the database device further includes unique key managing means for managing a relation between the unique key and column values other than the unique key in accordance with the unique key table.

Further, in the database management method according to the present invention, the database memory section of the database device further stores a unique key table registering (i) a unique key, which never has a duplicate column value, and (ii) a 2-tuple expression of a history value and an offset of an element of the extendible array, and the database management method further includes the step of managing a relation between the unique key and column values other than the unique key in accordance with the unique key table.

According to the above arrangements, when a value of the unique key is specified, the column values of the non-unique keys can be obtained from the (history, offset) pair stored in the corresponding slot of the unique key table. On the other hand, when a column value of a non-unique key is specified, the data value, i.e., the slot number of the unique key table in which the target record is stored can be obtained from the second B⁺tree data by using the (history, offset) pair as a key value, with the result that the value of the corresponding unique key can be obtained.

As such, the unique key is managed separately from the other columns and the extendible array can be constructed by only the columns other than the unique key. This makes it possible to delay overflow in the history/offset space.

Further, the database device according to the present invention further includes: a vertical splitting managing means for (i) splitting the relational table into two sets of columns so as to obtain split relational tables, (ii) respectively constructing extendible arrays for the split relational tables, (iii) respectively generating, for the split relational tables, second B⁺tree data which register pairs of history values and offsets, and (iv) generating a unique key table which registers (a) one or more unique key values that the relational table before being split had and (b) the pairs of history values and offsets stored in the second B+tree data corresponding to the split relational tables.

According to the above arrangement, the relational table is split into two sets of columns (vertical splitting of the table) so as to obtain two tables, with the result that the history/offset space can be reduced. Therefore, by vertically splitting a relational table at the moment of overflow of the history/offset space, it is possible to add new column values without limitation. Note that, assuming that the address length of the computer used herein is $a$, the history/offset space is $2^a$. An offset value exceeding this size is to be calculated by software. This extremely decreases operation efficiency.

Further, a data structure for a database according to the present invention is a data structure for a database using a relational table, the data structure including: (i) first B+tree data, which are so provided as to respectively correspond to column values of the relational table, and which convert the column values into subscripts of an extendible array, (ii) second B+tree data, which registers, as key values, 2-tuple expressions of history values and offsets of elements, respectively corresponding to the records of the relational table, of the extendible array, (iii) a history table, which registers chronological sequence of array extension, (iv) a coefficient table, which registers, for each subarray, a coefficient vector made up of a coefficient of a linear function for calculating an offset of an element in the subarray, and (v) a record number table, which registers, for each of the subscripts of the extendible array, the number of all records that have a column value corresponding to the subscript.

A record of the relational table made up of n columns is expressed by n tuples of subscripts of an n dimensional extendible array.

According to the arrangement above, each tuple of the subscripts is expressed by a 2-tuple of (i) an extension history value indicating an order of extension, i.e., addition of an n-1 dimensional subarray as a result of adding a record having a new column value and (ii) an offset in the subarray. That is, as n becomes larger, the length of a record of the relational table becomes larger; however, irrespective of n, a record is expressed by the 2-tuple of the history value and the offset. This allows very good memory efficiency especially even in the case of a relational table having many columns.

Further, only 2-tuples corresponding to existing records are registered in the B+tree as key values. This also allows improvement of the memory efficiency. Further, the use of B+tree allows a fast retrieval processing.

Further, the data structure for the database according to the present invention is arranged such that: the second B⁺tree data is provided for each dimension of the extendible array so as to manage, for each dimension, the 2-tuple expressions of the history values and the offsets, which 2-tuple expressions serve as the key values.

According to the above arrangement, processing for the second B+tree data can be parallelized based on the dimensions. For example, in cases where, processors are allocated based on the dimensions so as to control the second B+tree data corresponding to the dimensions respectively, exclusive control is carried out with respect to only second B+tree corresponding to a target dimension. This restrains inhibition of parallel processing. Note that the first B+tree data and the other tables (the history table, the coefficient table, the record number table, and the like) can be used without any change. Meanwhile, in cases where only one second B+tree data is used, exclusive control (locking) needs to be done over the entire second B+tree data upon multi-transaction, thereby inhibiting parallel processing.

The data structure according to the present invention is used in an object-oriented database using complex objects, and is arranged such that: the complex object has an object having, as an object ID, a reference attribute for other instance objects, attributes of a class correspond to columns of the relational table, respectively, and in cases where a column is the object ID type attribute for making reference to other instance objects, the column has a column value that is an object ID of a record of the relational table to be referred.

According to the above arrangement, by correlating the relational table with the object as above, it is possible to realize the object-oriented database using the complex objects. Further, the data is managed in accordance with the aforementioned data structure, so that it is possible to exhibit a high performance in terms of memory area size and access speed.

A data structure of a document data, using the data structure of the aforementioned database is according to the present invention and is arranged such that: the document data includes a tag element, which corresponds to a column of the relational table, and in cases where the tag element includes more than one tag element, the column has a column value that is an object ID of a record of the relational table to be referred.

According to the above arrangement, by correlating the relational table with the tag as above, it is possible to manage a document data such as XML document. Further, the data is managed in accordance with the aforementioned data structure, so that it is possible to exhibit a high performance in terms of memory area size and access speed.

Note that the database device may be realized by a computer. In this case, the present invention encompasses (i) a database management program for realizing the database device by the computer by causing the computer to operate as the aforementioned respective means, and (ii) a computer-readable storage medium storing the database management program.

The embodiment and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

INDUSTRIAL APPLICABILITY

The present invention is widely applicable to a relational database, and is especially preferable for many industrial fields in which fast retrieving processing for a large-scale table is required. Moreover, memory efficiency is excellent in the present invention. Further, the present invention is applicable to not only such a relational database but also implementation of a class in an object-oriented database. By introducing an object ID, it is possible to provide a method allowing for effective implementation of a complex object. Moreover, the present invention is usable as an effective memory structure for a large-scale XML (Extendible Markup Language) document, and is applicable to multidimensional data generally.

**Claims**

1.  A database device using a relational table, comprising:

    a database memory section for storing element location B+tree data registering, as key values, location information indicating locations of elements of an extendible array, which elements respectively correspond to records of the relational table,
    the location information being information including (i) section location information indicating locations of first elements of sections of the extendible array to which the elements belong, and (ii) in-section offsets indicating the locations of the elements in the sections.

2.  The database device as set forth in claim 1, wherein:

    each of the sections is a subarray of the extendible array, and
    the database memory section stores:

    second B+tree data, which registers, as key values, 2-tuple expressions of history values and in-subarray offsets of the sections to which the elements, respectively corresponding to the records of the relational table, of the extendible array belong, the second B+tree data being the element location B+tree data, the history values being the section location information, the in-subarray offsets being the in-section offsets;

first B⁺tree data, which are so provided as to respectively correspond to column values of the relational table, and which convert the column values into subscripts of the extendible array;

a history table, which registers chronological sequence of array extension;

a coefficient table, which registers, for each subarray, a coefficient vector made up of a coefficient of a linear function for calculating an in-subarray offset of an element in the subarray;

a record number table, which registers, for each of the subscripts of the extendible array, the number of all records that have a column value corresponding to the subscript.

3. The database device as set forth in claim 2, further comprising:

record retrieving means for retrieving, from the second B⁺tree data in response to a retrieval request, a 2-tuple of a history value and an in-subarray offset corresponding to the retrieval request.

4. The database device as set forth in claim 2, further comprising:

record inserting means for, upon inserting a record having a new column value, (i) registering the column value in the first B⁺tree data such that the extendible array is extended, (ii) registering a history value in the history table and registering a coefficient in the coefficient table, (iii) registering an initial value in the record number table, and (iv) inserting, into the second B⁺tree data as a key value, a 2-tuple expression of the history value and an in-subarray offset of an element of the extendible array.

5. The database device as set forth in claim 2, further comprising:

record deleting means for, upon deleting one record, (i) deleting a 2-tuple of a corresponding history value and a corresponding in-subarray offset from the second B⁺tree data and (ii) decrementing the number of records in the record number table by one.

6. The database device as set forth in claim 3, further comprising:

key value/column value reconverting means for converting the 2-tuple of the history value and the offset retrieved by the record retrieving means into a corresponding subscript of each dimension of the extendible array, and acquiring, in accordance with the subscript thus converted, either a column value or a pointer for a memory area in which the column value is stored, the column value or the pointer being stored in advance in each slot of the history table, the coefficient table, and the record number table of each dimension.

7. The database device as set forth in claim 2,
the database memory section further storing a unique key table registering (i) a unique key, which never has a duplicate column value, and (ii) a 2-tuple expression of a history value and an in-subarray offset of an element of the extendible array,
said database device, further comprising unique key managing means for managing a relation between the unique key and column values other than the unique key in accordance with the unique key table.

8. The database device as set forth in claim 7, further comprising:

a vertical splitting managing means for (i) splitting the relational table into two sets of columns so as to obtain split relational tables, (ii) respectively constructing extendible arrays for the split relational tables, (iii) respectively generating, for the split relational tables, second B⁺tree data which register pairs of history values and offsets, and (iv) generating a unique key table which registers (a) one or more unique key values that the relational table before being split had and (b) the pairs of history values and offsets stored in the second B+tree data corresponding to the split relational tables.

9. A database management method for a database device using a relational table,
the database device including a database memory section,
the database memory section storing:
first B⁺tree data, which are so provided as to respectively correspond to column values of the relational table, and which convert the column values into subscripts of an extendible array;
second B⁺tree data, which registers, as key values, 2-tuple expressions of history values and in-subarray offsets of elements, respectively corresponding to records of the relational table, of the extendible array;
a history table, which registers chronological sequence of array extension;
a coefficient table, which registers, for each subarray, a coefficient vector made up of a coefficient of a linear function for calculating an in-subarray offset of an element in the subarray; and
a record number table, which registers, for each of the subscripts of the extendible array, the number of all records that have a column value corresponding to the subscript,
said method, comprising the step of retrieving, from the second B$^+$tree data in response to a retrieval request, a 2-tuple of a history value and an in-subarray offset corresponding to the retrieval request.

10. A database management method for a database device using a relational table,
the database device including a database memory section,
the database memory section storing:
first B$^+$tree data, which are so provided as to respectively correspond to column values of the relational table, and which convert the column values into subscripts of an extendible array;
second B$^+$tree data, which registers, as key values, 2-tuple expressions of history values and in-subarray offsets of elements, respectively corresponding to records of the relational table, of the extendible array;
a history table, which registers chronological sequence of array extension;
a coefficient table, which registers, for each subarray, a coefficient vector made up of a coefficient of a linear function for calculating an in-subarray offset of an element in the subarray; and
a record number table, which registers, for each of the subscripts of the extendible array, the number of all records that have a column value corresponding to the subscript,
said method, comprising the step of, upon inserting a record having a new column value, (i) registering the column value in the first B$^+$tree data such that the extendible array is extended, (ii) registering a history value in the history table and registering a coefficient in the coefficient table, (iii) registering an initial value in the record number table, and (iv) inserting, into the second B$^+$tree data as a key value, a 2-tuple expression of the history value and an in-subarray offset of an element of the extendible array.

11. A database management method for a database device using a relational table,
the database device including a database memory section,
the database memory section storing:
first B$^+$tree data, which are so provided as to respectively correspond to column values of the relational table, and which convert the column values into subscripts of an extendible array;
second B$^+$tree data, which registers, as key values, 2-tuple expressions of history values and in-subarray offsets of elements, respectively corresponding to records of the relational table, of the extendible array;
a history table, which registers chronological sequence of array extension;
a coefficient table, which registers, for each subarray, a coefficient vector made up of a coefficient of a linear function for calculating an in-subarray offset of an element in the subarray; and
a record number table, which registers, for each of the subscripts of the extendible array, the number of all records that have a column value corresponding to the subscripts,
said method, comprising the step of, upon deleting one record, (i) deleting a 2-tuple of a corresponding history value and a corresponding in-subarray offset from the second B$^+$tree data and (ii) decrementing the number of records in the record number table by one.

12. A data structure for a database using a relational table, comprising:

first B+tree data, which are so provided as to respectively correspond to column values of the relational table, and which convert the column values into subscripts of an extendible array;
second B+tree data, which registers, as key values, 2-tuple expressions of history values and in-subarray offsets of elements, respectively corresponding to records of the relational table, of the extendible array;
a history table, which registers chronological sequence of array extension;
a coefficient table, which registers, for each subarray, a coefficient vector made up of a coefficient of a linear function for calculating an in-subarray offset of an element in the subarray; and
a record number table, which registers, for each of the subscripts of the extendible array, the number of all records that have a column value corresponding to the subscript.

13. The data structure as set forth in claim 12, wherein:

the second B$^+$tree data is provided for each dimension of the extendible array so as to manage, for each dimension, the 2-tuple expressions of the history values and the in-subarray offsets, which 2-tuple expressions serve as the key values.

**14.** The data structure as set forth in claim 12,
said data structure being used in an object-oriented database using a complex object,
wherein:

the complex object is an object having, as an object ID, a reference attribute for other instance objects, attributes of a class are allocated to columns of the relational table, respectively, and
when a column is the object ID type attribute for making reference to other instance objects, the column has a column value that is an object ID of a record of the relational table to be referred and that is rendered such that a set type column corresponding to a set type attribute of the class is able to be handled separately from other simple type columns.

**15.** A data structure of a document data, using the data structure as set forth in claim 14, wherein:

the document data includes a tag element, which is allocated to a column of the relational table, and
when the tag element includes more than one tag element, the column has a column value that is an object ID of a record of the relational table to be referred, and meta information of a node in a tree graph expression of the document is allocated to the column of the relational table.

**16.** The database device as set forth in claim 1, wherein:

the extendible array is a chunked extendible array and each of the sections is a chunk of the chunked extendible array, and
the database memory section stores:

second $B^+$tree data, which registers, as key values, 2-tuple expressions of chunk numbers and in-chunk offsets of the chunks to which the elements, respectively corresponding to the records of the relational table, of the chunked extendible array belong, the second $B^+$tree data being the element location $B^+$tree data, the chunk numbers being the section location information, the in-chunk offsets being the in-section offsets;
first $B^+$tree data, which are so provided as to respectively correspond to column values of the relational table, and which convert the column values into 2-tuple expressions of (i) subscripts indicating locations of chunk subarray information in the chunked extendible array and (ii) subscripts in the chunks;
a history table, which registers chronological sequence of chunked array extension as the chunk subarray information;
a coefficient table, which registers, for each chunk subarray, a coefficient vector made up of a coefficient of a linear function for calculating a chunk number of a chunk in the chunk subarray;
a column value table, which includes, as column value information, either a column value corresponding to each of the subscripts of the extendible array or a pointer for a memory area in which the column value is stored; and
a record number table, which registers the number of all records that have the column value.

**17.** The database device as set forth in claim 16, further comprising:

record retrieving means for retrieving, from the second $B^+$tree data in response to a retrieval request, a 2-tuple of a chunk number and an in-chunk offset corresponding to the retrieval request.

**18.** The database device as set forth in claim 16, further comprising:

record inserting means for, upon inserting a record having a new column value, (i) registering the column value in the first $B^+$tree data such that the chunked extendible array is extended, (ii) registering a history value in the history table and registering a coefficient in the coefficient table, (iii) registering an initial value in the record number table, and (iv) inserting, into the second $B^+$tree data as a key value, a 2-tuple expression of the chunk number and an in-chunk offset of a chunk to which the element of the chunked extendible array belongs.

**19.** The database device as set forth in claim 16, further comprising:

record deleting means for, upon deleting one record, (i) deleting a 2-tuple of a corresponding chunk number and a corresponding in-chunk offset from the second B$^+$tree data and (ii) decrementing the number of records in the record number table by one.

**20.** The database device as set forth in claim 17, further comprising:

key value/column value reconverting means for converting the 2-tuple of the chunk number and the in-chunk offset retrieved by the record retrieving means into a subscript of each dimension of the chunked extendible array, and acquiring, in accordance with the subscript thus converted, either a column value or a pointer for a memory area in which the column value is stored, the column value or the pointer being stored in advance in the column value table.

**21.** The database device as set forth in claim 16,
the database memory section further storing a unique key table registering (i) a unique key, which never has a duplicate column value, and (ii) a 2-tuple expression of a chunk number and an in-chunk offset of a chunk, to which an element belongs, of the chunked extendible array,
said database device, further comprising unique key managing means for managing a relation between the unique key and column values other than the unique key in accordance with the unique key table.

**22.** The database device as set forth in claim 21, further comprising:

a vertical splitting managing means for (i) splitting the relational table into two sets of columns so as to obtain split relational tables, (ii) respectively constructing chunked extendible arrays for the split relational tables, (iii) respectively generating, for the split relational tables, second B$^+$tree data which register 2-tuple expressions of chunk numbers and in-chunk offsets, and (iv) generating a unique key table which registers (a) one or more unique key values that the relational table before being split had and (b) the 2-tuple expressions of chunk numbers and in-chunk offsets stored in the second B$^+$tree data corresponding to the split relational tables.

**23.** A database management method for a database device using a relational table,
the database device including a database memory section,
the database memory section storing:
first B$^+$tree data, which are so provided as to respectively correspond to column values of the relational table, and which convert the column values into 2-tuple expressions of (i) subscripts indicating locations of chunk subarray information in the chunked extendible array and (ii) subscripts in the chunks;
second B$^+$tree data, which registers, as key values, 2-tuple expressions of chunk numbers and in-chunk offsets of chunks to which elements, respectively corresponding to records of the relational table, of the chunked extendible array belong;
a history table, which registers chronological sequence of chunked array extension as chunk subarray information;
a coefficient table, which registers, for each chunked subarray, a coefficient vector made up of a coefficient of a linear function for calculating a chunk number of a chunk in the chunked subarray;
a column value table, which includes, as column value information, either a column value corresponding to each of the subscripts of the chunked extendible array or a pointer for a memory area in which the column value is stored; and
a record number table, which registers the number of all records that have the column value,
said method, comprising the step of retrieving, from the second B$^+$tree data in response to a retrieval request, a 2-tuple of a chunk number and an in-chunk offset corresponding to the retrieval request.

**24.** A database management method for a database device using a relational table,
the database device including a database memory section,
the database memory section storing:
first B$^+$tree data, which are so provided as to respectively correspond to column values of the relational table, and which convert the column values into 2-tuple expressions of (i) subscripts indicating locations of chunk subarray information in the chunked extendible array and (ii) subscripts in the chunks;
second B$^+$tree data, which registers, as key values, 2-tuple expressions of chunk numbers and in-chunk offsets of chunks to which elements, respectively corresponding to records of the relational table, of the chunked extendible array belong;
a history table, which registers chronological sequence of chunked array extension as chunk subarray information;
a coefficient table, which registers, for each chunked subarray, a coefficient vector made up of a coefficient of a linear function for calculating a chunk number of a chunk in the chunked subarray;

a column value table, which includes, as column value information, either a column value corresponding to each of the subscripts of the chunked extendible array or a pointer for a memory area in which the column value is stored; and
a record number table, which registers the number of all records that have the column value,

said method, comprising the step of, upon inserting a record having a new column value, (i) registering the column value in the first B$^+$ tree data such that the chunked extendible array is extended, (ii) registering a history value in the history table and registering a coefficient in the coefficient table; (iii) registering an initial value in the record number table, and (iv) inserting, into the second B$^+$tree data as a key value, a 2-tuple expression of the chunk number and an in-chunk offset of a chunk to which an element of the chunked extendible array belongs.

25. A database management method for a database device using a relational table,
the database device including a database memory section,
the database memory section storing:
first B$^+$tree data, which are so provided as to respectively correspond to column values of the relational table, and which convert the column values into 2-tuple expressions of (i) subscripts indicating locations of chunk subarray information in the chunked extendible array and (ii) subscripts in the chunks;
second B$^+$tree data, which registers, as key values, 2-tuple expressions of chunk numbers and in-chunk offsets of chunks to which elements, respectively corresponding to records of the relational table, of the chunked extendible array belong;
a history table, which registers chronological sequence of chunked array extension as chunk subarray information;
a coefficient table, which registers, for each chunked subarray, a coefficient vector made up of a coefficient of a linear function for calculating a chunk number of a chunk in the chunked subarray;
a column value table, which includes, as column value information, either a column value corresponding to each of the subscripts of the chunked extendible array or a pointer for a memory area in which the column value is stored; and
a record number table, which registers the number of all records that have the column value,

said method, comprising the step of, upon deleting one record, (i) deleting a 2-tuple of a corresponding chunk number and a corresponding in-chunk offset from the second B$^+$tree data and (ii) decrementing the number of records in the record number table by one.

26. A data structure for a database using a relational table, comprising:

first B$^+$tree data, which are so provided as to respectively correspond to column values of the relational table, and which convert the column values into 2-tuple expressions of (i) subscripts indicating locations of chunk subarray information in the chunked extendible array and (ii) subscripts in the chunks;
second B$^+$tree data, which registers, as key values, 2-tuple expressions of chunk numbers and in-chunk offsets of chunks to which elements, respectively corresponding to records of the relational table, of the chunked extendible array belong;
a history table, which registers chronological sequence of chunked array extension as chunk subarray information;
a coefficient table, which registers, for each chunked subarray, a coefficient vector made up of a coefficient of a linear function for calculating a chunk number of a chunk in the chunked subarray;
a column value table, which includes, as column value information, either a column value corresponding to each of the subscripts of the chunked extendible array or a pointer for a memory area in which the column value is stored; and
a record number table, which registers the number of all records that have the column value.

27. A database management program for operating the database device as set forth in any one of claims 3 through 8, and 17 through 22, and for causing a computer to function as the respective means.

28. A computer-readable storage medium storing the database management program as set forth in claim 27.

# FIG. 1

DATABASE DEVICE — 1

**DISK DEVICE** — 2

DATA STORAGE SECTION (ON DISK) — 10

- 11 — CVT
- 12 — RDT
- 13 — UNIQUE KEY TABLE
- 21 — HISTORY TABLE
- 22 — COEFFICIENT TABLE
- 23 — RECORD NUMBER TABLE

**MAIN MEMORY** — 3

TABLE MANAGING SECTION (ON MAIN MEMORY) — 30

- 31 — RECORD RETRIEVING SECTION
- 32 — RECORD INSERTING SECTION
- 33 — RECORD DELETING SECTION
- 34 — KEY VALUE/COLUMN VALUE RECONVERTING SECTION
- 35 — UNIQUE KEY MANAGING SECTION
- 36 — VERTICAL SPLITTING MANAGING SECTION

AUXILIARY TABLE SECTION (ON MAIN MEMORY) — 20

- 21 — HISTORY TABLE
- 22 — COEFFICIENT TABLE
- 23 — RECORD NUMBER TABLE

INPUT/OUTPUT SECTION — 40

(QUERY INPUT AND RESULT OUTPUT)

- COMMUNICATION INTERFACE
- USER INTERFACE

EP 1 845 453 A1

# FIG. 2

| STUDENT NO. | NAME | FACULTY |
|---|---|---|
| 1 | SUZUKI | ENGINEERING |
| 2 | SATO | EDUCATION |
| 3 | YAMADA | ENGINEERING |
| 4 | TANAKA | MEDICAL SCIENCE |

F I G. 3

```
int   n ;  /* the number of dimensions of logical extendible array */
int   m ;  /* maximum history value */
int   i ;


for( i=0 ; i<n ; i++) {
            if (column value of i-dimension is not specified)
                    continue ;
          if (specified column value is registered in CVTi)
                    obtain extension history values of subarrays corresponding to obtained subscripts ;
          else     end retrieval process ;
}
i = minimum value of obtained extension history values ;
for( ; i<m ; i++) {
          search RDT for subarray having extension history value of i ;
          add relevant record to retrieval result ;
}
return set of records as retrieval result ;
```

F I G. 4

```
int     n;        /* the number of dimensions of logical extendible array */
int     i, j;
for( i = 1 ; i <= n ; i++) {
          if(vi does not exists in CVTi){
                    if (SLi is not empty){
                              obtain slot from SLi and set its subscript as j ;
                              initialize the number of records at 0 ;
                    }
                    else {
                              extend HTi by one ;
                              set subscript of extended one as j ;
                    }
                    with CVTi(vi) = j, insert (vi, j) into CVTi ;
                    increment the number of records in HTi[j] by one ;
          }
          with I=<CVT₁(v₁), CVT2(v₂), ···, CVTₙ(vₙ)>, calculate key value in RDT in accordance with history offset
          implementation scheme ;
          insert key value into RDT ;
```

F I G. 5

```
int   n ;        /* the number of dimensions of logical extendible array */

int   i ;


find key value corresponding to r in accordance with history offset implementation scheme and delete it from RDT ;
for ( i=1 ; i<=n ; i++) {

        decrement the number of records in HTi[CTVi(vi)] by one ;

        if  (the number of records is 0 as a result of decrement) {

                delete vi from CVTi ;

                add slot of HTi[CTVi(vi)] to empty slot list ;

        }

}
```

F I G. 6

F I G. 7

| STUDENT NO. | NAME | SEX |
|---|---|---|
| 1 | SATO | MALE |
| 2 | SUZUKI | FEMALE |
| 3 | YAMADA | FEMALE |

STUDENT NO.

CVT

1 → 0
2 → 1
3 → 2

| VALUE OF UNIQUE KEY | HISTORY VALUE | OFFSET |
|---|---|---|
| 1 | 0 | 0 |
| 2 | 2 | 1 |
| 3 | 3 | 1 |

UNIQUE KEY TABLE

CVT

NAME

SATO   SUZUKI   YAMADA

0        1         2

| 0 | 1 | 3 |
|---|---|---|

CVT

SEX

MALE → 0
FEMALE → 1

| 0 |
|---|
| 2 |

RDT

(0, 0)   (2, 1)   (3, 1)

0        1         2

SUBSCRIPT IN UNIQUE KEY TABLE

F I G. 8

| | | |
|---|---|---|
| — ◆ — | NO UNIQUE KEY EXISTS | |
| — ■ — · | UNIQUE KEY EXISTS (BEFORE SEPARATELY HANDLED) | |
| — ▲ — | UNIQUE KEY EXISTS (AFTER SEPARATELY HANDLED) | |

## F I G. 9

```
int     n;        /* the number of dimensions of logical extendible array */
int     i;

if (value of unique key of insertion target record does not exist in CVT corresponding to the unique key) {
          if   (empty slot exists in unique key table)
                    obtain the subscript of the empty slot ;
          else
                    extend the unique key table and obtain the subscript of the slot ;
          store the value of the unique key and the subscript of the unique key table in CVT corresponding the unique key ;

          for ( i = 0; i < n; i++ ) {
          obtain subscript of array of i-th dimension in the logical extendible array ;
          }
          find history value and offset, which serve as key for RDT ;

          store the (history, offset) pair and the subscript of the unique key table in RDT ;

          insert the value of the unique key and the (history, offset) pair into the unique key table ;

} else {

          exceptional processing ;

}
```

## F I G. 1 O

```
if (slot having information about deletion target record exists in unique key table) {
          register the subscript of the slot in list handling empty slots ;
          delete unique key of the deletion target record from CVT handling the unique key ;
}
else
          return error ;

delete relevant record from RDT ;

maintenance required in deletion is carried out with respect to each CVT and HORT table ;
```

## F I G. 1 1

```
if (unique key is specified) {
          search CVT corresponding to the unique key, and obtain subscripts in the unique key table ;
          obtain corresponding (history, offset) pairs from the unique key table ;
          check whether other specified columns have the specified value, in accordance with the (history, offset) pairs ;
}
else {
          find (history, offset) pairs falling within a range in which the record can exist ;
          search RDT in accordance with the (history, offset) pairs ;
          obtain (history, offset) pair of retrieval target and subscript in the unique key table ;
          make access to unique key table and obtain the value of the unique key ;
}
```

F I G. 1 2

| VALUE OF UNIQUE KEY "STUDENT NO." | VALUE OF UNIQUE KEY "E-MAIL ADDRESS" | HISTORY VALUE | OFFSET |
|---|---|---|---|
| 1 | satou@pear | 0 | 0 |
| 2 | suzuki@pear | 2 | 1 |
| 3 | yamada@pear | 3 | 1 |

UNIQUE KEY TABLE

STUDENT NO.

1
2
3

CVT

E-MAIL ADDRESS

satou @pear

suzuki @pear

yamada @pear

F I G. 1 3

| STUDENT NO. | NAME | SEX | AGE | FACULTY |
|---|---|---|---|---|
| 1 | SATO | MALE | 22 | ENGINEERING |
| 2 | SUZUKI | FEMALE | 20 | EDUCATION |
| 3 | TANAKA | FEMALE | 21 | ENGINEERING |
| 4 | YAMADA | MALE | 22 | MEDICAL SCIENCE |
| ⋮ | ⋮ | ⋮ | ⋮ | ⋮ |

INSERTION OF RECORD WOULD CAUSE OVERFLOW OF HISTORY/OFFSET SPACE.

| STUDENT NO. | NAME | SEX |
|---|---|---|
| 1 | SATO | MALE |
| 2 | SUZUKI | FEMALE |
| 3 | TANAKA | FEMALE |
| 4 | YAMADA | MALE |
| ⋮ | ⋮ | ⋮ |

NAME

SATO SUZUKI TANAKA YAMADA ・・・

0　1　2　4

| 0 | 1 | 3 | 4 | ・・・ |

RDT1

(0, 0)(2, 1)(3, 1)(4, 0)

0　1　2　3

SEX

MALE → 0 | 0
FEMALE → 1 | 2

| STUDENT NO. | AGE | FACULTY |
|---|---|---|
| 1 | 22 | ENG. |
| 2 | 20 | EDU. |
| 3 | 21 | ENG. |
| 4 | 22 | MED. |
| ⋮ | ⋮ | ⋮ |

AGE

20　21　22

0　1　2

| 0 | 1 | 3 |

RDT2

(0, 0)(2, 1)(3, 0)(4, 0)

0　1　2　3

FACU -LTY

MED. → 0 | 0
EDU. → 1 | 2
ENG. → 2 | 4

STUDENT NO.

1 → 0
2 → 1
3 → 2
4 → 3
⋮ → ⋮

| VALUE OF UNIQUE KEY | IN RDT 1, HISTORY VALUE AND OFFSET | | IN RDT 2, HISTORY VALUE AND OFFSET | |
|---|---|---|---|---|
| 1 | 0 | 0 | 0 | 0 |
| 2 | 2 | 1 | 2 | 1 |
| 3 | 3 | 1 | 3 | 0 |
| 4 | 4 | 0 | 4 | 0 |
| ⋮ | ⋮ | ⋮ | ⋮ | ⋮ |

UNIQUE KEY TABLE

F I G. 1 4

```
int     m;       /* the number of records */
int     i;

divide columns in relational table in two so that cardinality of column values in one is equal to the other ;

generate one new unique key table ;
generate history table and CVTs for each of the split relational tables ;
generate two new RDTs ;

if (unique key table corresponding to the original relational table exists) {
        for ( i = 0; i < m; i++ ) {
                get one record from the original unique key table ;
                reconvert (history, offset) pairs into column values ;
                insert the record in each of the split relational tables ;
                insert the unique key and the (history, offset) pairs into the new unique key table ;


        }
        delete the unique key table corresponding to the original relational table ;
}
else {
        for ( i = 0; i < m; i++ ) {
                get one record from the original RDT ;
                reconvert (history, offset) pairs into column values ;
                insert the record in each of the split relational tables ;
                insert each (history, offset) pair into i-1-th slot of the unique key table ;


        }
}

delete history table and CVT for the original relational table ;
delete the original RDT ;
```

F I G. 1 5

F I G. 1 6

```
int d ;   /* the number of split tables */

int i ;


obtain subscript of empty slot in the unique key table ;

insert the value of the unique key and the subscript of the empty slot into the corresponding UVT ;

store the value of the unique key in the empty slot of the unique key table ;

for ( i = 0; i < d; i++ ) {

        insert a set of relevant column values of a insertion target record into the i-th HORT ;

        if (overflow occurs) {

                further vertically split the i-th split table ;

        }

        insert the (history, offset) pair and the subscript of the empty slot into the i-th RDT ;

        store the (history, offset) pair in the unique key table ;

}
```

F I G. 1 7

```
int d ;   /* the number of split tables */

int i ;


if (unique key exists) {

        search CVT corresponding to the unique key, and obtain subscript corresponding to deletion target record. in the unique key table ;
        obtain subscripts of dimensions of the logical extendible array in accordance with information concerning the unique key table ;

        if (the subscripts of the dimensions coincide with those of the deletion target record) {

                delete relevant slot from the unique key table ;

                for ( i = 0; i < d; i++ ) {

                        delete the record from the i-th logical extendible array ;

                }

        }

}
else {

        obtain, from the first split table, the unique key table's subscript corresponding

                to the (history, offset) pair corresponding to the deletion target record ;

        obtain the subscripts of the dimensions of the logical extendible array in accordance with the information concerning the unique key table ;

        if (the subscripts of the dimensions coincide with the deletion target record) {

                delete relevant slot from the unique key table ;
                for ( i = 0; i < d; i++ ) {

                        delete the record from the i-th logical extendible array ;

                }

        }

}
```

FIG. 18

```
if  (unique key exists) {

        search CVT corresponding to the unique key, and obtain subscript,

                corresponding to retrieval target record, in the unique key table ;

        obtain subscripts of dimensions of the logical extendible array in accordance with information concerning the unique key table ;

        if  (the subscripts of the dimensions coincide with those of the record) {

                get the record as the retrieval result ;

                }

        }

}

else {

        carry out search in conventional manner with respect to one logical extendible array in which the specified column exists ;

        obtain the subscripts of the dimensions in accordance with the subscripts, corresponding to all the obtained records, in the unique key table ;

        check whether column values of all the obtained records coincide with those of the other specified columns ;

        return records whose column values coincide with those of the other specified column, as the retrieval result ;

}
```

FIG. 19

| THE NUMBER OF DIMENSIONS | SIZE OF DIMENSIONS | RATIO OF EFFECTIVE ADDRESS |
|---|---|---|
| 2 | 2, 147, 483, 648 * 2, 147, 483, 649 | $5.82*10^{-9}$[%] |
| 3 | 1, 431, 655, 766 * 1, 431, 655, 766 * 1, 431, 655, 766 | 3.07[%] |
| 4 | 2, 642, 246 * 2, 642, 246 * 2, 642, 246 * 2, 642, 245 | $6.15*10^{-2}$[%] |
| 5 | 65, 536 * 65, 536 * 65, 536 * 65, 536 * 65, 536 | $1.53*10^{-3}$[%] |
| 6 | 7, 132 * 7, 132 * 7, 132 * 7, 131 * 7, 131 * 7, 131 | $1.66*10^{-4}$[%] |
| 7 | 1, 626 * 1, 626 * 1, 626 * 1, 625 * 1, 625 * 1, 625 * 1, 625 | $3.78*10^{-5}$[%] |
| 8 | 566 * 566 * 566 * 565 * 565 * 565 * 565 * 565 | $1.32*10^{-5}$[%] |
| 9 | 256 * 256 * 256 * 256 * 256 * 256 * 256 * 256 * 256 | $5.96*10^{-6}$[%] |
| 10 | 138 * 138 * 138 * 137 * 137 * 137 * 137 * 137 * 137 * 137 | $3.00*10^{-6}$[%] |

F I G. 2 0

F I G. 2 1

| THE NUMBER OF DIMENSIONS | SIZE OF DIMENSIONS (CHUNK SIZE * THE NUMBER OF CHUNKS) | RATIO OF EFFECTIVE ADDRESS |
|---|---|---|
| 2 | $(4,294,967,296 * 65,536)^2$ | 100.00 [%] |
| 3 | $(2,642,246 * 1,625)^2 * (2,642,245 * 1,626)$ | 99.97 [%] |
| 4 | $(65,536 * 256)^4$ | 100.00 [%] |
| 5 | $(7,132 * 84)^2 * (7,131 * 84) * (7,131 * 85)^2$ | 99.69 [%] |
| 6 | $(1,626 * 40)^2 * (1,625 * 40)^3 * (1,625 * 41)$ | 97.69 [%] |
| 7 | $(566 * 23)^2 * (565 * 24)^5$ | 98.06 [%] |
| 8 | $(256 * 16)^8$ | 100.00 [%] |
| 9 | $(139 * 11)^2 * (138 * 11) * (138 * 12)^6$ | 92.38 [%] |
| 10 | $(85 * 9)^4 * (84 * 9)^5 * (84 * 10)$ | 89.67 [%] |

F I G.  2 2

| THE NUMBER OF DIMENSIONS | CONVENTIONAL HISTORY-OFFSET IMPLEMENTATION SCHEME | CHUNKED HISTORY OFFSET IMPLEMENTATION SCHEME |
|---|---|---|
| 2 | 2, 147, 483, 649 | 281, 474, 976, 710, 656 |
| 3 | 1, 431, 655, 766 | 4, 294, 529, 957 |
| 4 | 2, 642, 246 | 16, 777, 216 |
| 5 | 65, 536 | 480, 663 |
| 6 | 7, 132 | 65, 284 |
| 7 | 1, 625 | 13, 405 |
| 8 | 565 | 4, 096 |
| 9 | 256 | 1, 612 |
| 10 | 137 | 768 |

F I G. 2 3

| STUDENT NO. | NAME | SEX |
|---|---|---|
| 1 | SATO | MALE |
| 2 | SUZUKI | FEMALE |
| 3 | YAMADA | FEMALE |
| ⋮ | ⋮ | ⋮ |

| VALUE OF UNIQUE KEY | CHUNK NUMBER | IN-CHUNK OFFSET |
|---|---|---|
| 1 | 0 | 0 |
| 2 | 0 | ● |
| 3 | 0 | ▲ |

UNIQUE KEY TABLE

RDT

(0,0) (0,■) (0,▲) ···

0  1  2

SUBSCRIPT IN UNIQUE KEY TABLE

FIG. 24

| STUDENT NO. | NAME | SEX | AGE | FACULTY |
|---|---|---|---|---|
| 1 | SATO | MALE | 22 | ENGINEERING |
| 2 | SUZUKI | FEMALE | 18 | EDUCATION |
| 3 | YAMADA | MALE | 22 | MEDICAL SCIENCE |
| ⋮ | ⋮ | ⋮ | ⋮ | ⋮ |

| STUDENT NO. | NAME | SEX |
|---|---|---|
| 1 | SATO | MALE |
| 2 | SUZUKI | FEMALE |
| 3 | YAMADA | MALE |
| ⋮ | ⋮ | ⋮ |

NAME
SATO SUZUKI YAMADA ···

RDT1
(0,0) (0,■)(0,▲) ···
0  1  2

MALE SEX FEMALE

| STUDENT NO. | AGE | FACULTY |
|---|---|---|
| 1 | 22 | ENG. |
| 2 | 18 | EDU. |
| 3 | 22 | MED. |
| ⋮ | ⋮ | ⋮ |

AGE
18 22 ···

FACU-LTY  MED. EDU. ENG.

RDT2
(0,0) (0,●)(0,▼) ···
0  1  2

| VALUE OF UNIQUE KEY | IN RDT 1, PAIR OF CHUNK NUMBER AND OFFSET | | IN RDT 2, PAIR OF CHUNK NUMBER AND OFFSET | |
|---|---|---|---|---|
| 1 | 0 | 0 | 0 | 0 |
| 2 | 0 | ■ | 0 | ● |
| 3 | 0 | ▲ | 0 | ▼ |
| ⋮ | ⋮ | ⋮ | ⋮ | ⋮ |

STUDENT NO.  1→0  2→1  3→2

UNIQUE KEY TABLE

F I G. 2 5

```
class book {
    char        title[50];
    chosha      author[];
    char        publisher;
}
class chosha{
    char        name[20];
    shozoku     affiliate;
}
class shozoku {
    char    university[20];
    char    city[20];
}
```

# F I G. 2 6

TABLE book

| oid | title | author | publisher |
|---|---|---|---|
| 1 | JAVASCRIPT HANDBOOK | 1 | SOFTBANK |
| 2 | JAVA PROGRAM DESIGN | 2 | SOFTBANK |
| 3 | DATABASE TECHNICAL TEXTBOOK | 3 4 | OO PUBLISHING |

TABLE chosha

| oid | name | affiliate |
|---|---|---|
| 1. | MASATERU MIYASAKA | 1 |
| 2 | TOYOKAZU TOMATSU | 2 |
| 3 | TATSUO TSUJI | 3 |
| 4 | TERUHISA HOCHIN | 3 |

TABLE shozoku

| oid | university | city |
|---|---|---|
| 1 | TOKYO UNIVERSITY | TOKYO |
| 2 | OSAKA UNIVERSITY | OSAKA |
| 3 | FUKUI UNIVERSITY | FUKUI |

FIG. 27

FIG. 28

FIG. 29

```
<!DOCTYPE books [
<!ELEMENT books (book)*
<!ATTLIST book  price CDATA  #REQIRED  pub_date CDATA #IMPLIED >
<!ELEMENT book (title, author*, publisher) >
<!ELEMENT title (#PCDATA) >
<!ELEMENT author (#PCDATA, affiliate)* >
<!ELEMENT affiliate (university, city) >
<!ELEMENT university (#PCDATA) >
<!ELEMENT city (#PCDATA) >
<!ELEMENT publisher (#PCDATA) >
] >
<books>
        <book price="1890" pub_date= "2003/09" >
                <title> JAVASCRIPT HANDBOOK </title>
                <author>
                        MASATERU MIYASAKA
                <affiliate>
                                <university>TOKYO UNIVERSITY </university>
                                <city> TOKYO </city>
                        </affiliate>
                </author>
                <publisher>  SOFTBANK  </publisher>
        </book>

        <book price = "2940" >
                <title>JAVA PROGRAM DESIGN </title>
                <author>
                        TOYOKAZU TOMATSU
                        <affiliate>
                                <university>OSAKA UNIVERSITY</university>
                                <city>  OSAKA </city>
                        </affiliate>
                </author>
                <publisher>  SOFTBANK   </publisher>
        </book>

        <book price = "2310"  pub_date = "2003/12" >
                <title> DATABASE TECHNICAL TEXTBOOK </title>
                <author>
                        TATSUO TSUJI
                        <affiliate>
                                <university> FUKUI UNIVERSITY </university>
                                <city> FUKUI </city>
                        </affiliate>
                </author>
                <author>
                        TERUHISA HOCHIN
                        <affiliate>
                                <university> OSAKA PREFECTURE UNIVERSITY</university>
                                <city> SAKAI  </city>
                        </affiliate>
                </author>
                <publisher> CQ PUBLISHING  </publisher>
        </book>
</books>
```

# F I G. 30

TABLE books (TABLE ID 0)

| oid | book |
|-----|------|
| 1.0 | 1.0 |
| 2.0 | 2.0 |
| 3.0 | 3.0 |

TABLE book (TABLE ID 1)

| oid | title | author | publisher |
|-----|-------|--------|-----------|
| 1.0 | JAVASCRIPT HANDBOOK | 1.0 | SOFTBANK |
| 2.0 | JAVA PROGRAM DESIGN | 2.0 | SOFTBANK |
| 3.0 | DATABASE TECHNICAL TEXTBOOK | 3.0 | CQ PUBLISHING |

TABLE author (TABLE ID 2)

| oid | PCDATA1 | affiliate |
|-----|---------|-----------|
| 1.0 | MASATERU MIYASAKA | 1.0 |
| 2.0 | TOYOKAZU TOMATSU | 2.0 |
| 3.0 | TATSUO TSUJI | 3.0 |
| 4.0 | TERUHISA HOCHIN | 4.0 |

TABLE affiliate (TABLE ID 3)

| oid | university | city |
|-----|------------|------|
| 1.0 | TOKYO UNIVERSITY | TOKYO |
| 2.0 | OSAKA UNIVERSITY | OSAKA |
| 3.0 | FUKUI UNIVERSITY | FUKUI |
| 4.0 | OSAKA PREFECTURE UNIVERSITY | OSAKA |

ATTRIBUTE TABLE

| TABLE ID | RECORD ID | ATTRIBUTE NAME | ATTRIBUTE VALUE |
|----------|-----------|----------------|-----------------|
| 1 | 1.0 | price | 1890 |
| 1 | 1.0 | pub_date | 2003/9 |
| 1 | 2.0 | price | 2940 |
| 1 | 3.0 | price | 2310 |
| 1 | 3.0 | pub_date | 2003/12 |

F I G. 3 1

```
<book price = "2310" pub_date = "2003/12">
        <title>   DATABASE TECHNICAL TEXTBOOK    </title>
        <author>
            TATSUO TSUJI
              <affiliate>
                    <university>FUKUI UNIVERSITY</university>
                    <city>  FUKUI  </city>
              </affiliate>
          </author>
        <author>
            TERUHISA HOCHIN
              <affiliate>
                    <university>OSAKA PREFECTURE UNIVERSITY</university>
                    <city>  OSAKA  </city>
              </affiliate>
          </author>
        <publisher>CQ PUBLISHING</publisher>
</book>
```

F I G. 3 2

```
<book price = "2310" pub_date = "2003/12">
        <title>   DATABASE TECHNICAL TEXTBOOK    </title>
        <author>
            TERUHISA HOCHIN
              <affiliate>
                    <university>OSAKA PREFECTURE UNIVERSITY</university>
                    <city>  OSAKA  </city>
              </affiliate>
          </author>
        <author>
            TATSUO TSUJI
              <affiliate>
                    <university>FUKUI UNIVERSITY</university>
                    <city>  FUKUI  </city>
              </affiliate>
          </author>
        <publisher>CQ PUBLISHING</publisher>
</book>
```

F I G. 3 3

```
<book price = "1890" pub_date = "2003/9">
    <title>   JAVASCRIPT HANDBOOK   </title>
    <author>
        MASATERU MIYASAKA
        <affiliate>
            <university> TOKYO UNIVERSITY </university>
            <city> TOKYO </city>
        </affiliate>
    </author>
    <publisher>   SOFTBANK   </publisher>
</book>
```

F I G. 3 4

```
<book price = "1890" pub_date = "2003/9">
    <title> INTRODUCTION TO HARDWARE </title>
    <author>
        ICHIRO SHIBAYAMA
        <affiliate>
            <university>KYOTO UNIVERSITY</university>
            <city> KYOTO </city>
        </affiliate>
    </author>
    <publisher> SAIENSU-SHA </publisher>
</book>
```

F I G. 3 5

EP 1 845 453 A1

FIG. 36

| NODE ID | SPELL | TYPE | PARENT NODE ID | FIRST CHILD NODE ID | BROTHER NODE ID | ATTRIBUTE LIST |
|---|---|---|---|---|---|---|
| 0.0 | NULL | ROOT | NULL | 1.0 | NULL | NULL |
| 1.0 | books | ELEMENT | 0.0 | 2.0 | NULL | NULL |
| 2.0 | book | ELEMENT | 1.0 | 7.0 | NULL | 3.0 |
| 3.0 | price | ATTRIBUTE | 2.0 | 4.0 | 5.0 | NULL |
| 4.0 | 1890 | TEXT | 3.0 | NULL | NULL | NULL |
| 5.0 | pub_date | ATTRIBUTE | 2.0 | 6.0 | NULL | NULL |
| 6.0 | 2003/9/26 | TEXT | 5.0 | NULL | NULL | NULL |
| 7.0 | title | ELEMENT | 2.0 | 8.0 | 9.0 | NULL |
| 8.0 | JAVASCRIPT HANDBOOK | TEXT | 7.0 | NULL | NULL | NULL |
| 9.0 | author | ELEMENT | 2.0 | 10.0 | 16.0 | NULL |
| 10.0 | MASATERU MIYASAKA | TEXT | 9.0 | NULL | 11.0 | NULL |
| 11.0 | affiliate | ELEMENT | 9.0 | 12.0 | NULL | NULL |
| 12.0 | university | ELEMENT | 11.0 | 13.0 | 14.0 | NULL |
| 13.0 | TOKYO UNIVERSITY | TEXT | 12.0 | NULL | NULL | NULL |
| 14.0 | city | ELEMENT | 11.0 | 15.0 | NULL | NULL |
| 15.0 | TOKYO | TEXT | 14.0 | NULL | NULL | NULL |
| 16.0 | publisher | ELEMENT | 2.0 | 17.0 | 18.0 | NULL |
| 17.0 | SOFTBANK | TEXT | 16.0 | NULL | NULL | NULL |
| 18.0 | book | ELEMENT | 1.0 | 21.0 | NULL | 19.0 |
| 19.0 | price | ATTRIBUTE | 18.0 | 20.0 | NULL | NULL |
| 20.0 | 2940 | TEXT | 19.0 | NULL | NULL | NULL |
| 21.0 | title | ELEMENT | 18.0 | 22.0 | 23.0 | NULL |
| 22.0 | JAVA PROGRAM DESIGN | TEXT | 21.0 | NULL | NULL | NULL |
| 23.0 | author | ELEMENT | 18.0 | 24.0 | 30.0 | NULL |
| 24.0 | TOYOKAZU TOMATSU | TEXT | 23.0 | NULL | 25.0 | NULL |
| 25.0 | affiliate | ELEMENT | 23.0 | 26.0 | NULL | NULL |
| 26.0 | university | ELEMENT | 25.0 | 27.0 | 28.0 | NULL |
| 27.0 | OSAKA UNIVERSITY | TEXT | 26.0 | NULL | NULL | NULL |
| 28.0 | city | ELEMENT | 25.0 | 29.0 | NULL | NULL |
| 29.0 | OSAKA | TEXT | 28.0 | NULL | NULL | NULL |
| 30.0 | publisher | ELEMENT | 18.0 | 31.0 | 32.0 | NULL |
| 31.0 | SOFTBANK | TEXT | 30.0 | NULL | NULL | NULL |
| 32.0 | book | ELEMENT | 1.0 | 37.0 | NULL | 33.0 |
| 33.0 | price | ATTRIBUTE | 32.0 | 34.0 | 35.0 | NULL |
| 34.0 | 2310 | TEXT | 33.0 | NULL | NULL | NULL |
| 35.0 | pub_date | ATTRIBUTE | 32.0 | 36.0 | NULL | NULL |
| 36.0 | Dec-03 | TEXT | 35.0 | NULL | NULL | NULL |
| 37.0 | title | ELEMENT | 32.0 | 38.0 | 39.0 | NULL |
| 38.0 | DATABASE TECHNICAL TEXTBOOK | TEXT | 37.0 | NULL | NULL | NULL |
| 39.0 | author | ELEMENT | 32.0 | 40.0 | 46.0 | NULL |
| 40.0 | TATSUO TSUJI | TEXT | 39.0 | NULL | 41.0 | NULL |
| 41.0 | affiliate | ELEMENT | 39.0 | 42.0 | NULL | NULL |
| 42.0 | university | ELEMENT | 41.0 | 43.0 | 44.0 | NULL |
| 43.0 | FUKUI UNIVERSITY | TEXT | 42.0 | NULL | NULL | NULL |
| 44.0 | city | ELEMENT | 41.0 | 45.0 | NULL | NULL |
| 45.0 | FUKUI | TEXT | 44.0 | NULL | NULL | NULL |
| 46.0 | publisher | ELEMENT | 32.0 | 47.0 | NULL | NULL |
| 47.0 | CQ PUBLISHING | TEXT | 46.0 | NULL | NULL | NULL |

## F I G. 3 7

CASE WHERE THE NUMBER OF COLUMNS IS SIX AND COLUMN TYPE IS CHARACTER STRING TYPE

HORT SYSTEM

| DUPLICATE FACTOR OF COLUMN VALUES | 50 | 100 | 200 |
|---|---|---|---|
| RETRIEVAL TIME WHEN VALUE OF FIRST COLUMN IS FIXED (sec) | 1.85775 | 1.4885 | 1.33 |
| RETRIEVAL TIME WHEN VALUE OF SECOND COLUMN IS FIXED (sec) | 1.94375 | 1.617 | 1.426 |
| RETRIEVAL TIME WHEN VALUE OF THIRD COLUMN IS FIXED (sec) | 1.97925 | 1.6055 | 1.447 |
| RETRIEVAL TIME WHEN VALUE OF FOURTH COLUMN IS FIXED (sec) | 1.955 | 1.6175 | 1.423 |
| RETRIEVAL TIME WHEN VALUE OF FIFTH COLUMN IS FIXED (sec) | 1.94025 | 1.5055 | 1.323 |
| AVERAGE RETRIEVAL TIME (sec) | 1.935 | 1.5668 | 1.3898 |
| ENTIRE SIZE OF SECONDARY STORAGE [Mbyte] | 37.3 | 33.5 | 31.5 |
| RDT SIZE IN ENTIRE SIZE OF SECONDARY STORAGE [Mbyte] | 30.0 | 29.8 | 29.7 |

## F I G. 3 8

CASE WHERE THE NUMBER OF COLUMNS IS SIX AND COLUMN TYPE IS CHARACTER STRING TYPE

Postgres SYSTEM

| DUPLICATE FACTOR OF COLUMN VALUES | 50 | 100 | 200 |
|---|---|---|---|
| RETRIEVAL TIME WHEN VALUE OF FIRST COLUMN IS FIXED (sec) | 11.941 | 11.595 | 11.78 |
| RETRIEVAL TIME WHEN VALUE OF SECOND COLUMN IS FIXED (sec) | 13.498 | 13.436 | 13.408 |
| RETRIEVAL TIME WHEN VALUE OF THIRD COLUMN IS FIXED (sec) | 14.06 | 13.865 | 13.864 |
| RETRIEVAL TIME WHEN VALUE OF FOURTH COLUMN IS FIXED (sec) | 14.204 | 14.142 | 14.123 |
| RETRIEVAL TIME WHEN VALUE OF FIFTH COLUMN IS FIXED (sec) | 14.472 | 14.419 | 14.367 |
| AVERAGE RETRIEVAL TIME (sec) | 13.635 | 13.4914 | 13.5084 |
| ENTIRE SIZE OF SECONDARY STORAGE [Mbyte] | 159.3 | 159.3 | 159.3 |

F I G. 3 9

CASE WHERE THE NUMBER OF COLUMNS IS SIX AND COLUMN TYPE IS INTEGER TYPE (4 BYTE LENGTH)

HORT SYSTEM

| DUPLICATE FACTOR OF COLUMN VALUES | 50 | 100 | 200 |
|---|---|---|---|
| RETRIEVAL TIME WHEN VALUE OF FIRST COLUMN IS FIXED (sec) | 1.84725 | 1.498 | 1.316 |
| RETRIEVAL TIME WHEN VALUE OF SECOND COLUMN IS FIXED (sec) | 1.9305 | 1.5975 | 1.438 |
| RETRIEVAL TIME WHEN VALUE OF THIRD COLUMN IS FIXED (sec) | 1.96425 | 1.6255 | 1.446 |
| RETRIEVAL TIME WHEN VALUE OF FOURTH COLUMN IS FIXED (sec) | 1.9325 | 1.5995 | 1.414 |
| RETRIEVAL TIME WHEN VALUE OF FIFTH COLUMN IS FIXED (sec) | 1.91875 | 1.526 | 1.321 |
| AVERAGE RETRIEVAL TIME (sec) | 1.91865 | 1.5693 | 1.387 |
| ENTIRE SIZE OF SECONDARY STORAGE [Mbyte] | 34.0 | 32.0 | 30.9 |
| RDT SIZE IN ENTIRE SIZE OF SECONDARY STORAGE [Mbyte] | 30.0 | 30.0 | 29.9 |

F I G. 4 0

CASE WHERE THE NUMBER OF COLUMNS IS SIX AND COLUMN TYPE IS INTEGER TYPE (4 BYTE LENGTH)

Postgres SYSTEM

| DUPLICATE FACTOR OF COLUMN VALUES | 50 | 100 | 200 |
|---|---|---|---|
| RETRIEVAL TIME WHEN VALUE OF FIRST COLUMN IS FIXED (sec) | 9.699 | 9.809 | 9.567 |
| RETRIEVAL TIME WHEN VALUE OF SECOND COLUMN IS FIXED (sec) | 9.491 | 9.575 | 9.554 |
| RETRIEVAL TIME WHEN VALUE OF THIRD COLUMN IS FIXED (sec) | 9.506 | 9.613 | 9.564 |
| RETRIEVAL TIME WHEN VALUE OF FOURTH COLUMN IS FIXED (sec) | 9.594 | 9.644 | 9.62 |
| RETRIEVAL TIME WHEN VALUE OF FIFTH COLUMN IS FIXED (sec) | 9.564 | 9.596 | 9.569 |
| AVERAGE RETRIEVAL TIME (sec) | 9.5708 | 9.6474 | 9.5748 |
| ENTIRE SIZE OF SECONDARY STORAGE [Mbyte] | 62.0 | 62.0 | 62.0 |

# F I G. 4 1

CASE WHERE THE NUMBER OF COLUMNS IS NINE AND DATA TYPE OF COLUMNS IS CHARACTER STRING TYPE (20 BYTE LENGTH)

| DUPLICATE FACTOR 10000, CARDINALITY OF EACH COLUMN VALUE 100 | HORT | HORT_SPLIT | POST |
|---|---|---|---|
| RETRIEVAL TIME WHEN VALUE OF FIRST COLUMN IS FIXED (sec) | 0.009 | 0.009 | 0.12 |
| RETRIEVAL TIME WHEN VALUE OF SECOND COLUMN IS FIXED (sec) | 2.055 | 1.825 | 14.29 |
| RETRIEVAL TIME WHEN VALUE OF THIRD COLUMN IS FIXED (sec) | 2.132 | 1.876 | 16.39 |
| RETRIEVAL TIME WHEN VALUE OF FOURTH COLUMN IS FIXED (sec) | 2.234 | 1.967 | 16.7 |
| RETRIEVAL TIME WHEN VALUE OF FIFTH COLUMN IS FIXED (sec) | 2.15 | 1.933 | 16.97 |
| RETRIEVAL TIME WHEN VALUE OF SIXTH COLUMN IS FIXED (sec) | 2.266 | 1.944 | 17.18 |
| RETRIEVAL TIME WHEN VALUE OF SEVENTH COLUMN IS FIXED (sec) | 2.151 | 1.918 | 17.41 |
| RETRIEVAL TIME WHEN VALUE OF EIGHTH COLUMN IS FIXED (sec) | 2.114 | 1.899 | 17.64 |
| RETRIEVAL TIME WHEN VALUE OF NINTH COLUMN IS FIXED (sec) | 2.005 | 1.826 | 17.86 |
| RETRIEVAL TIME WHEN VALUE OF TENTH COLUMN IS FIXED (sec) | 2.047 | 1.778 | 18.04 |
| AVERAGE RETRIEVAL TIME (sec) | 1.9163 | 1.6975 | 15.26 |
| ENTIRE SIZE OF SECONDARY STORAGE [Mbyte] | 73.8 | 119.4 | 297.3 |
| (COMPRISING ITEMS)  RDT SIZE [Mbyte] | 29.2 | 58.7 | 265.3 |
| UNIQUE KEY TABLE SIZE [Mbyte] | 20.0 | 36.0 | 0 |
| CVT FOR UNIQUE KEY [Mbyte] | 24.6 | 24.7 | 32.0 |

(IMPORTANT) IN THE CASE OF POST, RDT SIZE CORRESPONDS TO SIZE OF TABLE,
AND SIZE OF CVT FOR UNIQUE KEY CORRESPONDS TO SIZE OF INDEX PROVIDED FOR UNIQUE KEY.

F I G. 4 2

CASE WHERE THE NUMBER OF COLUMNS IS NINE AND DATA TYPE OF COLUMNS IS INTEGER TYPE (4 BYTE LENGTH)

| DUPLICATE FACTOR 10000 | HORT | HORT_SPLIT | POST |
|---|---|---|---|
| RETRIEVAL TIME WHEN VALUE OF FIRST COLUMN IS FIXED (sec) | 0.005 | 0.005 | 0.11 |
| RETRIEVAL TIME WHEN VALUE OF SECOND COLUMN IS FIXED (sec) | 2.044 | 1.754 | 10.34 |
| RETRIEVAL TIME WHEN VALUE OF THIRD COLUMN IS FIXED (sec) | 2.226 | 1.81 | 11.06 |
| RETRIEVAL TIME WHEN VALUE OF FOURTH COLUMN IS FIXED (sec) | 2.197 | 1.897 | 10.96 |
| RETRIEVAL TIME WHEN VALUE OF FIFTH COLUMN IS FIXED (sec) | 2.189 | 1.884 | 10.99 |
| RETRIEVAL TIME WHEN VALUE OF SIXTH COLUMN IS FIXED (sec) | 2.215 | 1.872 | 10.98 |
| RETRIEVAL TIME WHEN VALUE OF SEVENTH COLUMN IS FIXED (sec) | 2.251 | 1.865 | 11.12 |
| RETRIEVAL TIME WHEN VALUE OF EIGHTH COLUMN IS FIXED (sec) | 2.132 | 1.836 | 10.97 |
| RETRIEVAL TIME WHEN VALUE OF NINTH COLUMN IS FIXED (sec) | 2.149 | 1.767 | 10.96 |
| RETRIEVAL TIME WHEN VALUE OF TENTH COLUMN IS FIXED (sec) | 2.043 | 1.727 | 10.92 |
| AVERAGE RETRIEVAL TIME (sec) | 1.9451 | 1.6417 | 9.841 |
| ENTIRE SIZE OF SECONDARY STORAGE [Mbyte] | 73.9 | 118.9 | 109.6 |
| (COMPRISING ITEMS) RDT SIZE [Mbyte] | 29.3 | 58.3 | 77.5 |
| UNIQUE KEY TABLE SIZE [Mbyte] | 20.0 | 36.0 | 0 |
| CVT FOR UNIQUE KEY [Mbyte] | 24.6 | 24.6 | 32.1 |

(IMPORTANT) IN THE CASE OF POST, RDT SIZE CORRESPONDS TO SIZE OF TABLE,

AND SIZE OF CVT FOR UNIQUE KEY CORRESPONDS TO SIZE OF INDEX PROVIDED FOR UNIQUE KEY.

## F I G.  4 3

COLUMN

| STUDENT NAME | STUDENT NO. | BIRTHPLACE | AGE | ENGLISH | MATH |
|---|---|---|---|---|---|
| TAKESHI HORIE | 0 1 | FUKUI | 2 1 | A | C |
| SEIJI YAMAGUCHI | 0 2 | FUKUI | 2 3 | B | A |
| HIROKAZU YUKI | 0 3 | TOYAMA | 2 2 | A | B |
| MANABU YOSHINO | 0 4 | OSAKA | 2 2 | C | A |

RECORD

## F I G.  4 4

AGE

BIRTHPLACE

STUDENT NAME

23

FIG. 45

DIMENSION 2 →

| 0 | 1 | 4 | 5 | 7 |
|---|---|---|---|---|
| 10 | 14 | 36 | 44 | 60 |

HISTORY VALUE

FIRST ADDRESS

|   |   |
|---|---|
| 0 | 10 |
| 2 | 20 |
| 3 | 30 |
| 6 | 52 |

DIMENSION 1 ↓

|   | 0 | 1 | 2 | 3 | 4 |
|---|---|---|---|---|---|
| 0 | 10 | 14 | 36 | 44 | 60 |
| 1 | 20 | 21 | 37 | 45 | 61 |
| 2 | 30 | 31 | 38 | 46 | 62 |
| 3 | 52 | 53 | 54 | 55 | 63 |

**INTERNATIONAL SEARCH REPORT**

| International application No. |
|---|
| PCT/JP2005/019828 |

A. CLASSIFICATION OF SUBJECT MATTER
*G06F12/00*(2006.01)

According to International Patent Classification (IPC) or to both national classification and IPC

B. FIELDS SEARCHED

Minimum documentation searched (classification system followed by classification symbols)
*G06F12/00*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Akihiro HARA, "MOLAP no tameno Kakucho Kano Hairetsu", Dai 15 Kai Data Engineering Workshop (DEWS2004) Ronbunshu, Denshi Joho Tsushin Gakkai Data Kogaku Kenkyu Senmon Iinkai, 18 June, 2004 (18.06.04), 4-A-04 | 1-11,16-25, 27-28 |
| A | Tatsuo TSUSHI, "MOLAP no tameno Tajigen Hairetsu no Jitsugen Hoshiki to sono Seino Hyoka", The Transactions of the Institute of Electronics, Information and Communication Engineers (J87-D-1), The Institute of Electronics, Information and Communication Engineers, 01 February, 2004 (01.02.04), No.2, pages 244 to 255 | 1-11,16-25, 27-28 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 January, 2006 (06.01.06) | 17 January, 2006 (17.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

68

**INTERNATIONAL SEARCH REPORT**

| International application No. |
| --- |
| PCT/JP2005/019828 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | Hidetatsu KAWAHARA, "Kakucho Kano Hairetsu to sono Kyoyu System no sekkei to Jitsugen", Information Processing Society of Japan, 28 July, 2000 (28.07.00), Vol.2000, No.69, pages 259 to 266 | 1-11,16-25, 27-28 |
| A | Koji MASUNAGA, "Kakucho Kano DBMS ni Okeru Buhin no Kanri to Yobidashi no Ichihoho", Transactions of Information Processing Society of Japan, Information Processing Society of Japan, 15 August, 1999 (15.08.99), Vol.40, No.SIG6(TOD3), pages 152 to 161 | 1-11,16-25, 27-28 |

Form PCT/ISA/210 (continuation of second sheet) (April 2005)

**EP 1 845 453 A1**

## INTERNATIONAL SEARCH REPORT

| International application No. |
| --- |
| PCT/JP2005/019828 |

---

**Box No. II    Observations where certain claims were found unsearchable (Continuation of item 2 of first sheet)**

This international search report has not been established in respect of certain claims under Article 17(2)(a) for the following reasons:

1. [×]  Claims Nos.: 12-15, 26
   because they relate to subject matter not required to be searched by this Authority, namely:
   Claims 12-15 and 26 relate to a data structure, and are relevant to the mere presentations of information.  Therefore, the intentions of these claims do not require a search by the International Examining Authority under the provisions of PCT Article 17(2)(a)(i) and PCT Rule 39.1(v).

2. [ ]  Claims Nos.:
   because they relate to parts of the international application that do not comply with the prescribed requirements to such an extent that no meaningful international search can be carried out, specifically:

3. [ ]  Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

1. [ ]  As all required additional search fees were timely paid by the applicant, this international search report covers all searchable claims.

2. [ ]  As all searchable claims could be searched without effort justifying an additional fee, this Authority did not invite payment of any additional fee.

3. [ ]  As only some of the required additional search fees were timely paid by the applicant, this international search report covers only those claims for which fees were paid, specifically claims Nos.:

4. [ ]  No required additional search fees were timely paid by the applicant.   Consequently, this international search report is restricted to the invention first mentioned in the claims; it is covered by claims Nos.:

**Remark on Protest**
the

[ ]  The additional search fees were accompanied by the applicant's protest and, where applicable, payment of a protest fee..

[ ]  The additional search fees were accompanied by the applicant's protest but the applicable protest fee was not paid within the time limit specified in the invitation.

[ ]  No protest accompanied the payment of additional search fees.

Form PCT/ISA/210 (continuation of first sheet (2)) (April 2005)

70

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A.L. ROSENBERG.** Allocating Storage for Extendible Arrays. *JACM,* 1974, vol. 21, 652-670
- **E.J. OTOO ; T.H. MERRETT.** A Storage Scheme for Extendible Arrays. *Computing,* 1983, vol. 31, 1-9

- **D. ROTEM ; J.L. ZHAO.** Extendible Arrays for Statistical Databases and OLAP Applications. *Proceedings of 7-th International Working Conference on Scientific and Statistical Database Management,* 1996, 108-117
- **TATSUO TSUJI ; TAKESHI MIZUNO ; TERUHISA HOCHIN ; KEN HIGUCHI.** Delay Allocation Scheme for Extendible Array. *IEICE Transaction, D-I,* 2003, vol. J86-D-I (5), 351-356